# EUROPEAN PATENT APPLICATION

(11) **EP 4 832 449 A1**
(43) Date of publication of application: **28.10.2026**
(21) Application number: 25741474.8
(22) Date of filing: 14.01.2025
(51) Int. Cl.: H04L 45/74

(54) **METHOD AND APPARATUS FOR ACQUIRING FORWARDING PROOF, AND METHOD AND APPARATUS FOR VERIFYING FORWARDING PROOF**

(30) Priority: 16.01.2024 CN 202410067738
(71) Applicant: Huawei Technologies Co., Ltd., Shenzhen, Guangdong 518129 (CN)
(72) Inventor: LIU, Chunchi, Shenzhen, Guangdong 518129 (CN); WU, Qin, Shenzhen, Guangdong 518129 (CN); XIA, Liang, Shenzhen, Guangdong 518129 (CN); PAN, Wei, Shenzhen, Guangdong 518129 (CN)
(74) Representative: MERH-IP Matias Erny Reichl Hoffmann Patentanwälte PartG mbB
(86) International application number: PCT/CN2025/072189
(87) International publication number: WO 2025/152913

(57) **Abstract**

This application provides a method and an apparatus for obtaining a proof of transit, and a method and an apparatus for verifying a proof of transit, belonging to the field of network security. In this application, a proof of transit is obtained by combining an expected sequential position of a forwarding node on a forwarding path with an identity of the forwarding node, thereby achieving position binding of the proof of transit and fault tolerance for non-critical nodes. The proof of transit is related to both the identity of the forwarding node and the expected sequential position of the forwarding node. A correct proof of transit can be computed only by a node with a correct identity when a data packet is forwarded to a correct sequential position on the forwarding path, ensuring strong binding between the proof of transit and an actual forwarding status of the data packet. If an expected node is skipped or a redundant, unexpected node is traversed during forwarding, the mismatch between the identity of a node and its sequential position causes the proof of transit obtained based on the identity of the node and the sequential position of the node to fail verification, thereby improving the trustworthiness of the proof of transit.

## Description

This application claims priority to Chinese Patent Application No. 202410067738.3, filed with the China National Intellectual Property Administration on January 16, 2024 and entitled "METHOD AND APPARATUS FOR OBTAINING PROOF OF TRANSIT, AND METHOD AND APPARATUS FOR VERIFYING PROOF OF TRANSIT", which is incorporated herein by reference in its entirety.

### TECHNICAL FIELD

This application relates to the field of network security, and specifically, to a method and an apparatus for obtaining a proof of transit, and a method and an apparatus for verifying a proof of transit.

### BACKGROUND

A proof of transit refers to data generated during the forwarding of a data packet, used to verify the forwarding status of the data packet. The proof of transit helps reduce the probability of a data packet being tampered with or forged during forwarding, thereby improving transmission security of the data packet.

Currently, if a data packet is not forwarded hop by hop along a specified path, but instead skips nodes along the forwarding path or traverses redundant, unspecified nodes, the proof of transit obtained in such scenarios may still pass verification at a certain probability. This indicates that the trustworthiness of the proof of transit remains insufficient.

### SUMMARY

Embodiments of this application provide a method and an apparatus for obtaining a proof of transit, and a method and an apparatus for verifying a proof of transit, to improve the trustworthiness of the proof of transit. The technical solutions are as follows:
According to a first aspect, a method for obtaining a proof of transit is provided. A first forwarding node obtains a first data packet, where at least two critical nodes corresponding to the first data packet include the first forwarding node, and the critical node is a forwarding node that is passed through on an expected forwarding path determined by a path planning party for the first data packet; the first forwarding node obtains a sequential position of the first forwarding node on the expected forwarding path and identity information of the first forwarding node, where the sequential position of the first forwarding node on the expected forwarding path is different from a sequential position of the first forwarding node on an actual forwarding path of the first data packet, and the identity information of the first forwarding node indicates an identity of the first forwarding node; and the first forwarding node obtains a proof of transit of the first forwarding node based on the sequential position of the first forwarding node on the expected forwarding path and the identity information of the first forwarding node, where the proof of transit of the first forwarding node is used to prove that the first forwarding node forwards the first data packet at the sequential position on the expected forwarding path.

Based on the method provided in the first aspect, a proof of transit is obtained by combining a sequential position of a forwarding node on an expected forwarding path with identity information of the forwarding node, so that the proof of transit is related to both the identity information of the forwarding node and the sequential position of the forwarding node on the expected forwarding path. Based on this, the proof of transit can verify whether an identity of the forwarding node is correct (for example, whether the forwarding node is a forwarding node expected by the path planning party to be traversed during service data transmission) and whether the sequential position of the forwarding node is correct (for example, whether a sequential relationship between forwarding nodes meets a sequential relationship between forwarding nodes expected by the path planning party to be traversed during service data transmission). For example, if a critical node on the expected forwarding path is skipped or a redundant, unspecified node that does not exist on the expected forwarding path is traversed during forwarding, the mismatch between the identity information of a critical node and its sequential position causes the proof of transit obtained based on the identity information of the critical node and the sequential position of the critical node to fail verification, thereby improving the trustworthiness of the proof of transit.

Especially, when the sequential position of the forwarding node on the expected forwarding path is different from a sequential position of the forwarding node on an actual forwarding path, because the proof of transit is obtained by using the sequential position of the forwarding node on the expected forwarding path instead of the sequential position of the forwarding node on the actual forwarding path, the sequential position for obtaining the proof of transit is consistent with a sequential position for obtaining a vector commitment, thereby implementing fault tolerance of path validation. For example, a data packet is allowed to pass through some non-critical nodes (for example, outdated devices, weak-capability devices, or devices manufactured by third-party network vendors) during actual transmission, thereby reducing a risk that service data transmission is interrupted or an alarm is output because verification performed by a downstream critical node of a non-critical node on a proof of transit fails.

Based on the method provided in the first aspect, in some implementations, the at least two critical nodes further include a second forwarding node, the second forwarding node is an upstream critical node of the first forwarding node on the expected forwarding path, and that the first forwarding node obtains the proof of transit of the first forwarding node based on the sequential position of the first forwarding node on the expected forwarding path and the identity information of the first forwarding node includes: The first forwarding node obtains the proof of transit of the first forwarding node based on the sequential position of the first forwarding node on the expected forwarding path, the identity information of the first forwarding node, a sequential position of the second forwarding node on the expected forwarding path, and identity information of the second forwarding node, where the identity information of the second forwarding node indicates an identity of the second forwarding node, and the proof of transit of the first forwarding node is used to prove that the first forwarding node and the second forwarding node are respectively at the corresponding sequential positions on the expected forwarding path.

Because a proof of transit is obtained based on expected sequential positions of a plurality of critical nodes and identities of the plurality of critical nodes, the obtained proof of transit can verify at a time whether the plurality of critical nodes are respectively at corresponding sequential positions on an expected forwarding path, and batch processing improves overall forwarding path validation performance and reduces time for proof computation and proof verification. In addition, in this manner, time consumed for obtaining the proof of transit almost does not linearly increase as a quantity of critical nodes increases, so that this is more applicable to large-scale networking and enhances scalability.

Based on the method provided in the first aspect, in some implementations, the first forwarding node is a last critical node on the expected forwarding path, and the second forwarding node includes all critical nodes on the expected forwarding path other than the first forwarding node.

A proof of transit is obtained by combining a sequential position with an identity of each node from a 1^{st} critical node to a local end on a forwarding path, so that the sequential position and the identity information of each critical node that a packet has passed through on an actual forwarding path can be verified at a time, thereby reducing time costs and computation costs, improving verification efficiency, and making verification more complete.

Based on the method provided in the first aspect, in some implementations, the method further includes: The first forwarding node obtains the sequential position of the first forwarding node on the actual forwarding path based on the first data packet; and the first forwarding node sends the proof of transit of the first forwarding node and the sequential position of the first forwarding node on the actual forwarding path to a verification node.

Because a critical node sends a sequential position of the local end on an actual forwarding path to a verification node, the verification node can sense the sequential position of the critical node on the actual forwarding path, thereby implementing recordability of a non-critical node. For example, based on sequential positions of two adjacent critical nodes being non-consecutive on the actual forwarding path, the verification node determines that a non-critical node exists between the two critical nodes. Based on a difference between sequential positions of two adjacent critical nodes on the actual forwarding path, the verification node determines a quantity of non-critical nodes between the two critical nodes.

In addition, because the sequential position on the actual forwarding path is recorded by the critical node, a non-critical node does not need to perform an additional action other than forwarding, and existence of the non-critical node can also be recorded, thereby improving compatibility.

Based on the method provided in the first aspect, in some implementations, the verification node includes a third forwarding node, the third forwarding node is a downstream critical node of the first forwarding node on the expected forwarding path, and that the first forwarding node sends the proof of transit of the first forwarding node and the sequential position of the first forwarding node on the actual forwarding path to the verification node includes: The first forwarding node obtains a second data packet based on the first data packet, the proof of transit of the first forwarding node, and the sequential position of the first forwarding node on the actual forwarding path, where the second data packet includes a payload of the first data packet, the proof of transit of the first forwarding node, and the sequential position of the first forwarding node on the actual forwarding path; and the first forwarding node sends the second data packet to the third forwarding node.

An actual sequential position and a proof of transit are carried in a same data packet and sent to a downstream critical node on a forwarding path, so that an actual sequential position of a critical node is transmitted together with service data, thereby implementing in-band transmission of the actual sequential position. In a mode in which a critical node also serves as a verification node (an observer), there is no need to separately construct an independent data packet to transmit an actual sequential position and a proof of transit, so that overall transmission overheads of the actual sequential position and the proof of transit are low; and the verification node can obtain both an actual sequential position of a critical node and a proof of transit of the critical node by parsing one data packet, so that efficiency of obtaining the actual sequential position of the critical node and the proof of transit of the critical node by the verification node is high.

Based on the method provided in the first aspect, in some implementations, the first data packet includes a first position list, the first position list includes a sequential position, on the actual forwarding path, of an upstream critical node of the first forwarding node on the expected forwarding path, the second data packet includes a second position list, and the second position list includes the first position list and the sequential position of the first forwarding node on the actual forwarding path.

Because a data packet carries a list of sequential positions of upstream critical nodes on an actual forwarding path, each critical node further adds a sequential position of the local end on the actual forwarding path based on the list carried in the data packet, so that the data packet carries the sequential position, on the actual forwarding path, of each critical node that the data packet has passed through, and the actual sequential position carried in the data packet is more complete, thereby reducing a risk of missing an actual sequential position of a critical node that has been traversed but is not recorded.

Based on the method provided in the first aspect, in some implementations, the second data packet includes an internet protocol version 6 IPv6 extension header, and the IPv6 extension header includes the proof of transit of the first forwarding node and the sequential position of the first forwarding node on the actual forwarding path. In an IPv6 scenario, an IPv6 extension header is used to carry a proof of transit and an actual sequential position, to prove whether a data flow passes through each expected IPv6 node in an expected sequence.

Based on the method provided in the first aspect, in some implementations, the second data packet includes a network service header NSH, the NSH includes a metadata field, and the metadata field includes the proof of transit of the first forwarding node and the sequential position of the first forwarding node on the actual forwarding path.

In a service function chaining (service function chaining, SFC) scenario, an NSH specific to the SFC scenario is used to carry a proof of transit and an actual sequential position, to prove whether a data flow passes through each expected service function (service function, SF) in an expected sequence and record whether the data flow passes through an unexpected SF. This helps each SF in processing traffic in sequence as required.

Based on the method provided in the first aspect, in some implementations, the second data packet includes a multiprotocol label switching MPLS header, and the MPLS header includes the proof of transit of the first forwarding node and the sequential position of the first forwarding node on the actual forwarding path.

In an MPLS scenario, an MPLS header is used to carry a proof of transit and an actual sequential position, to prove whether a data flow passes through each expected MPLS node in an expected sequence (for example, a sequence indicated by an MPLS label stack). This is applicable to a scenario such as MPLS protocol-based communication, provides a mechanism for verifying a data source in an MPLS network, and helps verify whether a data packet is forwarded in a sequence specified by an MPLS tunnel.

Based on the method provided in the first aspect, in some implementations, the second data packet includes a virtual extensible local area network VxLAN header, and the VxLAN header includes the proof of transit of the first forwarding node and the sequential position of the first forwarding node on the actual forwarding path. Alternatively, in a VxLAN scenario, this is applicable to a scenario such as a VxLAN protocol-based virtualized network or cross-data center interconnection, provides a function of verifying a data source in a VxLAN tunnel, and helps verify whether a data packet is forwarded in a sequence specified by the VxLAN tunnel.

Based on the method provided in the first aspect, in some implementations, the second data packet includes an internet protocol security IPsec header, and the IPsec header includes the proof of transit of the first forwarding node and the sequential position of the first forwarding node on the actual forwarding path. The foregoing method is applicable to an IPsec protocol-based network scenario, provides a function of verifying a data source in an IPsec tunnel, and helps verify whether a forwarding path that a data packet passes through during actual forwarding matches a pre-planned IPsec tunnel.

Based on the method provided in the first aspect, in some implementations, the IPv6 extension header includes a segment routing header SRH, the SRH includes a type-length-value TLV, and the TLV of the SRH includes the proof of transit of the first forwarding node and the sequential position of the first forwarding node on the actual forwarding path. The foregoing method is applicable to an SRv6 scenario, and helps verify whether a forwarding path that a data packet passes through during actual forwarding matches a pre-planned segment list.

Based on the method provided in the first aspect, in some implementations, the IPv6 extension header includes an application-aware networking APN header, the APN header includes an application-aware networking identifier APN ID, and the APN ID includes the proof of transit of the first forwarding node and the sequential position of the first forwarding node on the actual forwarding path. The foregoing method is applicable to an APN6 scenario, and helps verify whether a forwarding path that a data packet passes through during actual forwarding matches a forwarding path pre-planned in an APN network.

Based on the method provided in the first aspect, in some implementations, the IPv6 extension header includes a destination options header DOH, the DOH includes a TLV, and the TLV of the DOH includes the proof of transit of the first forwarding node and the sequential position of the first forwarding node on the actual forwarding path.

Based on the method provided in the first aspect, in some implementations, the IPv6 extension header includes a hop-by-hop options header HBH, the HBH includes a TLV, and the TLV of the HBH includes the proof of transit of the first forwarding node and the sequential position of the first forwarding node on the actual forwarding path.

Based on the method provided in the first aspect, in some implementations, that the first forwarding node sends the proof of transit of the first forwarding node and the sequential position of the first forwarding node on the actual forwarding path to the verification node includes: The first forwarding node generates a notification packet, where the notification packet includes the proof of transit of the first forwarding node and the sequential position of the first forwarding node on the actual forwarding path; and the first forwarding node sends the notification packet to the verification node.

An independent packet is constructed to notify an actual sequential position of a critical node and a proof of transit of the critical node, so that a verification node can infer, based on a received sequential position of a critical node on an actual forwarding path, whether there is a non-critical node on the actual forwarding path and a quantity of non-critical nodes on the actual forwarding path, thereby implementing recordability of a non-critical node. In addition, after receiving a data packet, any critical node may send a proof of transit and an actual sequential position to the verification node, so that the verification node can verify the proof of transit and record the actual sequential position in real time, without having to wait until the data packet is transmitted to a last critical node, thereby implementing real-time transparent tracking of data transmission and achieving a small attack window.

Based on the method provided in the first aspect, in some implementations, the notification packet includes a network configuration protocol NETCONF packet, and the NETCONF packet includes the proof of transit of the first forwarding node and the sequential position of the first forwarding node on the actual forwarding path.

The foregoing manner supports a scenario of transmitting a proof of transit and an actual sequential position based on a management plane protocol.

The notification packet includes a hypertext transfer protocol HTTP packet, and a payload field in the HTTP packet includes the proof of transit of the first forwarding node and the sequential position of the first forwarding node on the actual forwarding path.

The foregoing manner supports a scenario of transmitting a proof of transit and an actual sequential position based on a data plane protocol.

Based on the method provided in the first aspect, in some implementations, the first data packet includes a segment list segment list, the segment list includes a segment identifier SID of the first forwarding node, and that the first forwarding node obtains the sequential position of the first forwarding node on the expected forwarding path includes: The first forwarding node obtains the sequential position of the first forwarding node on the expected forwarding path based on a sequential position of the SID of the first forwarding node in the segment list.

The foregoing manner provides a manner of obtaining an expected sequential position quickly and with good performance based on a data plane. Because a forwarding node can obtain an expected sequential position based on a segment list carried in a received data packet, there is no need to configure and store a large quantity of entries to determine the expected sequential position, thereby reducing storage resource overheads caused by the forwarding node to pre-store the expected sequential position, and also reducing performance overheads caused by the forwarding node to determine the expected sequential position through table lookup and matching.

Based on the method provided in the first aspect, in some implementations, the first data packet includes a path identifier, and that the first forwarding node obtains the sequential position of the first forwarding node on the expected forwarding path includes: The first forwarding node obtains the sequential position of the first forwarding node on the expected forwarding path based on the path identifier and a correspondence stored by the first forwarding node, where the correspondence includes the path identifier and the sequential position of the first forwarding node on the expected forwarding path.

The foregoing manner provides a manner of obtaining an expected sequential position based on a path identifier carried in a data plane and a correspondence provided by a control plane. Because a data packet does not need to carry an expected sequential position of each critical node, data packet transmission overheads are further reduced on the basis of supporting path validation.

Based on the method provided in the first aspect, in some implementations, before the first forwarding node obtains the first data packet, the method further includes: The first forwarding node receives the sequential position of the first forwarding node on the expected forwarding path from the path planning party.

Because the path planning party pre-distributes a sequential position on an expected forwarding path before forwarding a data packet, the data packet does not need to carry an expected sequential position of each critical node, and a forwarding node can also learn of the expected sequential position, thereby further reducing data packet transmission overheads on the basis of supporting path validation.

Based on the method provided in the first aspect, in some implementations, that the first forwarding node obtains the first data packet includes: The first forwarding node receives the first data packet from the second forwarding node, where the second forwarding node is an upstream critical node of the first forwarding node on the forwarding path, and the first data packet includes a proof of transit of the second forwarding node. The method further includes: The first forwarding node verifies the proof of transit of the second forwarding node based on a first vector commitment, the identity information of the second forwarding node, and the sequential position of the second forwarding node on the expected forwarding path, where the first vector commitment indicates a correspondence between sequential positions of at least two critical nodes on the expected forwarding path and identities of the at least two critical nodes, and the at least two critical nodes include the second forwarding node.

A proof of transit of a previous forwarding node is verified, so that it can be determined whether a sequential position of the previous forwarding node is an expected sequential position and whether the previous forwarding node is an expected forwarding node, and correctness of a source of a previous hop can be verified. In network attack scenarios such as route hijack, route injection, and traffic detour, if an attacker redirects traffic to a path specified by the attacker, a proof of transit fails verification, so that a network attack in a data packet can be detected in time, thereby reducing a risk caused by an incorrect data source. In addition, verification on each node is based on verification on a previous hop, which is equivalent to forming a continuous verification chain, so that the probability of a data packet being forged, deceived, or tampered with by any hop of node on a forwarding path is reduced, thereby improving network security.

Based on the method provided in the first aspect, in some implementations, the path planning party is a source host that generates payload data of the first data packet; or the path planning party is a 1^{st} forwarding device on the expected forwarding path.

The foregoing manner supports a scenario in which a source terminal performs path computation or a network-side head node performs path computation, and has more diverse application scenarios.

According to a second aspect, a method for verifying a proof of transit is provided. The method includes:
A verification node obtains a proof of transit of a first forwarding node, a first vector commitment, identity information of the first forwarding node, and a sequential position of the first forwarding node on an expected forwarding path, where the first vector commitment indicates a correspondence between sequential positions of at least two critical nodes on the expected forwarding path and identities of the at least two critical nodes, the at least two critical nodes include the first forwarding node, the identity information of the first forwarding node indicates an identity of the first forwarding node, and the proof of transit of the first forwarding node is used to prove that the first forwarding node is at the sequential position of the first forwarding node on the expected forwarding path; and the verification node verifies the proof of transit of the first forwarding node based on the first vector commitment, the identity information of the first forwarding node, and the sequential position of the first forwarding node.

A proof of transit is verified based on a vector commitment, an expected sequential position of a critical node, and identity information of the critical node. Therefore, if a critical node on the expected forwarding path is skipped or a redundant, unspecified node that does not exist on the expected forwarding path is traversed during forwarding, the mismatch between the identity information of a critical node and its sequential position causes the proof of transit obtained based on the identity information of the critical node and the sequential position of the critical node to fail verification, thereby improving the trustworthiness of the proof of transit.

Further, in many source addressing or centralized path computation routing technologies, due to network attacks such as route hijack, route injection, and traffic detour, or incorrect configurations of network devices, an actual forwarding path of a data plane deviates from an expected forwarding path of a control plane. The foregoing method can verify whether service data is forwarded based on an expected forwarding path during actual transmission, thereby helping resolve a problem that the expected forwarding path determined by the control plane is inconsistent with the actual forwarding path of the data plane.

Especially, when the sequential position of the forwarding node on the expected forwarding path is different from a sequential position of the forwarding node on an actual forwarding path, because the proof of transit is obtained by using the sequential position of the forwarding node on the expected forwarding path instead of the sequential position of the forwarding node on the actual forwarding path, the sequential position for obtaining the proof of transit is consistent with a sequential position for obtaining a vector commitment, thereby implementing fault tolerance of path validation. For example, a data packet is allowed to pass through some non-critical nodes (for example, outdated devices, weak-capability devices, or devices manufactured by third-party network vendors) during actual transmission, thereby reducing a risk that service data transmission is interrupted or an alarm is output because verification performed by a downstream critical node of a non-critical node on a proof of transit fails.

Based on the method provided in the second aspect, in some implementations, the at least two critical nodes further include a second forwarding node, the second forwarding node is an upstream critical node of the first forwarding node on the expected forwarding path, and that the verification node verifies the proof of transit of the first forwarding node based on the first vector commitment, the identity information of the first forwarding node, and the sequential position of the first forwarding node on the expected forwarding path includes:
The verification node verifies the proof of transit of the first forwarding node based on the first vector commitment, the sequential position of the first forwarding node on the expected forwarding path, the identity information of the first forwarding node, a sequential position of the second forwarding node on the expected forwarding path, and identity information of the second forwarding node, where the identity information of the second forwarding node indicates an identity of the second forwarding node, and the proof of transit of the first forwarding node is used to prove that both the first forwarding node and the second forwarding node are at the corresponding sequential positions on the expected forwarding path.

Because a proof of transit is verified based on expected sequential positions of a plurality of critical nodes and identities of the plurality of critical nodes, it can be verified at a time whether the plurality of critical nodes are respectively at corresponding sequential positions on an expected forwarding path, and batch processing improves overall forwarding path validation performance and reduces time for proof computation and proof verification. In addition, in this manner, time consumed for obtaining the proof of transit almost does not linearly increase as a quantity of critical nodes increases, so that this is more applicable to large-scale networking and enhances scalability.

Based on the method provided in the second aspect, in some implementations, that the verification node obtains the proof of transit of the first forwarding node includes: The verification node receives the proof of transit of the first forwarding node from the first forwarding node.

According to a third aspect, a method for verifying a proof of transit is provided. The method further includes: A first forwarding node obtains a first data packet, where the first forwarding node is deployed at a boundary of a first autonomous system AS; the first forwarding node obtains a proof of transit of a to-be-verified AS based on a sequential position of the to-be-verified AS and identity information of the to-be-verified AS, where the identity information of the to-be-verified AS indicates an identity of the to-be-verified AS; and the first forwarding node verifies the proof of transit of the to-be-verified AS based on a second vector commitment, the sequential position of the to-be-verified AS, and the identity information of the to-be-verified AS, where the second vector commitment indicates a correspondence between identity information of each of at least two ASs and a sequential position of each AS.

The proof of transit of the to-be-verified AS is obtained based on the identity information of the to-be-verified AS and the sequential position of the to-be-verified AS, and the proof of transit of the to-be-verified AS is compared with a vector commitment, to determine whether the to-be-verified AS is an expected AS and/or whether the sequential position of the to-be-verified AS is an expected sequential position, thereby implementing AS-level path validation. In an inter-AS transmission scenario, it can be verified whether an AS that a data packet is to pass through or an AS that a data packet has passed through belongs to an AS planned to be passed through on an expected path, thereby reducing a risk caused when the data packet passes through an unexpected AS, for example, reducing a risk of network transmission quality deterioration caused when the data packet passes through an AS that does not meet a network transmission quality requirement (for example, a delay or a packet loss rate does not meet a requirement), or reducing a security risk caused when the data packet passes through an AS that does not meet a network security requirement (for example, an AS that has been identified as having a security risk).

Based on the method provided in the third aspect, in some implementations, the to-be-verified AS includes at least one of the following: a neighboring AS of the first AS, the first AS, or each AS from a source AS to the first AS, the neighboring AS includes a previous AS of the first AS on an actual forwarding path of the first data packet and/or a next AS of the first AS on a reachable path to a destination IP address of the first data packet, the source AS is an AS that communicates with a source host, and the source host is a device that generates payload data of the first data packet.

A proof of transit of a next AS is obtained and the proof of transit of the next AS is verified, to verify in advance, before a data packet is actually forwarded, whether a sequential position and an identity of the next AS to which the data packet may be forwarded are correct, thereby reducing a security risk of service data transmission caused when the data packet enters an unexpected AS.

A proof of transit of a previous AS is obtained and the proof of transit of the previous AS is verified, to verify whether a data packet is from an AS with an unexpected sequential position and/or identity, thereby enhancing security of a data packet in an inter-AS transmission scenario.

Based on the method provided in the third aspect, in some implementations, the sequential position of the to-be-verified AS includes an expected sequential position of the to-be-verified AS or an actual sequential position of the to-be-verified AS, the expected sequential position of the to-be-verified AS indicates a sequential relationship between the to-be-verified AS and an AS traversed by an expected forwarding path of the first data packet, and the actual sequential position of the to-be-verified AS indicates a sequential relationship between the to-be-verified AS and an AS traversed by the actual forwarding path of the first data packet.

Path validation is performed by using the expected sequential position of the to-be-verified AS, so that an unexpected AS is allowed to be inserted between two expected ASs on the actual forwarding path, thereby implementing AS-level fault tolerance on the basis of implementing AS-level path validation.

Path validation is performed by using the actual sequential position of the to-be-verified AS, so that it can be verified whether an identity and a sequential position of each AS traversed by the actual forwarding path are completely consistent with an identity and a sequential position of each AS traversed by the expected forwarding path, thereby implementing stricter AS-level path validation.

Based on the method provided in the third aspect, in some implementations, the to-be-verified AS includes a neighboring AS of the first AS, the first data packet carries an actual sequential position of the first AS, and an actual sequential position of the to-be-verified AS is obtained based on the actual sequential position of the first AS and a sequential relationship between the first AS and the to-be-verified AS.

The foregoing manner provides a manner of obtaining an actual sequential position of an AS quickly and with good performance based on a data plane. Because a forwarding node can obtain an actual sequential position of a to-be-verified AS based on a segment list carried in a received data packet, there is no need to configure and store a large quantity of entries to determine the expected sequential position, thereby reducing storage resource overheads caused by the forwarding node to pre-store the expected sequential position, and also reducing performance overheads caused by the forwarding node to determine the expected sequential position through table lookup and matching.

Based on the method provided in the third aspect, in some implementations, the to-be-verified AS includes the first AS, and the first data packet carries an actual sequential position of the first AS.

A data packet carries an actual sequential position of a current AS, which is equivalent to that the data packet carries an AS-level TTL. For example, each time the data packet passes through one AS, an actual sequential position of the AS in the data packet is updated once, and a forwarding node may learn, based on content of a packet header of the received data packet, a sequence of an AS that the data packet currently passes through. Therefore, strict path validation can be performed based on an actual sequential position of an AS, and a data packet does not need to carry complete sequential positions of all ASs that have been traversed, thereby reducing data packet overheads, and achieving low implementation complexity.

Based on the method provided in the third aspect, in some implementations, the first data packet carries an AS list, the AS list includes identity information of each AS traversed by an expected forwarding path of the first data packet, and an expected sequential position of the to-be-verified AS is obtained based on a sequential position of the identity information of the to-be-verified AS in the AS list.

Because each AS traversed by an expected forwarding path is indicated in a data packet by using an AS list, path validation can be performed based on an expected sequential position of an AS, and fault tolerance of AS-level path validation is implemented. In addition, there is no need to configure and store a large quantity of entries to determine the expected sequential position, thereby reducing storage resource overheads caused by a forwarding node to pre-store the expected sequential position, and also reducing performance overheads caused by the forwarding node to determine the expected sequential position through table lookup.

Based on the method provided in the third aspect, in some implementations, the first data packet carries the second vector commitment.

A vector commitment is equivalent to a reference value used for comparison with a proof of transit when the proof of transit is verified. Because the vector commitment is carried in a data packet, storage resource overheads caused by a forwarding node to pre-store the vector commitment are reduced, and performance overheads caused by the forwarding node to determine the vector commitment through table lookup and matching are also reduced.

Based on the method provided in the third aspect, in some implementations, the first data packet includes an internet protocol version 6 IPv6 extension header, and the IPv6 extension header carries the sequential position of the to-be-verified AS, the identity information of the to-be-verified AS, and the second vector commitment; or
the first data packet includes a network service header NSH, the NSH includes a metadata field, and the metadata field carries the sequential position of the to-be-verified AS, the identity information of the to-be-verified AS, and the second vector commitment; or
the first data packet includes a multiprotocol label switching MPLS header, and the MPLS header carries the sequential position of the to-be-verified AS, the identity information of the to-be-verified AS, and the second vector commitment; or
the first data packet includes a virtual extensible local area network VxLAN header, and the VxLAN header carries the sequential position of the to-be-verified AS, the identity information of the to-be-verified AS, and the second vector commitment; or
the first data packet includes an internet protocol security IPsec header, and the IPsec header carries the sequential position of the to-be-verified AS, the identity information of the to-be-verified AS, and the second vector commitment.

Based on the method provided in the third aspect, in some implementations, a destination IP address of the first data packet includes a first IP address, and before the first forwarding node obtains the first data packet, the method further includes: The first forwarding node receives a routing protocol packet from the to-be-verified AS, where the routing protocol packet carries the first IP address and the identity information of the to-be-verified AS; and the first forwarding node stores a first correspondence, where the first correspondence includes the first IP address and the identity information of the to-be-verified AS.

After the first forwarding node obtains the first data packet, the method further includes: The first forwarding node obtains the identity information of the to-be-verified AS based on the first IP address and the first correspondence.

In the foregoing manner, the to-be-verified AS can pre-advertise the identity information of the AS by using a control plane.

Based on the method provided in the third aspect, in some implementations, the first data packet carries a path identifier, the path identifier identifies an expected forwarding path, and before the first forwarding node obtains the first data packet, the method further includes: The first forwarding node receives a notification packet from a path planning party, where the notification packet carries the path identifier, the sequential position of the to-be-verified AS, and the identity information of the to-be-verified AS; and the first forwarding node stores a second correspondence, where the second correspondence includes the path identifier, the sequential position of the to-be-verified AS, and the identity information of the to-be-verified AS.

After the first forwarding node obtains the first data packet, the method further includes: The first forwarding node obtains the sequential position of the to-be-verified AS and the identity information of the to-be-verified AS based on the path identifier and the second correspondence. The foregoing manner supports a manner in which the path planning party pre-advertises the sequential position of the to-be-verified AS and the identity information of the to-be-verified AS.

According to a fourth aspect, an apparatus for obtaining a proof of transit is provided. The apparatus is disposed in a first forwarding node, and the apparatus includes:
an obtaining unit, configured to: obtain a first data packet, where at least two critical nodes corresponding to the first data packet include the first forwarding node, and the critical node is a forwarding node that is passed through on an expected forwarding path determined by a path planning party for the first data packet; and obtain a sequential position of the first forwarding node on the expected forwarding path and identity information of the first forwarding node, where the sequential position of the first forwarding node on the expected forwarding path is different from a sequential position of the first forwarding node on an actual forwarding path of the first data packet, and the identity information of the first forwarding node indicates an identity of the first forwarding node; and a processing unit, configured to obtain a proof of transit of the first forwarding node based on the sequential position of the first forwarding node on the expected forwarding path and the identity information of the first forwarding node, where the proof of transit of the first forwarding node is used to prove that the first forwarding node forwards the first data packet at the sequential position on the expected forwarding path.

Based on the apparatus provided in the fourth aspect, in some implementations, the at least two critical nodes further include a second forwarding node, the second forwarding node is an upstream critical node of the first forwarding node on the expected forwarding path, and the processing unit is configured to obtain the proof of transit of the first forwarding node based on the sequential position of the first forwarding node on the expected forwarding path, the identity information of the first forwarding node, a sequential position of the second forwarding node on the expected forwarding path, and identity information of the second forwarding node, where the identity information of the second forwarding node indicates an identity of the second forwarding node, and the proof of transit of the first forwarding node is used to prove that the first forwarding node and the second forwarding node are respectively at the corresponding sequential positions on the expected forwarding path.

Based on the apparatus provided in the fourth aspect, in some implementations, the first forwarding node is a last critical node on the expected forwarding path, and the second forwarding node includes all critical nodes on the expected forwarding path other than the first forwarding node.

Based on the apparatus provided in the fourth aspect, in some implementations, the processing unit is further configured to obtain the sequential position of the first forwarding node on the actual forwarding path based on the first data packet.

The apparatus further includes: a sending unit, configured to send the proof of transit of the first forwarding node and the sequential position of the first forwarding node on the actual forwarding path to a verification node.

Based on the apparatus provided in the fourth aspect, in some implementations, the verification node includes a third forwarding node, the third forwarding node is a downstream critical node of the first forwarding node on the expected forwarding path, and the processing unit is further configured to obtain a second data packet based on the first data packet, the proof of transit of the first forwarding node, and the sequential position of the first forwarding node on the actual forwarding path, where the second data packet includes a payload of the first data packet, the proof of transit of the first forwarding node, and the sequential position of the first forwarding node on the actual forwarding path; and the sending unit is configured to send the second data packet to the third forwarding node.

Based on the apparatus provided in the fourth aspect, in some implementations, the first data packet includes a first position list, the first position list includes a sequential position, on the actual forwarding path, of an upstream critical node of the first forwarding node on the expected forwarding path, the second data packet includes a second position list, and the second position list includes the first position list and the sequential position of the first forwarding node on the actual forwarding path.

Based on the apparatus provided in the fourth aspect, in some implementations, the second data packet includes an internet protocol version 6 IPv6 extension header, and the IPv6 extension header includes the proof of transit of the first forwarding node and the sequential position of the first forwarding node on the actual forwarding path; or the second data packet includes a network service header NSH, the NSH includes a metadata field, and the metadata field includes the proof of transit of the first forwarding node and the sequential position of the first forwarding node on the actual forwarding path; or the second data packet includes a multiprotocol label switching MPLS header, and the MPLS header includes the proof of transit of the first forwarding node and the sequential position of the first forwarding node on the actual forwarding path; or the second data packet includes a virtual extensible local area network VxLAN header, and the VxLAN header includes the proof of transit of the first forwarding node and the sequential position of the first forwarding node on the actual forwarding path; or the second data packet includes an internet protocol security IPsec header, and the IPsec header includes the proof of transit of the first forwarding node and the sequential position of the first forwarding node on the actual forwarding path.

Based on the apparatus provided in the fourth aspect, in some implementations, the IPv6 extension header includes a segment routing header SRH, the SRH includes a type-length-value TLV, and the TLV of the SRH includes the proof of transit of the first forwarding node and the sequential position of the first forwarding node on the actual forwarding path.

The IPv6 extension header includes an application-aware networking APN header, the APN header includes an application-aware networking identifier APN ID, and the APN ID includes the proof of transit of the first forwarding node and the sequential position of the first forwarding node on the actual forwarding path.

The IPv6 extension header includes a destination options header DOH, the DOH includes a TLV, and the TLV of the DOH includes the proof of transit of the first forwarding node and the sequential position of the first forwarding node on the actual forwarding path.

The IPv6 extension header includes a hop-by-hop options header HBH, the HBH includes a TLV, and the TLV of the HBH includes the proof of transit of the first forwarding node and the sequential position of the first forwarding node on the actual forwarding path.

Based on the apparatus provided in the fourth aspect, in some implementations, the processing unit is further configured to generate a notification packet, where the notification packet includes the proof of transit of the first forwarding node and the sequential position of the first forwarding node on the actual forwarding path.

The sending unit is configured to send the notification packet to the verification node.

Based on the apparatus provided in the fourth aspect, in some implementations, the notification packet includes a network configuration protocol NETCONF packet, and the NETCONF packet includes the proof of transit of the first forwarding node and the sequential position of the first forwarding node on the actual forwarding path; or
the notification packet includes a hypertext transfer protocol HTTP packet, and a payload field in the HTTP packet includes the proof of transit of the first forwarding node and the sequential position of the first forwarding node on the actual forwarding path.

Based on the apparatus provided in the fourth aspect, in some implementations, the first data packet includes a segment list segment list, the segment list includes a segment identifier SID of the first forwarding node, and the processing unit is configured to obtain the sequential position of the first forwarding node on the expected forwarding path based on a sequential position of the SID of the first forwarding node in the segment list.

Based on the apparatus provided in the fourth aspect, in some implementations, the first data packet includes a path identifier, and the processing unit is configured to obtain the sequential position of the first forwarding node on the expected forwarding path based on the path identifier and a correspondence stored by the first forwarding node, where the correspondence includes the path identifier and the sequential position of the first forwarding node on the expected forwarding path.

Based on the apparatus provided in the fourth aspect, in some implementations, the obtaining unit is further configured to receive the sequential position of the first forwarding node on the expected forwarding path from the path planning party.

Based on the apparatus provided in the fourth aspect, in some implementations, the obtaining unit is configured to receive the first data packet from the second forwarding node, where the second forwarding node is an upstream critical node of the first forwarding node on the forwarding path, and the first data packet includes a proof of transit of the second forwarding node.

The processing unit is further configured to verify the proof of transit of the second forwarding node based on a first vector commitment, the identity information of the second forwarding node, and the sequential position of the second forwarding node on the expected forwarding path, where the first vector commitment indicates a correspondence between sequential positions of at least two critical nodes on the expected forwarding path and identities of the at least two critical nodes, and the at least two critical nodes include the second forwarding node.

Based on the apparatus provided in the fourth aspect, in some implementations, the path planning party is a source host that generates payload data of the first data packet; or the path planning party is a 1^{st} forwarding device on the expected forwarding path.

According to a fifth aspect, an apparatus for verifying a proof of transit is provided. The apparatus includes: an obtaining unit, configured to obtain a proof of transit of a first forwarding node, a first vector commitment, identity information of the first forwarding node, and a sequential position of the first forwarding node on an expected forwarding path, where the first vector commitment indicates a correspondence between sequential positions of at least two critical nodes on the expected forwarding path and identities of the at least two critical nodes, the at least two critical nodes include the first forwarding node, the identity information of the first forwarding node indicates an identity of the first forwarding node, and the proof of transit of the first forwarding node is used to prove that the first forwarding node is at the sequential position of the first forwarding node on the expected forwarding path; and a verification unit, configured to verify the proof of transit of the first forwarding node based on the first vector commitment, the identity information of the first forwarding node, and the sequential position of the first forwarding node.

Based on the apparatus provided in the fifth aspect, in some implementations, the at least two critical nodes further include a second forwarding node, the second forwarding node is an upstream critical node of the first forwarding node on the expected forwarding path, and the verification unit is configured to verify the proof of transit of the first forwarding node based on the first vector commitment, the sequential position of the first forwarding node on the expected forwarding path, the identity information of the first forwarding node, a sequential position of the second forwarding node on the expected forwarding path, and identity information of the second forwarding node, where the identity information of the second forwarding node indicates an identity of the second forwarding node, and the proof of transit of the first forwarding node is used to prove that both the first forwarding node and the second forwarding node are at the corresponding sequential positions on the expected forwarding path.

Based on the apparatus provided in the fifth aspect, in some implementations, the obtaining unit is configured to receive the proof of transit of the first forwarding node from the first forwarding node.

According to a sixth aspect, an apparatus for verifying a proof of transit is provided. The apparatus is disposed in a first forwarding node, and the apparatus further includes:
an obtaining unit, configured to obtain a first data packet, where the first forwarding node is deployed at a boundary of a first autonomous system AS; and
a processing unit, configured to obtain a proof of transit of a to-be-verified AS based on a sequential position of the to-be-verified AS and identity information of the to-be-verified AS, where the identity information of the to-be-verified AS indicates an identity of the to-be-verified AS.

The processing unit is further configured to verify the proof of transit of the to-be-verified AS based on a second vector commitment, the sequential position of the to-be-verified AS, and the identity information of the to-be-verified AS, where the second vector commitment indicates a correspondence between identity information of each of at least two ASs and a sequential position of each AS.

Based on the apparatus provided in the sixth aspect, in some implementations, the to-be-verified AS includes at least one of the following: a neighboring AS of the first AS, the first AS, or each AS from a source AS to the first AS, the neighboring AS includes a previous AS of the first AS on an actual forwarding path of the first data packet and/or a next AS of the first AS on a reachable path to a destination IP address of the first data packet, the source AS is an AS that communicates with a source host, and the source host is a device that generates payload data of the first data packet.

Based on the apparatus provided in the sixth aspect, in some implementations, the sequential position of the to-be-verified AS includes an expected sequential position of the to-be-verified AS or an actual sequential position of the to-be-verified AS, the expected sequential position of the to-be-verified AS indicates a sequential relationship between the to-be-verified AS and an AS traversed by an expected forwarding path of the first data packet, and the actual sequential position of the to-be-verified AS indicates a sequential relationship between the to-be-verified AS and an AS traversed by the actual forwarding path of the first data packet.

Based on the apparatus provided in the sixth aspect, in some implementations, the to-be-verified AS includes a neighboring AS of the first AS, the first data packet carries an actual sequential position of the first AS, and an actual sequential position of the to-be-verified AS is obtained based on the actual sequential position of the first AS and a sequential relationship between the first AS and the to-be-verified AS.

Based on the apparatus provided in the sixth aspect, in some implementations, the to-be-verified AS includes the first AS, and the first data packet carries an actual sequential position of the first AS.

Based on the apparatus provided in the sixth aspect, in some implementations, the first data packet carries an AS list, the AS list includes identity information of each AS traversed by an expected forwarding path of the first data packet, and an expected sequential position of the to-be-verified AS is obtained based on a sequential position of the identity information of the to-be-verified AS in the AS list.

Based on the apparatus provided in the sixth aspect, in some implementations, the first data packet carries the second vector commitment.

Based on the apparatus provided in the sixth aspect, in some implementations, the first data packet includes an internet protocol version 6 IPv6 extension header, and the IPv6 extension header carries the sequential position of the to-be-verified AS, the identity information of the to-be-verified AS, and the second vector commitment; or
the first data packet includes a network service header NSH, the NSH includes a metadata field, and the metadata field carries the sequential position of the to-be-verified AS, the identity information of the to-be-verified AS, and the second vector commitment; or
the first data packet includes a multiprotocol label switching MPLS header, and the MPLS header carries the sequential position of the to-be-verified AS, the identity information of the to-be-verified AS, and the second vector commitment; or
the first data packet includes a virtual extensible local area network VxLAN header, and the VxLAN header carries the sequential position of the to-be-verified AS, the identity information of the to-be-verified AS, and the second vector commitment; or
the first data packet includes an internet protocol security IPsec header, and the IPsec header carries the sequential position of the to-be-verified AS, the identity information of the to-be-verified AS, and the second vector commitment.

Based on the apparatus provided in the sixth aspect, in some implementations, a destination IP address of the first data packet includes a first IP address, and the obtaining unit is further configured to receive a routing protocol packet from the to-be-verified AS, where the routing protocol packet carries the first IP address and the identity information of the to-be-verified AS.

The processing unit is further configured to store a first correspondence, where the first correspondence includes the first IP address and the identity information of the to-be-verified AS.

The obtaining unit is further configured to obtain the identity information of the to-be-verified AS based on the first IP address and the first correspondence.

Based on the apparatus provided in the sixth aspect, in some implementations, the first data packet carries a path identifier, the path identifier identifies an expected forwarding path, and the obtaining unit is further configured to receive a notification packet from a path planning party, where the notification packet carries the path identifier, the sequential position of the to-be-verified AS, and the identity information of the to-be-verified AS.

The processing unit is further configured to store a second correspondence, where the second correspondence includes the path identifier, the sequential position of the to-be-verified AS, and the identity information of the to-be-verified AS.

The obtaining unit is further configured to obtain the sequential position of the to-be-verified AS and the identity information of the to-be-verified AS based on the path identifier and the second correspondence.

According to a seventh aspect, a forwarding device is provided. The forwarding device includes a processor, the processor is coupled to a memory, the memory stores at least one computer program instruction, and the at least one computer program instruction is loaded and executed by the processor, to enable the forwarding device to perform the method according to any one of the first aspect or the optional manners of the first aspect, the method according to any one of the second aspect or the optional manners of the second aspect, or the method according to any one of the third aspect or the optional manners of the third aspect. A network interface is configured to receive or send a packet. For details of the forwarding device provided in the seventh aspect, refer to the method according to any one of the first aspect or the optional manners of the first aspect, the method according to any one of the second aspect or the optional manners of the second aspect, or the method according to any one of the third aspect or the optional manners of the third aspect. Details are not described herein.

According to an eighth aspect, a compute device is provided. The compute device includes a processor, the processor is coupled to a memory, the memory stores at least one computer program instruction, and the at least one computer program instruction is loaded and executed by the processor, to enable the compute device to implement the method according to any one of the first aspect or the optional manners of the first aspect, the method according to any one of the second aspect or the optional manners of the second aspect, or the method according to any one of the third aspect or the optional manners of the third aspect. For details of the compute device provided in the eighth aspect, refer to the method according to any one of the first aspect or the optional manners of the first aspect, the method according to any one of the second aspect or the optional manners of the second aspect, or the method according to any one of the third aspect or the optional manners of the third aspect. Details are not described herein.

According to a ninth aspect, a computer-readable storage medium is provided. The storage medium stores at least one instruction, and when the instruction is run on a computer, the computer is enabled to perform the method according to any one of the first aspect or the optional manners of the first aspect, the method according to any one of the second aspect or the optional manners of the second aspect, or the method according to any one of the third aspect or the optional manners of the third aspect.

According to a tenth aspect, a computer program product is provided. The computer program product includes one or more computer program instructions, and when the computer program instructions are loaded and run by a computer, the computer is enabled to perform the method according to any one of the first aspect or the optional manners of the first aspect, the method according to any one of the second aspect or the optional manners of the second aspect, or the method according to any one of the third aspect or the optional manners of the third aspect.

According to an eleventh aspect, a chip is provided, including a memory and a processor. The memory is configured to store computer instructions, and the processor is configured to invoke the computer instructions from the memory and run the computer instructions, to perform the method according to any one of the first aspect or the optional manners of the first aspect, the method according to any one of the second aspect or the optional manners of the second aspect, or the method according to any one of the third aspect or the optional manners of the third aspect.

According to a twelfth aspect, a network system is provided. The network system includes the apparatus according to the fourth aspect and the apparatus according to the fifth aspect.

### BRIEF DESCRIPTION OF DRAWINGS

FIG. 1a and FIG. 1b are a diagram of an application scenario according to an embodiment of this application;
FIG. 2 is a diagram of a path validation method according to an embodiment of this application;
FIG. 3 is a diagram of an architecture of a trusted path network system according to an embodiment of this application;
FIG. 4 is a diagram of an architecture of another trusted path network system according to an embodiment of this application;
FIG. 5 is a diagram of an architecture of still another trusted path network system according to an embodiment of this application;
FIG. 6 is a diagram of an application scenario according to an embodiment of this application;
FIG. 7a to FIG. 7d are a diagram of a packet format according to an embodiment of this application;
FIG. 8 is a diagram of a packet format according to an embodiment of this application;
FIG. 9 is a diagram of a scenario of transmitting a data flow between ASs according to an embodiment of this application;
FIG. 10 is a flowchart of a path validation method according to an embodiment of this application;
FIG. 11 is a diagram of a structure of an apparatus for obtaining a proof of transit according to an embodiment of this application;
FIG. 12 is a diagram of a structure of an apparatus for verifying a proof of transit according to an embodiment of this application;
FIG. 13 is a diagram of a structure of an apparatus for obtaining a proof of transit according to an embodiment of this application; and
FIG. 14 is a diagram of a structure of a device according to an embodiment of this application.

### DESCRIPTION OF EMBODIMENTS

To make the objectives, technical solutions, and advantages of this application clearer, the following further describes the implementations of this application in detail with reference to the accompanying drawings.

The following explains and describes some terms and concepts in embodiments of this application.

### (1) Path validation mechanism

The path validation mechanism is a technology that supports verifying whether service data is forwarded based on an expected forwarding path during actual transmission. In some implementations of this application, a proof of transit of a to-be-verified object is obtained based on identity information of the to-be-verified object and a sequential position of the to-be-verified object, and by using a vector commitment as reference data, the proof of transit of the to-be-verified object is verified based on the vector commitment, the identity information of the to-be-verified object, and the sequential position of the to-be-verified object, to implement the path validation mechanism. For example, if the proof of transit of the to-be-verified object passes verification, a forwarding node determines that the to-be-verified object is an object that service data is expected to pass through and the sequential position of the to-be-verified object meets a requirement of an expected forwarding path, and the forwarding node further performs packet forwarding. If the proof of transit of the to-be-verified object fails verification, a forwarding node determines that the to-be-verified object is not an object that service data is expected to pass through or the sequential position of the to-be-verified object meets a requirement of an expected forwarding path, and the forwarding node performs a predetermined processing action other than packet forwarding.

In embodiments of this application, the to-be-verified object includes a device (node)-level to-be-verified object and an autonomous system (autonomous system, AS)-level to-be-verified object. The device-level to-be-verified object includes at least one of a current node, a neighboring node of the current node, and/or each node traversed by an upper-half path. The AS-level to-be-verified object includes at least one of a current AS, a neighboring AS of the current AS, each AS traversed by an upper-half path, and/or a next AS of the current AS. Correspondingly, the path validation mechanism includes a device-level path validation method and an AS-level path validation method. The device-level path validation method includes, for example, abstracting each forwarding node traversed during service data transmission as a to-be-verified object, and verifying the forwarding node based on identity information of the forwarding node and a sequential relationship between forwarding nodes. The AS-level path validation method includes, for example, abstracting each AS traversed during service data transmission as a to-be-verified object, and verifying the AS based on identity information of the AS and a sequential relationship between ASs.

In some implementations, either the device-level path validation method or the AS-level path validation method is performed. In some other implementations, both the device-level path validation method and the AS-level path validation method are performed. For example, a path validation method that needs to be performed by a forwarding node is determined based on a network deployment position of the forwarding node. For example, a forwarding node inside an AS performs a device-level path validation method. For example, the forwarding node inside the AS performs path validation on a previous-hop node or a next-hop node of the node. A forwarding node at a boundary of an AS performs an AS-level path validation method. For example, the forwarding node at the boundary of the AS performs path validation on a previous AS or a next AS of the AS.

A term "current" mainly means time at which a data packet (service data) is obtained. For example, when a data packet reaches an i^{th} node during forwarding, the i^{th} node is a current node, and an AS in which the i^{th} node is located is a current AS. A neighboring node of a current node (a node to which a data packet is currently being transmitted) is a node having a neighbor relationship with the current node. For example, the neighboring node of the current node includes a previous node (also referred to as a previous-hop node) of the current node or a next node of the current node. A main difference between method procedures performed for different to-be-verified objects lies in different identity information and sequential positions used as algorithm input data.

### (2) Expected forwarding path

The expected forwarding path is a forwarding path determined by a path planning party before a data packet is forwarded. For example, the expected forwarding path is a forwarding path determined by a controller by performing path computation based on a network topology. The expected forwarding path includes at least two forwarding nodes. For example, expected forwarding nodes include a critical node 1 and a tail node. In some implementations, the expected forwarding path further includes one or more transit nodes between the critical node 1 and the tail node. The expected forwarding path is, for example, an end-to-end path. In a segment routing over internet protocol version 6 (internet protocol version 6, IPv6) (segment routing over IPv6, SRv6) scenario, the expected forwarding path is represented, for example, in a form of a segment list (segment list), a candidate path (candidate path, CP), or an SR policy (policy). In a multiprotocol label switching (multiprotocol label switching, MPLS) or segment routing over multiprotocol label switching (segment routing over multiprotocol label switching, SR-MPLS) scenario, the expected forwarding path is represented, for example, in a form of an MPLS label stack. In an SFC scenario, the expected forwarding path is represented, for example, by a service function chain.

### (3) Actual forwarding path

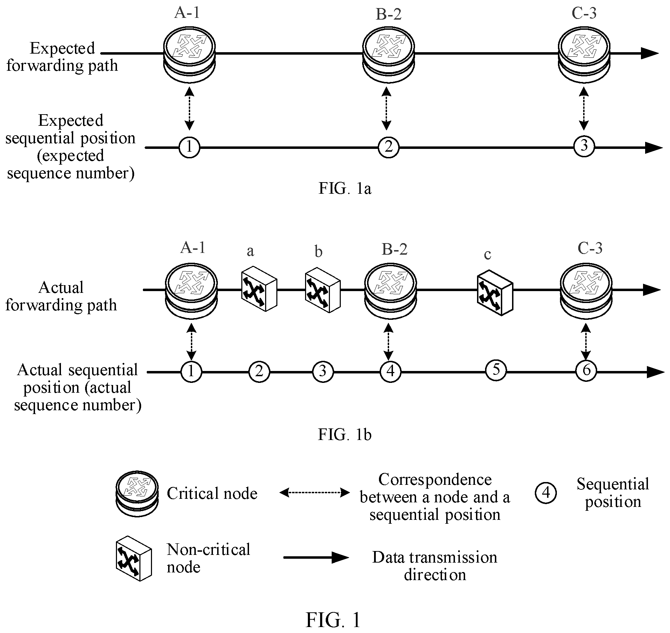

The actual forwarding path is a path that a data packet actually passes through during forwarding. For example, the actual forwarding path includes each device from an ingress device of a network into which the data packet enters to an egress device of the network. In some scenarios provided in this application, at least one non-critical node is included between two critical nodes on an actual forwarding path. For example, referring to FIG. 1b, a critical node A, a critical node B, and a critical node C exist on an actual forwarding path, a non-critical node a and a non-critical node b exist between the critical node A and the critical node B on the actual forwarding path, and a non-critical node c exists between the critical node B and the critical node C on the actual forwarding path.

### (4) Roles involved in a path validation mechanism

The path validation mechanism is usually implemented through collaboration between three entities: a path planning party, a forwarding node, and a verification node. The path planning party is configured to determine a vector commitment, the forwarding node is configured to determine a proof of transit during service data forwarding, and the verification node is configured to compare the vector commitment with the proof of transit to perform verification.

In some implementations, the three entities, namely, the path planning party, the forwarding node, and the verification node, are separately disposed. For example, the path planning party is a controller, the forwarding node is a forwarding device such as a router or a switch, and the verification node is an auditor device, a destination host of service data, or user equipment. In a possible implementation, the verification node is deployed outside a forwarding path. The verification node and the forwarding node on the forwarding path are separately disposed on different hardware devices. The verification node does not need to undertake a packet forwarding task.

In some other implementations, the three entities, namely, the path planning party, the forwarding node, and the verification node, are integrated together. For example, the verification node and the forwarding node are integrated on a same hardware device, and the device undertakes a packet forwarding task and a task for verifying a proof of transit. In other words, the verification node is the forwarding node itself, and the forwarding node also serves as the verification node, to verify correctness of a source of a previous hop. For example, during actual data forwarding, when receiving a data packet, each forwarding node verifies a proof of transit of a previous forwarding node that is carried in the data packet, to implement in-situ verification. For another example, after data transmission ends, a tail node verifies at a time that a data packet has indeed passed through an expected forwarding path in sequence, and each forwarding node does not need to perform path validation.

### (5) Forwarding node

The forwarding node is also referred to as a forwarding device, and the forwarding node is one device or a set of a plurality of devices configured to forward data. The forwarding node is, for example, a network device. For example, the forwarding node is a switch, a router, or a firewall. The forwarding node is, for another example, a compute device. For example, the forwarding node is a server or a terminal. The forwarding node is a physical device or a virtual device.

### (6) Path planning party

The path planning party is an entity configured to plan a forwarding path. In some implementations, the path planning party is a controller. In some other implementations, the path planning party is a source host, and the source host is a device that generates a data packet. For example, the path planning party is a terminal or a server. In some other implementations, the path planning party is a 1^{st} forwarding device encountered by a data packet entering a network, for example, a 1^{st} forwarding node on an expected forwarding path, such as a switch or a router. In an example, the path planning party is a 1^{st} forwarding device of a network into which a data packet enters. For example, the path planning party is an ingress device of the network into which the data packet enters.

### (7) Critical node

The critical node is a specific type of forwarding node. A term "critical" is mainly defined based on an expected forwarding path. In embodiments, a forwarding node on the expected forwarding path is referred to as a critical node, and an AS in which the forwarding node on the expected forwarding path is located is referred to as a critical AS.

The critical node is also referred to as a critical forwarding node or an expected node. The critical node is a forwarding node through which a path planning party specifies service data to pass during forwarding. An expected forwarding path determined by the path planning party includes at least two critical nodes. The critical node generally supports a capability of computing a proof of transit and/or a capability of verifying a proof of transit. For example, the critical node stores configuration information related to the function of computing a proof of transit and/or the function of verifying a proof of transit, and activates and enables the function of computing a proof of transit and/or the function of verifying a proof of transit. During service data transmission, when a data packet carrying service data reaches a critical node, the critical node can compute a proof of transit.

A type of forwarding node opposite to the critical node is a non-critical node. The non-critical node is a forwarding node through which a network path planning party does not specify service data to pass. The non-critical node is not on an expected forwarding path. A data packet may pass through one or more non-critical nodes during actual forwarding. For example, the non-critical node is an additional forwarding node traversed by an actual forwarding path compared with the expected forwarding path. The non-critical node usually does not support a function of computing a proof of transit and/or a function of verifying a proof of transit. Alternatively, the non-critical node supports but does not activate a function of computing a proof of transit and/or a function of verifying a proof of transit. Alternatively, the non-critical node supports but does not enable and activate a function of computing a proof of transit and/or a function of verifying a proof of transit. For example, the non-critical node is an outdated device, a weak-capability device, or a device manufactured by a third-party network vendor. For another example, the non-critical node is a layer 2 switch.

When orchestrating an expected forwarding path, a controller does not learn of existence of non-critical nodes in advance, and does not orchestrate the non-critical nodes into the expected forwarding path. However, during actual forwarding, a critical node may determine to pass through these non-critical nodes, resulting in an actual forwarding path additionally having these non-critical nodes compared with the expected forwarding path. For example, referring to FIG. 1a and FIG. 1b, sequential positions of a critical node A and a critical node B on an expected forwarding path are adjacent. However, when the critical node A actually forwards a data packet, the critical node A does not directly forward the data packet to the critical node B, but forwards the data packet to the critical node B through a tunnel. The tunnel traverses a non-critical node a and a non-critical node b, and the non-critical node a and the non-critical node b are configured to forward the data packet from the critical node A to the critical node B. The tunnel forwarding manner results in an actual forwarding path additionally having the non-critical node a and the non-critical node b compared with the expected forwarding path.

### (8) Forwarding path locking

Forwarding path locking is a technical effect expected to be achieved in embodiments of this application. Forwarding path locking means that during actual transmission, service data is indeed forwarded hop by hop along a trusted path (an expected forwarding path) that is pre-planned by a path planning party, thereby improving transmission security of the service data. In some implementations of this application, forwarding path locking specifically includes effects of two aspects: correctness of an identity of a critical node and correctness of a sequential relationship between critical nodes.

Correctness of an identity of a critical node means that an identity of a critical node that service data passes through during actual transmission matches an identity of a critical node expected by a path planning party. For example, the path planning party expects the service data to pass through N critical nodes, and the service data does indeed pass through the N critical nodes during actual transmission. In some implementations of this application, a path planning party determines a vector commitment based on identity information of N critical nodes on an expected forwarding path, a forwarding node determines a proof of transit based on the identity information of the critical node, and a verification node verifies the proof of transit based on the vector commitment and the identity information of the critical node, so that both the vector commitment and the proof of transit are bound to the identity information of the critical node. Based on this, only a proof of transit determined by using correct identity information of a critical node can pass verification, and a third party cannot forge a correct proof of transit because it is difficult for the third party to obtain correct identity information of a critical node. This implements correctness of an identity of a critical node.

Correctness of a sequential relationship between critical nodes is also referred to as sequential data forwarding, position locking, or sequential position binding. Correctness of a sequential relationship between critical nodes means that a sequential relationship between critical nodes on an actual forwarding path is consistent with a sequential relationship between the critical nodes on an expected forwarding path determined by a path planning party, and a critical node on the expected forwarding path cannot be skipped, or a critical node that does not appear on the expected forwarding path cannot be additionally traversed. For example, the path planning party expects that service data first passes through a critical node A, then passes through a critical node B, and finally passes through a critical node C, and during actual transmission, the service data also first passes through the critical node A, then passes through the critical node B, and finally passes through the critical node C, and cannot first pass through the critical node C, then pass through the critical node B, and finally pass through the critical node A, or cannot directly reach the critical node C after skipping the critical node B, or cannot additionally pass through a critical node D before passing through the critical node C. In some implementations of this application, a path planning party determines a vector commitment based on sequential positions of N critical nodes on an expected forwarding path, a forwarding node determines a proof of transit based on the sequential position of the critical node, and a verification node verifies the proof of transit based on the vector commitment and the sequential position of the critical node, so that both the vector commitment and the proof of transit are bound to the sequential position of the critical node. Based on this, only a proof of transit determined by using a correct sequential position of a critical node can pass verification, and a third party cannot forge a correct proof of transit because it is difficult for the third party to obtain a correct sequential position of a critical node. This implements correctness of an identity of a critical node.

In some implementations of this application, a vector commitment is obtained by combining a sequential position of a critical node with identity information of the critical node, so that the vector commitment is related to both the identity information of the critical node and the sequential position of the critical node. Therefore, when a proof of transit is verified based on the vector commitment, only a proof of transit generated when a sequential relationship is correct and identity information is correct can pass verification. Based on this, if a path planning party specifies that service data passes through a first critical node and an i^{th} critical node that the service data passes through is the first critical node, a correct proof of transit p_i can only be computed by using correct identity information of the first critical node and a correct sequential position (i) of the first critical node, and the proof of transit cannot be forged by others. On the contrary, if the service data skips an expected critical node or passes through a redundant and unexpected critical node during actual forwarding, when the service data is transmitted to a downstream critical node of the skipped critical node or the redundant critical node, a sequential position of the downstream critical node is inconsistent with an expected sequential position, and a proof of transit obtained at the downstream critical node fails verification. This can implement both correctness of an identity of a critical node and correctness of a sequential relationship between critical nodes.

For example, if an expected forwarding path is critical node A→critical node B→critical node C→critical node D, an expected sequential position of the critical node A is 1, an expected sequential position of the critical node B is 2, an expected sequential position of the critical node C is 3, and an expected sequential position of the critical node D is 4. When service data is actually forwarded hop by hop along the expected forwarding path, a proof of transit 1 obtained based on an identity of the critical node A and the expected sequential position (1) of the critical node A, an identity of the critical node B and the expected sequential position (2) of the critical node B, an identity of the critical node C and the expected sequential position (3) of the critical node C, or an identity of the critical node D and the expected sequential position (4) of the critical node D can pass verification. If the critical node C that is expected to pass through is skipped during forwarding, an actual forwarding path 2 is critical node A→critical node B→critical node D. For example, for the critical node D, the critical node D obtains a proof of transit 2 based on an actual sequential position (3) and the identity (D). Because the actual sequential position (3) and the identity (D) on which the proof of transit 2 is based do not match, the proof of transit 2 fails verification. For another example, if a redundant, unspecified node is traversed, a redundant critical node E is added to the forwarding path 1, and an actual forwarding path 2 is critical node A→critical node B→critical node C→critical node E→critical node D. If a proof of transit 2 is computed based on an actual sequential position (5) of the critical node D on the forwarding path 2 and the identity (D), and neighbor verification is performed by using an initially generated commitment, because the actual sequential position (5) and the identity (D) on which the proof of transit 2 is based do not match, the proof of transit 2 fails verification.

### (9) Fault tolerance of path validation

Fault tolerance of path validation is a technical effect expected to be achieved in embodiments of this application. Fault tolerance of path validation includes node-level fault tolerance and AS-level fault tolerance.

Fault tolerance of node-level path validation means that service data is allowed to pass through a non-critical node during actual transmission while path locking is implemented, to reduce a risk that service data transmission is interrupted or an alarm is output because verification performed by a downstream critical node of a non-critical node on a proof of transit fails. In other words, there can be one or more critical nodes between two critical nodes on an actual forwarding path, and it is unnecessary to strictly require that a proof of transit passes verification only when a sequential position of each critical node on an expected forwarding path is the same as a sequential position of the corresponding critical node on an actual forwarding path.

A typical application scenario in which fault tolerance for non-critical nodes needs to be achieved is that service data passes through a non-critical node during actual forwarding. For example, a sequence in which the service data is expected to pass through at least two critical nodes is the same as a sequence in which the at least two critical nodes actually forward the service data, and expected sequential positions of the at least two critical nodes are different from sequential positions at which the at least two critical nodes actually forward the service data. For example, an actual forwarding path of a first data packet has an additional non-critical node compared with an expected forwarding path of the first data packet.

In an example, sequential positions of a critical node A and a critical node B on an expected forwarding path are adjacent. However, a tunnel is established between the critical node A and the critical node B during actual transmission of service data, and the critical node A transmits the service data to the critical node B through a series of transit nodes in the tunnel. Consequently, sequential positions of the critical node A and the critical node B on an actual forwarding path are not adjacent.

For example, an expected forwarding path is a layer-3 forwarding path including layer-3 forwarding devices, a critical node B on the layer-3 forwarding path is a next forwarding node of a critical node A, the critical node A actually transmits service data to the critical node B through a layer-2 tunnel, and the layer-2 tunnel traverses one or more layer-2 forwarding devices. Consequently, sequential positions of the critical node A and the critical node B on an actual forwarding path are not adjacent, and each layer-2 forwarding device traversed by the layer-2 tunnel exists between the critical node A and the critical node B on the actual forwarding path.

For another example, an expected forwarding path is an SRv6 path including SRv6 endpoint devices, a critical node B on the SRv6 path is a next SRv6 endpoint device of a critical node A, the critical node A actually transmits service data to the critical node B through an IP layer tunnel, and the IP layer tunnel traverses one or more native (native) IPv6 forwarding devices. Consequently, sequential positions of the critical node A and the critical node B on an actual forwarding path are not adjacent, and each native IPv6 forwarding device traversed by the IP layer tunnel exists between the critical node A and the critical node B on the actual forwarding path.

A main reason why verification performed by a downstream critical node of a non-critical node on a proof of transit fails is that a path planning party computes a vector commitment based on a sequential position of a critical node on an expected forwarding path. If a critical node computes a proof of transit by using a sequential position of the critical node on an actual forwarding path, and verifies the proof of transit by using a vector commitment and the sequential position of the critical node on the actual forwarding path, when the sequential position of the critical node on the actual forwarding path is different from a sequential position of the critical node on an expected forwarding path (for reasons and scenarios of different sequential positions, refer to the following descriptions), a sequential position for computing the vector commitment is different from the sequential position for computing the proof of transit, causing verification performed by the critical node on the proof of transit based on the vector commitment to fail.

In addition, because forwarding nodes that service data passes through during actual transmission are uncertain to some extent, a path planning party usually cannot perceive a sequential position of a critical node on an actual forwarding path, and the path planning party cannot perceive existence of a non-critical node on the actual forwarding path. Consequently, it is difficult for the path planning party to implement fault tolerance by computing a vector commitment by using the sequential position of the critical node on the actual forwarding path.

In view of this, in some implementations of this application, a critical node computes a proof of transit by using a sequential position of the critical node on an expected forwarding path, and verifies the proof of transit by using a vector commitment and the sequential position of the critical node on the expected forwarding path, so that a sequential position for computing the vector commitment is consistent with the sequential position for computing the proof of transit, thereby reducing a risk that service data transmission is interrupted or an alarm is output because verification on the proof of transit based on the vector commitment fails.

### (10) Sequential position of a critical node on an expected forwarding path

The sequential position of the critical node on the expected forwarding path is also referred to as an expected sequential position of the critical node, an expected sequence, or a relative sequential position of the critical node. The sequential position of the critical node on the expected forwarding path represents a sequential relationship between the critical node and another critical node (for example, a 1^{st} critical node) on the expected forwarding path. The sequential position of the critical node on the expected forwarding path can also represent a data packet forwarding sequence of the critical node compared with another critical node on the expected forwarding path. For example, a smaller sequential position of the critical node on the expected forwarding path indicates that the sequential position of the critical node is closer to the 1^{st} critical node on the expected forwarding path, and the critical node performs data packet forwarding earlier than another critical node. On the contrary, a larger sequential position of the critical node on the expected forwarding path indicates that the sequential position of the critical node is closer to a last forwarding node on the expected forwarding path, and the critical node performs data packet forwarding later than another forwarding node.

In some implementations, a data form of the sequential position on the expected forwarding path is a sequence number (also referred to as a serial number). The sequence number representing the sequential position on the expected forwarding path is referred to as an expected sequence number below. For example, the expected sequence number is a positive integer. For example, expected sequence numbers represent a first-to-last sequence in ascending order. For example, for an expected forwarding path that passes through N critical nodes, an expected sequence number of a 1^{st} critical node is 1, and an expected sequence number of a 2^{nd} critical node is 2. By analogy, an expected sequence number of each critical node is 1 greater than that of a previous critical node, and an expected sequence number of an n^{th} critical node is N.

For example, referring to FIG. 1a and FIG. 1b, "A-1" represents that a sequential position (an expected sequence number) of a critical node A on an expected forwarding path is 1, "B-2" represents that a sequential position (an expected sequence number) of a forwarding node B on the expected forwarding path is 2, and "C-3" represents that a sequential position (an expected sequence number) of a forwarding node C on the expected forwarding path is 3. In other words, a sequence, planned by a controller in a path planning phase, in which the three forwarding nodes forward a data packet is that the critical node A forwards the data packet first, the forwarding node B forwards the data packet second, and the forwarding node C forwards the data packet third.

Alternatively, expected sequence numbers of forwarding nodes represent a first-to-last sequence in descending order. A larger expected sequence number of a forwarding node_i indicates that a sequential position of the forwarding node_i is closer to the 1^{st} forwarding node on the expected forwarding path, and the forwarding node_i performs data packet forwarding earlier than another forwarding node.

Certainly, the sequential position of the forwarding node_i on the expected forwarding path and the expected sequence number of the forwarding node_i are not necessarily numerically equal. Alternatively, the sequential position of the forwarding node_i on the expected forwarding path may be computed based on the expected sequence number of the forwarding node_i by using a formula or a table. Alternatively, the sequential position on the expected forwarding path may be in another data form other than a sequence number. Any data that can represent a sequential relationship between critical nodes can be used as the sequential position on the expected forwarding path. A data form used by the sequential position on the expected forwarding path is not limited in embodiments.

In some implementations, the sequential position on the expected forwarding path is determined by a path planning party in a path planning phase. For example, the path planning party allocates a corresponding sequential position to each critical node based on a path planning requirement, to represent a sequential relationship between the critical nodes regarding data packet forwarding.

For a purpose of the sequential position on the expected forwarding path, in some implementations of this application, the sequential position on the expected forwarding path is used to determine a vector commitment, compute a proof of transit, and verify the proof of transit. For example, the sequential position of each critical node on the expected forwarding path is used when a control plane determines the vector commitment or when a forwarding plane computes the proof of transit. For a specific use manner of the sequential position on the expected forwarding path, refer to descriptions in subsequent method embodiments.

### (11) Sequential position on an actual forwarding path

The sequential position on the actual forwarding path represents a sequential relationship between nodes that are passed through on the actual forwarding path. A sequential position of a forwarding node on the actual forwarding path is also referred to as an actual sequential position or a real sequential position of the forwarding node.

In some implementations, a data form of the sequential position on the actual forwarding path is a sequence number (also referred to as a serial number). The sequence number representing the sequential position on the actual forwarding path is referred to as an actual sequence number below. For example, the actual sequence number is a positive integer. For example, actual sequence numbers represent a first-to-last sequence in ascending order. For example, for an actual forwarding path that passes through n forwarding nodes (including a critical node and a non-critical node), an actual sequence number of a 1^{st} forwarding node is 1, and an actual sequence number of a 2^{nd} forwarding node is 2. By analogy, an actual sequence number of each forwarding node is 1 greater than that of a previous forwarding node, and an actual sequence number of an n^{th} forwarding node is n.

For a purpose of the sequential position on the actual forwarding path, in some implementations of this application, the sequential position on the actual forwarding path is used to implement recordability of a non-critical node. For example, the sequential position on the actual forwarding path is added to a data packet by a forwarding node. During data packet forwarding, the data packet carries the sequential position on the actual forwarding path. In some implementations of this application, to avoid a transmission failure caused when verification on a proof of transit determined by using the sequential position on the actual forwarding path fails because the sequential position on the actual forwarding path is inconsistent with a sequential position on an expected forwarding path and the proof of transit determined by using the sequential position on the actual forwarding path does not match a vector commitment determined by using the sequential position on the expected forwarding path, the sequential position on the actual forwarding path is neither used to determine the vector commitment, nor used to compute and verify the proof of transit, thereby achieving fault tolerance for non-critical nodes. Certainly, when fault tolerance for non-critical nodes does not need to be achieved, the sequential position on the actual forwarding path can also be used to determine the vector commitment, compute the proof of transit, and verify the proof of transit.

In some implementations of determining a sequential position on an actual forwarding path, in an internet protocol version 4 (internet protocol version 4, IPv4) network scenario, the sequential position on the actual forwarding path is determined based on a TTL. In an example, a data packet includes an IPv4 header (IPv4 header), the IPv4 header includes time to live (time to live, TTL), and a forwarding node_i identifies a value of the TTL, and obtains a position i of the forwarding node_i on a forwarding path based on the value of the TTL. If an initial value of the TTL is k, because the value of the TTL decreases by 1 each time one node is traversed, when receiving the data packet, the forwarding node_i identifies that the value of the TTL carried in the data packet is n-i, and the node_i determines that the node is an i^{th} node on the forwarding path. In an example, after a 1^{st} forwarding node on the forwarding path receives the data packet, the 1^{st} forwarding node determines, based on the TTL being 255 in the data packet, that a sequential position of the node on the actual forwarding path is: 256-255=1, and the 1^{st} forwarding node updates the TTL in the data packet from 255 to 254 and then forwards the data packet to a 2^{nd} forwarding node. After the 2^{nd} forwarding node on the forwarding path receives the data packet, the 2^{nd} forwarding node determines, based on the TTL being 254 in the data packet, that a sequential position of the node on the actual forwarding path is: 256-254=2, and the 2^{nd} forwarding node updates the TTL in the data packet from 254 to 253 and then forwards the data packet to a 3^{rd} forwarding node. After the 3^{rd} forwarding node on the forwarding path receives the data packet, the 3^{rd} forwarding node determines, based on the TTL being 253 in the data packet, that a sequential position of the node on the actual forwarding path is: 256-253=3, and so on.

In some implementations of determining a sequential position on an actual forwarding path, in an IPv6 network scenario, the sequential position on the actual forwarding path is determined based on a hop limit (hop limit). In an example, a data packet includes an IPv6 header (IPv6 header), the IPv6 header includes a hop limit, and a forwarding node_i identifies a value of the hop limit, and obtains a position i of the forwarding node_i on a forwarding path based on the value of the hop limit. If an initial value of the hop limit is k, because the value of the hop limit decreases by 1 each time one node is traversed, when receiving the data packet, the forwarding node_i identifies that the value of the hop limit carried in the data packet is n-i, and the node_i determines that the node is an i^{th} node on the forwarding path. In an example, after a 1^{st} forwarding node on the forwarding path receives the data packet, the 1^{st} forwarding node determines, based on the hop limit being 255 in the data packet, that a sequential position of the node on the actual forwarding path is: 256-255=1, and the 1^{st} forwarding node updates the hop limit in the data packet from 255 to 254 and then forwards the data packet to a 2^{nd} forwarding node. After the 2^{nd} forwarding node on the forwarding path receives the data packet, the 2^{nd} forwarding node determines, based on the hop limit being 254 in the data packet, that a sequential position of the node on the actual forwarding path is: 256-254=2, and the 2^{nd} forwarding node updates the hop limit in the data packet from 254 to 253 and then forwards the data packet to a 3^{rd} forwarding node. After the 3^{rd} forwarding node on the forwarding path receives the data packet, the 3^{rd} forwarding node determines, based on the hop limit being 253 in the data packet, that a sequential position of the node on the actual forwarding path is: 256-253=3, and so on.

In some implementations of determining a sequential position on an actual forwarding path, in an SFC scenario, the sequential position on the actual forwarding path is determined based on a service index (service index, SI). The service index (SI) is a field in a network service header (network service header, NSH). A value of the SI ranges from 255 to 0. Each time a data packet passes, the SI decreases by 1. After identifying a value of the SI in the NSH, a forwarding node may use a value of 256-SI as a sequential position of the node on the actual forwarding path.

### (12) Difference between a sequential position on an expected forwarding path and a sequential position on an actual forwarding path

A sequential position of a forwarding node_i on an expected forwarding path may be the same as or different from a sequential position of the forwarding node_i on an actual forwarding path. Whether the sequential position of the forwarding node_i on the actual forwarding path is the same as the sequential position of the forwarding node_i on the expected forwarding path mainly depends on whether there is a non-critical node on the actual forwarding path.

In some scenarios, because one or more non-critical nodes are passed through on the actual forwarding path, and these non-critical nodes are not orchestrated by a path planning party into the expected forwarding path, there is a deviation between a sequential position of a forwarding node on the actual forwarding path and a sequential position of the forwarding node on the expected forwarding path. The sequential deviation between the sequential position of the forwarding node on the actual forwarding path and the sequential position of the forwarding node on the expected forwarding path represents a quantity of upstream non-critical nodes of the critical node on the actual forwarding path.

For example, referring to FIG. 1a, a sequential position of a forwarding node B on an expected forwarding path is 2. Because a critical node A and a forwarding node b exist in an upstream of the forwarding node B on an actual forwarding path, and neither the critical node A nor the forwarding node b is orchestrated by a path planning party into the forwarding path, a sequential position of the forwarding node B on the actual forwarding path is 4. A difference between the sequential position (4) of the forwarding node B on the actual forwarding path and the sequential position (2) of the forwarding node B on the expected forwarding path is: 4-2=2, where 2 represents a quantity of upstream non-critical nodes (the critical node A and the forwarding node b) of the forwarding node B. For another example, a sequential position of a forwarding node C on the expected forwarding path is 3. Because the critical node A, the forwarding node b, and a forwarding node c exist in an upstream of the forwarding node C on the actual forwarding path, and none of the critical node A, the forwarding node b, and the forwarding node c is orchestrated by the path planning party into the forwarding path, a sequential position of the forwarding node C on the actual forwarding path is 6. A difference between the sequential position (6) of the forwarding node C on the actual forwarding path and the sequential position (3) of the forwarding node C on the expected forwarding path is: 6-3=3, where 3 represents a quantity of upstream non-critical nodes (the critical node A, the forwarding node b, and the forwarding node c) of the forwarding node C.

Because a non-critical node may be inserted between different critical nodes on the actual forwarding path, two critical nodes that are at consecutive sequential positions on the expected forwarding path are at non-consecutive sequential positions on the actual forwarding path. For example, the expected forwarding path includes a first forwarding node and a second forwarding node that are adjacent in position. A sequential position of the first forwarding node on the expected forwarding path and a sequential position of the second forwarding node on the expected forwarding path are consecutive (for example, a difference between the sequential positions is 1). Because one or more non-critical nodes exist between the first forwarding node and the second forwarding node on the actual forwarding path, values of a sequential position of the first forwarding node on the actual forwarding path and a sequential position of the second forwarding node on the actual forwarding path are non-consecutive, and a deviation between the sequential positions of the first forwarding node and the second forwarding node on the actual forwarding path represents a quantity of non-critical nodes between the first forwarding node and the second forwarding node.

For example, referring to FIG. 1a, sequential positions of the critical node A and the forwarding node B on the expected forwarding path are respectively 1 and 2, and the sequential positions of the critical node A and the forwarding node B on the expected forwarding path are consecutive. Because two non-critical nodes (a node a and the node b) are inserted between the critical node A and the forwarding node B on the actual forwarding path, sequential positions of the critical node A and the forwarding node B on the actual forwarding path are respectively 1 and 4, the sequential positions of the critical node A and the forwarding node B on the actual forwarding path are non-consecutive, and a deviation between the sequential positions of the critical node A and the forwarding node B on the actual forwarding path represents a quantity of non-critical nodes between the critical node A and the forwarding node B.

For another example, the sequential positions of the forwarding node B and the forwarding node C on the expected forwarding path are respectively 2 and 3, and the sequential positions of the forwarding node B and the forwarding node C on the expected forwarding path are consecutive. Because one non-critical node (the node c) is inserted between the forwarding node B and the forwarding node C on the actual forwarding path, the sequential positions of the forwarding node B and the forwarding node C on the actual forwarding path are respectively 4 and 6, the sequential positions of the forwarding node B and the forwarding node C on the actual forwarding path are non-consecutive, and a deviation between the sequential positions of the forwarding node B and the forwarding node C on the actual forwarding path represents a quantity of non-critical nodes between the forwarding node B and the forwarding node C.

In some implementations, a sequence of at least two critical nodes on the expected forwarding path is the same as a sequence of the critical nodes on the actual forwarding path, and sequential positions of the at least two critical nodes on the expected forwarding path are different from sequential positions of the critical nodes on the actual forwarding path. In other words, the sequence of the at least two critical nodes is not disordered, but a non-critical node is inserted between different critical nodes. In a specific example, referring to FIG. 1a, a sequence of the critical node A, the forwarding node B, and the forwarding node C on the expected forwarding path is: critical node A→forwarding node B→forwarding node C. Referring to FIG. 1b, a sequence of the critical node A, the forwarding node B, and the forwarding node C on the actual forwarding path is also: critical node A→forwarding node B→forwarding node C. However, the sequential position (2) of the forwarding node B on the expected forwarding path is different from the sequential position (4) of the forwarding node B on the actual forwarding path, and the sequential position (3) of the forwarding node C on the expected forwarding path is different from the sequential position (6) of the forwarding node C on the actual forwarding path.

### (13) Recordability of a non-critical node

Recordability of a non-critical node is a technical effect expected to be achieved in embodiments of this application. Recordability of a non-critical node is a function of recording that a data packet has passed through a non-critical node in a scenario in which the data packet passes through the non-critical node during forwarding. In some implementations, recordability of a non-critical node is implemented by recording a sequential position of a critical node on an actual forwarding path. For example, based on recorded sequential positions of two adjacent critical nodes on the actual forwarding path being non-consecutive, it is determined that there is a non-critical node between the two critical nodes. Based on a difference between recorded sequential positions of two adjacent critical nodes on the actual forwarding path, a quantity of non-critical nodes between the two critical nodes is determined. For example, if a difference between recorded sequential positions of two adjacent critical nodes on the actual forwarding path is k, it is determined that there are k-1 non-critical nodes between the two critical nodes.

There are a plurality of implementations of recording a position of a non-critical node. In some implementations, in a process of forwarding a data packet, critical nodes add a list of sequential positions of the critical nodes on an actual forwarding path to the data packet, to implement recordability of a non-critical node. In some other implementations, critical nodes send a packet that is independent of a data packet and that carries a list of sequential positions of the critical nodes on an actual forwarding path, to implement recordability of a non-critical node. In still some other implementations, critical nodes store a list of sequential positions of the critical nodes on an actual forwarding path in locally stored log records.

For example, referring to FIG. 1a and FIG. 1b, a critical node A, a critical node B, and a critical node C are three adjacent critical nodes. The critical node A adds a sequential position 1 of the node on an actual forwarding path to a data packet. The critical node B adds a sequential position 4 of the node on the actual forwarding path to the data packet, and the critical node B determines, based on a difference between sequential positions of the node and a previous critical node (the critical node A) on the actual forwarding path being 4-1=3, that there are two non-critical nodes between the node and the previous critical node. The critical node C adds a sequential position 6 of the node on the actual forwarding path to the data packet, and the critical node C determines, based on a difference between sequential positions of the node and a previous critical node (the critical node B) on the actual forwarding path being 6-4=2, that there is one non-critical node between the node and the previous critical node.

### (14) Vector commitment

For ease of understanding, the following first explains and describes a general definition of the "vector commitment" in cryptography, and then further explains and describes the "vector commitment" with reference to an application scenario of a trusted path in embodiments of this application.

The vector commitment is a type of data obtained by using a cryptography technology. The vector commitment is used to prove correctness of a value and a position of each piece of information in a set of ordered information (for example, a vector, an array, or a list including at least two elements) while supporting maintaining information concealment, usually without a need of exposing original information content. Specifically, the vector commitment allows each piece of information in the set of ordered information to be committed and a corresponding proof to be generated, and another participant may verify the proof to confirm integrity of the ordered information. The vector commitment is usually used for a zero-knowledge proof. The vector commitment mainly includes three phases: commit (commit), open (open), and verify (verify).

The commit phase is a vector commitment computation phase. For example, an entity A secretly selects N pieces of ordered information, namely, information M=(m_1, m_2, ..., m_N), at a time, then computes a commitment (commitment) based on the information M, and makes the commitment public. The commitment includes the information M and a sequential relationship between the N pieces of information in the information M. However, the outside cannot infer plaintext of the N pieces of information by using the commitment, and cannot infer a position corresponding to each of the N pieces of information by using the commitment. Generally, after the commitment is computed based on the information M, the entity A cannot modify the information M. Vector commitment computation may be implemented by using a commit function.

The open phase is a proof computation phase. A proof is used to prove information at a specific position. Specifically, the entity A computes an opening proof (opening proof, OP), and makes the opening proof public to the outside, to prove, by using the opening proof, that information originally committed at a position i is m_i. Proof computation is implemented by using an open function. The open function includes a single-point open (open) function and a batch open (batch open) function.

The single-point open (open) function means that the entity A computes a single-point opening proof (opening proof, OP) for a single position i, and can prove, by using the single-point opening proof, that information at the position i is m_i.

The batch open function means that the entity A computes a multi-point opening proof (multiproof, MP) at a time, and the multi-point opening proof is used to prove that a set of a plurality of pieces of information m_i is B, where each piece of m_i is at a corresponding position i. The multi-point opening proof may be used to simultaneously verify information at a plurality of positions. Computation complexity of the multi-point proof is usually higher than that of the single-point proof. For a computation method of the multi-point proof, refer to the following link:
[https://github.com/khovratovich/Kate/blob/66aae66cd4e99db3182025c27f02e147dfa 0c034/Kate_amortized.pdf][KZG].

The verify phase is a proof verify phase. For example, a verifier uses a commitment and an opening proof to verify that an object initially committed or selected by the entity A is indeed the information M. Verification is implemented by using a verify function. Verification includes single verification and batch verification (batch verify).

Single verification means that for a single-point opening proof (OP_i), the verifier may use a commitment, the single-point opening proof OP_i, and corresponding m_i to verify whether information at a position i is consistent with that declared by the single-point opening proof.

Batch verification means that for a multi-point opening proof, the verifier may use a commitment C, the multi-point opening proof MP_B, and a set B to verify whether information at a plurality of positions is consistent with that declared by the opening proof.

For details about the vector commitment, refer to the paper "Constant-Size Commitments to Polynomials and Their Applications". Actual algorithms defined in the paper for the vector commitment include but are not limited to setup, commit, open, create witness, verifyeval, create witness batch, verify eval batch, and the like.

In an application scenario of embodiments of this application, the vector commitment is used to prove correctness of identity information and a sequential position of a forwarding node on an actual forwarding path. For example, a path planning party serves as the entity A in the vector commitment technology, the information M represents a trusted path (an expected forwarding path) P=(r_1, r_2, ..., r_i, ..., r_N), the information m_i in the information M represents identity information r_i of a critical node i, i is an expected sequence number of the critical node on the expected forwarding path, the set B represents a path segment of the trusted path (the expected forwarding path), and the proof in the vector commitment is specifically a proof of transit. A most important property of the vector commitment is order-preserving, that is, the information m_i of the commitment and the opening proof needs to be bound to the position i.

Embodiments of this application relate to application of a vector commitment in device-level path validation and application of a vector commitment in AS-level path validation. To distinguish between different vector commitments, a "first vector commitment" or a "device-level vector commitment" is used to describe a vector commitment applied in device-level path validation, and a "second vector commitment" or an "AS-level vector commitment" is used to describe a vector commitment applied in AS-level path validation. The device-level vector commitment is obtained, for example, based on identity information of each forwarding node on an expected forwarding path and a sequential relationship between the forwarding nodes on the expected forwarding path. The AS-level vector commitment is obtained, for example, based on identity information of each AS traversed by an expected forwarding path and a sequential relationship between the ASs traversed by the expected forwarding path.

### (15) KZG polynomial commitment

The KZG polynomial commitment is a specific construction manner of a vector commitment mechanism with a good property. The polynomial commitment can be for committing N points (for example, N pieces of identity information) on a curve of a polynomial at a time, and externally proving and verifying, by using constant time, that one or N points (for example, the N pieces of identity information) are on the polynomial, and an amount of committed data and a data amount of each proof of transit each are a constant O(1). In the polynomial commitment, information m_i is converted into a form of a point (x_i, y_i) for storage, that is, information M is converted into <(x_1, y_1), (x_2, y_2), ..., (x_N, y_N)>, where x_i=i, and y_i=m_i. x_i represents position information of a forwarding node. For example, x_i is a subscript (usually an integer 1, 2, 3, ..., that is, x_i=i). y_i represents identity information of the forwarding node. The KZG polynomial commitment can be for implementing that commitment computation time for committing N pieces of information by an entity A at a time, time for computing a single opening proof or a plurality of opening proofs by others, time for verifying the N pieces of information by the others at a time, and the like are all sublinear time (actually constant time).

### (16) Proof of transit

Embodiments of this application relate to application of a proof of transit in device-level path validation and application of a proof of transit in AS-level path validation. To distinguish between different proof of transits, a "first proof of transit" or a "device-level proof of transit" is used to describe a proof of transit applied in device-level path validation, and a "second proof of transit" or an "AS-level proof of transit" is used to describe a proof of transit applied in AS-level path validation. The node-level proof of transit is used to prove that a specific node forwards a data packet at a specific sequential position on a forwarding path. The AS-level proof of transit is used to prove that a specific AS forwards a data packet at a specific sequential position on a forwarding path. The proof of transit includes a single-point proof of transit (OP) and a multi-point proof of transit (MP).

The OP represents a proof of transit related to a single forwarding node, and is used to prove that a single specific node forwards a data packet at a specific sequential position corresponding to the specific node on a forwarding path. Alternatively, the OP represents a proof of transit related to a single AS, and is used to prove that a single specific AS forwards a data packet at a specific sequential position corresponding to the specific node on a forwarding path.

The MP (multiproof) represents a proof of transit related to a plurality of forwarding nodes, and is used to prove that each node on a specific path segment forwards a data packet at a corresponding sequential position. For example, for an expected forwarding path: critical node A→critical node B→critical node C→critical node D, the OP includes an OP of the critical node A, an OP of the critical node B, an OP of the critical node C, and an OP of the critical node D, and the MP includes an MP of a path AB, an MP of a path ABC, and an MP of a path ABCD. Alternatively, the MP represents a proof of transit related to a plurality of ASs, and is used to prove that the plurality of ASs respectively forward a data packet at corresponding specific sequential positions on a forwarding path.

A manner of obtaining a single-point proof of transit is obtaining a single-point proof of transit of a to-be-verified node based on a sequential position of a single critical node, namely, the to-be-verified node, on an expected forwarding path and identity information of the single critical node, namely, the to-be-verified node.

The single-point proof of transit of the to-be-verified node is used to prove that the to-be-verified node forwards a data packet A and the sequential position of the to-be-verified node is correct. An example in which the to-be-verified node is a critical node A is used. The critical node A obtains a proof of transit A based on identity information of the critical node A, a sequential position of the critical node A on the expected forwarding path, and a cryptographic parameter, where the proof of transit A is a single-point proof of transit, and the proof of transit A is used to prove that the critical node A forwards the data packet at the expected sequential position. Optionally, the critical node A obtains the single-point proof of transit A by using a single-point open function (open), that is, single-point proof of transit A=open(i, r_i).

A manner of obtaining a multi-point proof of transit is obtaining a multi-point proof of transit based on sequential positions of at least two critical nodes on an expected forwarding path and identity information of the at least two critical nodes.

For example, a to-be-verified node obtains a first proof of transit based on a sequential position of the to-be-verified node on the expected forwarding path, identity information of the to-be-verified node, a sequential position of a second forwarding node on the expected forwarding path, and identity information of the second forwarding node, where the identity information of the second forwarding node indicates an identity of the second forwarding node, and the first proof of transit is used to prove that the to-be-verified node and the second forwarding node are respectively at the corresponding sequential positions on the expected forwarding path.

An example in which the to-be-verified node is a critical node i is used. For example, the critical node i obtains a proof of transit p_i based on identity information of each node from a critical node 1 to the critical node i, a sequential position of each critical node from the critical node 1 to the critical node i on the expected forwarding path, and a cryptographic parameter, where the proof of transit p_i is a multi-point proof of transit, and the proof of transit p_i is used to prove that the critical node 1 forwards a data packet at a sequential position 1, the critical node 2 forwards the data packet at a sequential position 2, ..., and the critical node i forwards the data packet at a sequential position i. Optionally, the critical node i obtains the proof of transit p_i by using a batch open function (batch open), that is, p_i=batchopen(r_1, ..., r_i).

Regardless of a single-point proof of transit or a multi-point proof of transit, sequential positions used for determining the proof of transit and verifying the proof of transit are sequential position on an expected forwarding path, instead of sequential positions on an actual forwarding path. FIG. 1a and FIG. 1b are used as an example. Sequential positions of three critical nodes that are used for determining a proof of transit and verifying the proof of transit are expected consecutive sequential positions 1, 2, and 3, instead of actual non-consecutive sequential positions 1, 4, and 6. Because sequential positions on an actual forwarding path do not participate in a process of determining a proof of transit and verifying the proof of transit, a risk of transmission interruption caused by determining the proof of transit and verifying the proof of transit based on the sequential positions on the actual forwarding path is reduced.

A proof of transit of a to-be-verified node includes a single-point proof of transit and a multi-point proof of transit. The following describes a manner of obtaining a single-point proof of transit and a manner of obtaining a multi-point proof of transit respectively by using examples. In some implementations, either the manner of obtaining a single-point proof of transit or the manner of obtaining a multi-point proof of transit is used.

The manner of obtaining a single-point proof of transit is obtaining a single-point proof of transit of a to-be-verified node based on a sequential position of a single critical node of the to-be-verified node on an expected forwarding path and identity information of the single critical node of the to-be-verified node.

The single-point proof of transit of the to-be-verified node is used to prove that the to-be-verified node forwards a data packet A and the sequential position of the to-be-verified node is correct. An example in which the to-be-verified node is a critical node A is used. The critical node A obtains a proof of transit A based on identity information of the critical node A, a sequential position of the critical node A on the expected forwarding path, and a cryptographic parameter, where the proof of transit A is a single-point proof of transit, and the proof of transit A is used to prove that the critical node A forwards the data packet at the expected sequential position. Optionally, the critical node A obtains the single-point proof of transit A by using a single-point open function (open), that is, single-point proof of transit A=open(i, r_i).

The manner of obtaining a multi-point proof of transit is obtaining a multi-point proof of transit based on sequential positions of at least two critical nodes on an expected forwarding path and identity information of the at least two critical nodes.

For example, a to-be-verified node obtains a first proof of transit based on a sequential position of the to-be-verified node on the expected forwarding path, identity information of the to-be-verified node, a sequential position of a second forwarding node on the expected forwarding path, and identity information of the second forwarding node, where the identity information of the second forwarding node indicates an identity of the second forwarding node, and the first proof of transit is used to prove that the to-be-verified node and the second forwarding node are respectively at the corresponding sequential positions on the expected forwarding path.

An example in which the to-be-verified node is a critical node i is used. For example, the critical node i obtains a proof of transit p_i based on identity information of each node from a critical node 1 to the critical node i, a sequential position of each critical node from the critical node 1 to the critical node i on the expected forwarding path, and a cryptographic parameter, where the proof of transit p_i is a multi-point proof of transit, and the proof of transit p_i is used to prove that the critical node 1 forwards a data packet at a sequential position 1, the critical node 2 forwards the data packet at a sequential position 2, ..., and the critical node i forwards the data packet at a sequential position i. Optionally, the critical node i obtains the proof of transit p_i by using a batch open function (batch open), that is, p_i=batchopen(r_1, ..., r_i).

Regardless of a single-point proof of transit or a multi-point proof of transit, sequential positions used for determining the proof of transit and verifying the proof of transit are sequential position on an expected forwarding path, instead of sequential positions on an actual forwarding path. FIG. 1a and FIG. 1b are used as an example. Sequential positions of three critical nodes that are used for determining a proof of transit and verifying the proof of transit are expected consecutive sequential positions 1, 2, and 3, instead of actual non-consecutive sequential positions 1, 4, and 6. Because sequential positions on an actual forwarding path do not participate in a process of determining a proof of transit and verifying the proof of transit, a risk of transmission interruption caused by determining the proof of transit and verifying the proof of transit based on the sequential positions on the actual forwarding path is reduced.

For brevity, in the following embodiments of this application, a form of "OP+underline+position" is sometimes used to simplify a single-point proof of transit computed by a node at a specific sequential position, and a form of "MP+underline+position" is used to simplify a multi-point proof of transit computed by a node at a specific sequential position. For example, OP_i represents a single-point proof of transit computed by an i^{th} critical node on an actual forwarding path, and MP_i represents a multi-point proof of transit computed by an i^{th} critical node on a forwarding path.

### (17) Identity information of a forwarding node

Identity information of a forwarding node_i indicates an identity of the forwarding node_i. The identity information of the forwarding node_i is, for example, an identifier of the forwarding node_i.

In some implementations, the identity information of the forwarding node is publicly verifiable identity information. The publicly verifiable identity information is used to compute and verify a proof of transit, to reduce difficulty in obtaining the identity information, thereby reducing complexity of computing and verifying the proof of transit based on the identity information. In some other possible implementations, the identity information of the forwarding node_i is a publicly verifiable and unforgeable identity proof that can be obtained only by the forwarding node_i through computation and that can be verified by a plurality of parties. For example, the identity information of the forwarding node_i includes identity information obtained through encryption based on a key of the forwarding node_i. Optionally, the identity information obtained through encryption based on the key of the forwarding node_i is identity information obtained through encryption based on a symmetric key of the forwarding node_i; or the identity information obtained through encryption based on the key of the forwarding node_i is identity information obtained through encryption based on a private key of the forwarding node_i. The encrypted identity information is used to compute or verify the proof of transit. Because the identity information has higher security and privacy, security and privacy of computing and verifying the proof of transit are further improved.

For example, the identity information of the forwarding node_i includes an address of the forwarding node_i. The address used as the identity information of the forwarding node_i is optionally an IP address of the forwarding node_i. For example, the address used as the identity information of the forwarding node_i is an IPv4 address of the forwarding node_i or an IPv6 address of the forwarding node_i. Alternatively, the address used as the identity information of the forwarding node_i is a media access control (media access control, MAC) address of the forwarding node_i.

For example, the identity information of the forwarding node_i includes a segment identifier (segment ID, SID) of the forwarding node_i. The SID is an identifier used in an SRv6 (segment routing over IPv6) network, and is used to define a function or an instruction in the network. The SID is in a form of an IPv6 address, and has 128 bits. The SID is used as the identity information to compute and verify the proof of transit. This is more applicable to an SRv6 network scenario. When path binding is implemented, a SID carried in SRv6 encapsulation may be reused, and no additional field needs to be added to a packet to carry identity information. This helps simplify a packet format and reduce packet transmission overheads.

For example, the identity information of the forwarding node_i includes an MPLS label of the forwarding node_i. The MPLS label is a short and fixed-length connection identifier, and is used to replace an IP for forwarding in an MPLS network or an SR-MPLS network. The MPLS label is used as the identity information to compute and verify the proof of transit. This is more applicable to an MPLS network or SR-MPLS network scenario. When path binding is implemented, an MPLS label carried in MPLS encapsulation or SR-MPLS encapsulation may be reused, and no additional field needs to be added to a packet to carry identity information. This helps simplify a packet format and reduce packet transmission overheads.

For example, the identity information of the forwarding node_i includes a certificate of the forwarding node_i. The certificate is a digital credential or an electronic document, and is used to prove an identity or permission of an entity. The certificate is issued by a trusted third-party authority, for example, a digital certificate authority (certificate authority, CA for short), and includes identity information (for example, a public key) for verifying and identifying a specified entity. Content of the certificate includes a public key, certificate holder information (for example, a name and an organization), a certificate validity period, and the like. The certificate is used as the identity information to compute and verify the proof of transit. Because authenticity and integrity of the certificate can be verified, this helps reduce a risk caused by tampering, eavesdropping, or forging of the identity information, and further improves the security and trustworthiness of the proof of transit.

For example, the identity information of the forwarding node_i includes the key of the forwarding node_i. For example, the identity information of the forwarding node_i includes a public key of the forwarding node_i. For another example, the identity information of the forwarding node_i includes the private key of the forwarding node_i.

For example, the identity information of the forwarding node_i includes an access control token (token) of the forwarding node_i. The access control token is a digital credential for verifying access permission on a protected resource. The access control token includes authorization information and access permission information of the forwarding node. The access control token may be generated by an access control server and issued to the forwarding node. The access control token is used as the identity information to compute and verify the proof of transit. Because each forwarding node can verify validity and permission of the access control token, a risk of tampering with the identity information and leaking data is reduced, and the security and trustworthiness of the proof of transit are further improved.

For example, the identity information of the forwarding node_i includes a router identifier (router ID) of the forwarding node_i.

For example, the identity information of the forwarding node_i includes a host name of the forwarding node_i.

For example, the identity information of the forwarding node_i includes a signature of the forwarding node_i. For example, the forwarding node_i encrypts the identity information of the forwarding node_i by using the private key of the forwarding node_i, to generate the signature of the forwarding node_i. The signature of the forwarding node_i is used as the identity information to compute and verify the proof of transit, so that a risk of tampering with the identity information and leaking data is reduced, and the security and trustworthiness of the proof of transit are further improved.

For example, the identity information of the forwarding node_i includes a message authentication code (message authentication code, MAC) tag (tag). The MAC tag is an authentication code for verifying message integrity and authenticity. The MAC tag is a fixed-length value obtained by encrypting and computing a message, so that the probability of a message being tampered with or forged during transmission is reduced. For example, the forwarding node_i performs an operation by using a shared key and message content between the forwarding node_i and another forwarding node on a forwarding path to generate the MAC tag, and uses the MAC tag as the identity information to compute and verify the proof of transit, so that the probability of the proof of transit being tampered with or forged is further reduced, and the security and trustworthiness of the proof of transit are enhanced.

For example, the identity information of the forwarding node_i includes a zero-knowledge (non-interactive zero-knowledge, NIZK) proof. The zero-knowledge is a cryptography technology for proving authenticity of a statement without disclosing information behind the statement. The proof allows a prover to present a proof of a fact to a verifier without disclosing any other information related to the fact. The zero-knowledge proof used as the identity information is, for example, a Schnorr proof. The Schnorr proof, proposed by Claude Schnorr, is a zero-knowledge NIZK proof protocol based on a discrete logarithm problem. The NIZK proof is used as the identity information to compute and verify the proof of transit, so that a real identity of the forwarding node can be hidden, and the probability of the real identity of the forwarding node being disclosed is reduced. In addition, the NIZK proof used as the identity information can be verified, so that the probability of the proof of transit being tampered with or forged is further reduced, and the security and trustworthiness of the proof of transit are enhanced.

For example, the identity information of the forwarding node_i includes a Sigma protocol proof. The Sigma protocol proof is an interactive protocol based on a zero-knowledge proof (zero-knowledge proof), and allows a prover to prove that a statement is true in interaction with a verifier without disclosing real information of the statement. In the Sigma protocol proof, the prover and verifier interact with each other for a plurality of rounds to implement mutual authentication. The prover attempts to prove authenticity of a statement to the verifier, and the verifier wishes to confirm the authenticity of the statement, and believes that the prover indeed can prove the statement. However, a special property of the protocol is that the prover cannot disclose real information of a statement to the verifier, so that privacy of the prover is protected.

### (18) Segment list

The segment list is information indicating an expected forwarding path in an SRv6 scenario. The segment list includes a series of SIDs, and each SID represents one node or link in a network. Arrangement in the segment list is in a reverse order, that is, the SIDs in the segment list are arranged in an order from a tail node to a critical node 1 on a forwarding path. A segment list [0] indicates a SID corresponding to the tail node on the forwarding path, a segment list [1] indicates a SID corresponding to a penultimate node on the forwarding path, and by analogy, a segment list [N] indicates a SID corresponding to the critical node 1 on the forwarding path.

### (19) Time to live (time to live, TTL)

The TTL is a field in a packet header in an IPv4 protocol (IPv4 header), and is used to limit transmission time or a hop count of a data packet in a network. The TTL is represented in a form of an integer. Each time the data packet passes through one forwarding node, the TTL decreases by 1. When a value of the TTL decreases to 0, the data packet is discarded, and a timeout message is returned to a source node. The TTL is located in a 9^{th} byte of the IPv4 header, and occupies one byte (8 bits), for storing a value of the TTL.

### (20) Hop limit (hop limit)

In an IPv6 protocol, a TTL is referred to as a hop limit (hop limit), and the hop limit is carried in a field in an IPv6 header (IPv6 header). The hop limit is equivalent to the TTL in IPv4, and is used to limit a hop count of a data packet in a network. The hop limit is located in a 7^{th} byte of the IPv6 header, and occupies one byte (8 bits), for storing a value of the hop limit.

### (21) Autonomous system (autonomous system, AS)

The AS is a group of network devices having a same routing policy, and these network devices are managed by a same entity. Each AS is allocated an AS number (autonomous system number) on an internet, so that another network device can search for a corresponding AS based on an AS number. For brevity, in the following embodiments of this application, a form of "AS+number" is used to simplify a specific AS. For example, an AS is simplified as an AS 1.

### (22) Identity information of an AS

The identity information of the AS indicates an identity of the AS. For example, the identity information of the AS is an AS number or a secret value of the AS. The AS number (autonomous system number) is also referred to as an AS identifier or an AS serial number. The AS number is a positive integer. The AS number ranges from 1 to 65535. Each AS has a unique AS number. The AS number can uniquely identify an AS on the internet. The secret value of the AS is ciphertext data obtained by encrypting the AS number. For example, the AS number is encrypted based on a key that is preset in each forwarding device in the AS, to obtain the secret value of the AS.

### (23) Autonomous system path (autonomous system path, AS_path)

The AS_path is a path attribute in a BGP protocol. The AS_path is usually carried in a BGP protocol packet. The AS_path is used to record ASs traversed during transmission from a source AS to a destination AS. The AS_path includes a series of AS numbers for describing all recorded ASs that the BGP protocol packet passes through from the source AS to the destination AS. A pair of adjacent ASs in the AS_path represents two ASs having an upstream-downstream relationship on the forwarding path. A sequential relationship between the ASs from the source AS to the destination AS can be determined based on the AS_path. For example, one BGP protocol packet includes an address prefix P1 and an AS_path, and the AS_path is [AS 3 AS 1 AS 6], indicating that the address prefix P1 is originated from the AS 6, then the address prefix P1 passes through the AS 1, and finally the address prefix P1 reaches the AS 3. It can be determined from the AS_path that when a data packet whose source address matches the address prefix P1 is forwarded, a sequential relationship between the three ASs, namely, the AS 3, the AS 1, and the AS 6, is AS 6→AS 1→AS 3. For details about the definition, format, and usage of the AS_path, refer to Section 4.3 "Path Attributes" in RFC 4271.

### (24) AS list

The AS list includes identity information of at least two ASs. For example, the AS list includes identity information of an AS in which each critical node passed through on an expected forwarding path is located. In addition, the AS list further indicates an expected forwarding sequence of the at least two ASs. For example, an arrangement sequence of the identity information of the ASs in the AS list matches the expected forwarding sequence of the ASs. A sequential position of identity information of an AS in the AS list identifies a sequential position of the AS in the ASs traversed by the expected forwarding path. An example in which identity information of an AS is an AS number is used. For example, a 1^{st} AS number in the AS list identifies a 1^{st} AS traversed by the expected forwarding path, a 2^{nd} AS number in the AS list identifies a 2^{nd} AS traversed by the expected forwarding path, and so on.

The following describes an application scenario and a corresponding method procedure of a device-level path validation method by using examples.

A feature of many source addressing or centralized path computation routing technologies is that a source host or a centralized controller can specify a network path that traverses a series of specific network devices or virtualized network functions. For example, both an SR technology and SFC support a function of specifying a network path on a control plane. However, a challenge is that even if the source host or the centralized controller specifies a path on the control plane, the source host or the centralized controller cannot learn whether a data packet really strictly follows the path on a forwarding plane (data plane). For example, due to network attacks such as route hijack (route hijack), route injection (route injection), and traffic detour (traffic detour), or incorrect configurations of network devices, an actual forwarding path of the data plane may deviate from an expected forwarding path of the control plane.

The route hijack attack is that an attacker hijacks network traffic and/or diverts network traffic to a network device, an AS, or the like controlled by the attacker, for eavesdropping, tampering, interception, or the like. The route hijack attack is also referred to as a prefix hijack attack or an internet protocol (internet protocol, IP) hijack attack. The route injection is inputting forged routing information into a network device such as a router, to enable the forged routing information to be propagated to an entire network. An attacker may change a network routing path through the route injection, causing traffic to be redirected to a path controlled by the attacker. The traffic detour is that an attacker tampers with a configuration of a network device to detour traffic to an expected path, causing the traffic to be redirected to a path specified by the attacker.

Briefly, a problem that needs to be urgently resolved is that the expected forwarding path determined by the control plane is inconsistent with the actual forwarding path of the data plane, and this problem causes a technology such as the SR or the SFC to lose a claimed technical advantage of being able to specifying a path.

In view of this, a trusted path (trusted path) mechanism (or referred to as a secure routing secure routing mechanism or a path validation (path validation) mechanism) emerges to resolve the foregoing problem, so that a data packet can be forwarded hop by hop only along a forwarding path planned by a path planning party, and a publicly verifiable proof of transit can be provided. A complete trusted path mechanism includes two technical parts: a path locking mechanism and a path validation mechanism, which may also be considered as a combination of protocols and methods at two layers, namely, a control plane and a data plane.

Currently, a reliable security-based trusted path mechanism is still lacking both domestically and internationally, and an existing trusted path mechanism has limitations to some extent in security.

For example, if path locking is implemented in a non-cryptographic traversal proof manner, for example, a critical node 1 adds a field with an initial value to a packet header of a data packet, and then each traversed forwarding node adds identity information of the forwarding node to the packet, that is, the identity information of each the forwarding node is used as a proof of transit, in this manner, because there is no strong binding relationship between a proof of transit and a position of a forwarding node on a forwarding path, a proof of transit with strong position binding cannot be generated, for example, it cannot be implemented that only a node at an i^{th} position on the forwarding path can generate an i^{th} proof, causing poor trustworthiness of the proof of transit, and making it very easy to forge and tamper with the proof of transit. For example, if the data packet is not forwarded hop by hop along a specified path, but instead skips nodes along the forwarding path or traverses redundant, unspecified nodes, the proof of transit obtained in such scenarios may still pass verification at a certain probability. This indicates that the trustworthiness of the proof of transit remains insufficient. In addition, even if the data packet carries proofs of all nodes on the path, because the proof is unrelated to the position of the forwarding node on the forwarding path, it cannot be ensured that data is definitely forwarded based on the path. For example, a traversal proof may be added by a device outside the forwarding path after packet forwarding ends. In other words, there is no strong binding relationship between a proof of transit and an actual packet forwarding status. Consequently, the data packet may be randomly forwarded and then given a forged traversal proof, and a traversal proof obtained at a destination is untrusted.

For another example, if path locking is implemented in a cryptographic traversal proof manner, for example, each forwarding node establishes a key pair with one controller, and then each routing node generates a proof with identity binding by using cryptography and then transfers the proof, although forgery is slightly alleviated, a proof of transit with strong position binding cannot be generated because a position of the forwarding node on the forwarding path is not considered when the proof of transit is obtained. Consequently, there is a problem that is the same as that in the non-cryptographic traversal proof manner: A proof of transit and an actual forwarding status of a data packet are unrelated to each other and have no strong binding relationship, the data packet may be randomly forwarded and then associated with the forwarding node, and a forged traversal proof is added at a tail node. Consequently, a traversal proof obtained from the tail node is untrusted, and it cannot be ensured that forwarding is definitely performed based on a specified forwarding path in a transit process.

Based on the foregoing problem, some implementations of this application provide a solution based on a proof of transit and a vector commitment, to help resolve a forwarding path locking mechanism and a forwarding path validation mechanism in a trusted network.

In some implementations, a proof of transit is obtained based on a sequential position of a forwarding node on an actual forwarding path and identity information of the forwarding node, and the proof of transit is verified based on a vector commitment, the actual sequential position of the forwarding node on the forwarding path, and the identity information of the forwarding node, to implement position binding of the proof of transit. In other words, the proof of transit is related to both an identity of the forwarding node and the position of the forwarding node on the forwarding path. Therefore, a correct proof of transit can be computed only by a correct node when a data packet is forwarded to a correct position on a forwarding path, ensuring strong binding between the proof of transit and an actual forwarding status of the data packet, and the proof of transit is tamper-resistant and publicly verifiable, thereby resolving poor proof trustworthiness caused because the proof of transit is unrelated to the position of the forwarding node on the forwarding path. The foregoing implementation helps strictly lock an expected forwarding path planned by a path planning party, and then verify whether an actual forwarding status of a data packet strictly corresponds to the expected forwarding path.

Although absolute order-preserving is implemented in the foregoing implementation, path validation may be highly strict. For example, this manner requires that each forwarding node passed through on the actual forwarding path supports computation of a proof of transit, and does not allow existence of any form of node that "forwards a data packet but does not compute a proof of transit" on the actual forwarding path. However, in an IP network, there are many weak-capability or outdated network devices, or devices manufactured by third-party network vendors that do not support functions. These forwarding nodes are not necessarily subjectively malicious, but do not cooperate in computing a proof of transit. In embodiments, these forwarding nodes are defined as non-critical nodes. In consideration of compatibility and availability, fault tolerance needs to be performed on these non-critical nodes. For example, a non-critical node is tolerable to be inserted between critical nodes, or a transparent tunnel is tolerable to be between critical nodes, and transmission is not interrupted because a non-critical node is traversed. How to enable the forwarding path locking mechanism and the forwarding path validation mechanism to support fault tolerance on a non-critical node is a main effect of embodiments.

Optionally, how to enable the forwarding path locking mechanism and the forwarding path validation mechanism to support recordability of a non-critical node is also an effect to be implemented in embodiments. The following separately explains and describes technical means corresponding to several effects expected to be implemented in embodiments of this application.

### Technical effect 1: Forwarding path locking

In some implementations, critical path binding is implemented by using a cryptography technology, namely, a vector commitment. In embodiments, Technical effect 1 is implemented by using an order-preserving property of the vector commitment. For example, in a commit phase, a path control party obtains, based on a sequential position of each critical node on an expected forwarding path and identity information of each critical node, a vector commitment by using a commit function in the vector commitment technology. In an open phase, when sequentially receiving a data packet, each critical node sequentially computes a proof of transit based on the sequential position of the critical node and the identity information of the critical node by using an open function in the vector commitment technology. The critical node or a verification node verifies the proof of transit based on the vector commitment, the sequential position of the critical node, and the identity information of the critical node by using a verify function in the vector commitment technology.

In some implementations, when sequentially receiving a data packet, each critical node obtains, based on a single-point open function, a proof of transit OP related to the single critical node, and externally publishes the proof of transit OP related to the single critical node. The critical node or an external verification node verifies, based on a single verify function, the proof of transit OP related to the single critical node, to verify whether an actual sequence of a traversed critical node is consistent with an expected sequence of the critical node. In another possible implementation, when sequentially receiving a data packet, each critical node obtains, based on a multi-point open function, a proof of transit MP related to a plurality of critical nodes, and verifies, based on a batch verify function, the proof of transit MP related to the plurality of critical nodes, to verify at a time whether a sequence of the plurality of critical nodes is consistent with an expected sequence of the plurality of critical nodes.

### Technical effect 2: Source correctness

Source correctness is verifying correctness of a source of a data packet. Source correctness includes previous-hop correctness and upper-half path correctness.

Previous-hop correctness is, for example, when a critical node i receives a data packet_i, the critical node i verifies, based on a vector commitment, a proof of transit of a previous hop i-1 that is carried in the data packet_i. If the proof of transit of the previous hop i-1 fails verification, it is determined that the previous hop of the data packet is incorrect. If the proof of transit of the previous hop i-1 passes verification, it is determined that the previous hop of the data packet is correct.

Upper-half path correctness is, for example, when a critical node i receives a data packet_i, the critical node i verifies, based on a vector commitment, a proof of transit, carried in the data packet_i, from a 1^{st} node to a previous hop i-1. If the proof of transit from the 1^{st} node to the previous hop i-1 fails verification, it is determined that an upper-half path of the data packet is incorrect. If the proof of transit from the 1^{st} node to the previous hop i-1 passes verification, it is determined that an upper-half path of the data packet is correct.

The following describes a specific implementation of implementing source correctness by using an example.

Manner of verifying previous-hop correctness: A single-point proof of transit (OP) is verified based on position information of a single critical node and identity information of the single critical node. For example, a data packet received by a critical node i carries a single-point proof of transit related to a critical node_k, and the critical node i verifies the single-point proof of transit of the critical node_k based on a vector commitment, identity information of the critical node_k, and position information of the critical node_k. The critical node_k is an upstream node of the critical node i on a forwarding path, and the single-point proof of transit of the critical node_k is used to prove that the node_k forwards the data packet at a position k on the forwarding path. The single-point proof of transit of the critical node_k is obtained based on the position k and the identity information of the critical node_k, where k is a positive integer less than or equal to i.

Optionally, a critical node verifies a single-point proof of transit of a previous-hop node, to verify correctness of the previous hop. For example, the data packet received by the critical node i carries a single-point proof of transit generated by a previous-hop node (node_i-1) of the critical node i, and the single-point proof of transit is used to prove that the node_i-1 forwards the data packet at a position i-1 on the forwarding path. The critical node i verifies, based on the vector commitment, identity information of the node_i-1, and position information of the node_i-1, the single-point proof of transit carried in the data packet. By analogy, each hop of node is responsible for verifying a single-point proof of transit of a previous-hop node.

Manner 2 of upper-half path correctness: A multi-point proof of transit (MP) is verified based on position information of at least two critical nodes and identity information of the at least two critical nodes. For example, a data packet received by a critical node i carries a multi-point proof of transit related to a critical node_k and a critical node_m, and the critical node i verifies, based on a vector commitment, identity information of the critical node_k, position information of the critical node_k, identity information of the critical node_m, and position information of the critical node_m, the multi-point proof of transit related to the critical node_k and the critical node_m. The critical node_k is an upstream node of the critical node i on a forwarding path, the critical node_m is an upstream node of the critical node_k on the forwarding path, the multi-point proof of transit is used to prove that the critical node_k forwards the data packet at a position k on the forwarding path, and the critical node_m forwards the data packet at a position m on the forwarding path. The multi-point proof of transit is obtained based on the position k, the identity information of the critical node_k, the position m, and the identity information of the critical node_m, where k is a positive integer less than or equal to i, and m is a positive integer less than or equal to k.

Optionally, a trigger condition for verifying a proof of transit carried in a data packet is that the data packet includes a trusted path identifier. For example, after a critical node receives a data packet, if it is determined that a packet header of the data packet includes a trusted path identifier, the critical node verifies a proof of transit carried in the data packet.

Optionally, the critical node verifies the proof of transit carried in the data packet. If the proof of transit carried in the data packet passes verification, the critical node computes the proof of transit and makes the proof of transit public. If the proof of transit carried in the data packet fails verification, the critical node does not need to compute the proof of transit, for example, directly discards the data packet.

### Technical effect 3: Computational efficiency and communication (spatial) efficiency

Computational efficiency and communication (spatial) efficiency mean when a security condition is met, reducing proof computation time and proof verification time, and reducing a data amount of an additional proof that needs to be transferred and/or a data amount of a parameter that needs to be transferred. In embodiments of this application, both the proof computation time and the proof verification time are constant-level time, and the data amount of the additional proof is a constant-level data amount, and is unrelated to a quantity N of nodes included on a forwarding path.

A vector commitment mechanism is a general term for a type of technology, and the vector commitment includes a plurality of specific construction manners. Optionally, a commitment is obtained and verified based on identity information of a forwarding node and position information of the forwarding node in a KZG polynomial commitment (Kate-Zaverucha-Goldberg polynomial commitment) manner, to further reduce time for obtaining the commitment, improve efficiency of obtaining the commitment, and avoid that verification time of a proof of transit super-linearly increases as a quantity of nodes on a forwarding path increases, thereby making the verification time of the proof of transit as short as possible.

The commitment is obtained and verified in the KZG polynomial commitment manner. In the KZG polynomial commitment, computation of the commitment and the opening proof has constant-time computation complexity, and is almost not affected by a quantity N of pieces of committed information, which means that the time needed for computation of the commitment and the opening proof is constant time regardless of an increase of the quantity of pieces of information. Therefore, time of constant-time proof computation and verification and a size of data of a constant-sized additional proof are unrelated to the quantity N of nodes included on the path. In other words, the time needed for obtaining the commitment and the time needed for verifying the commitment remain constant, a data amount of the proof of transit remains constant, and none of the time needed for obtaining the commitment, the time needed for verifying the commitment, and the data amount of the proof of transit increases as a length of the forwarding path increases. When a networking scale is complex, and the forwarding path includes massive nodes, the commitment can still be quickly obtained and verified, thereby greatly improving efficiency of obtaining and verifying the commitment.

Implementation details of the KZG polynomial commitment are specifically described in embodiments. The KZG polynomial commitment is merely a possible implementation of obtaining the vector commitment, and not only can achieve an effect of binding of a proof of transit and a position, but also has an advantage of high efficiency. A vector commitment obtained in another manner can also achieve the effect of binding of a proof of transit and a position.

In some other possible implementations, a commitment is obtained and verified based on identity information of a forwarding node and position information of the forwarding node in a fast Reed-Solomon interactive (fast Reed-Solomon interactive, FRI) commitment manner. The FRI commitment is a commitment mechanism, is for verifying integrity of a polynomial in an interactive proof system, and can be for quickly verifying, without a need of computing the entire polynomial item by item, whether the polynomial meets a set of constraints. The FRI commitment greatly reduces complexity of polynomial verification by constructing a plurality of small-scale Reed-Solomon codes and related proofs based on Reed-Solomon coding and interactive proof protocols.

In some other possible implementations, a commitment is obtained and verified based on identity information of a forwarding node and position information of the forwarding node in a succinct non-interactive argument of knowledge (succinct non-interactive argument of knowledge, SNARK) commitment manner. The SNARK commitment is a protocol for proving correctness of one time of computation and that an input owned by a party meets a specific condition. The SNARK proof is non-interactive, that is, a prover does not need to interact with a verifier, and only needs to generate a proof and send the proof to the verifier. The SNARK proof is compact, a size of the proof is small, and verification time is short.

In some other possible implementations, a proof of transit or a vector commitment is obtained based on identity information of a forwarding node and position information of the forwarding node in a scalable transparent argument of knowledge (scalable transparent argument of knowledge, STARK) commitment manner; or a proof of transit is verified based on a vector commitment in a STARK commitment manner. The STARK is a zero-knowledge proof technology. Starting of the STARK does not need to be set by a trusted third party. Therefore, the STARK is more decentralized and distributed, impact of a single point of failure on obtaining the proof of transit or the vector commitment is reduced, and there is high security. In addition, the STARK is post-quantum secure. Therefore, the STARK helps improve a capability of resisting a quantum computation attack for the proof of transit, and is more reliable in security protection of the proof of transit and the identity information. In addition, a data amount of the proof of transit generated based on the STARK is small. This means that small storage space is needed for proof transmission, and there is an advantage in verification efficiency. For example, a next-hop forwarding node or a verification node can verify validity of the proof of transit in short time.

In some other possible implementations, a proof of transit or a vector commitment is obtained based on identity information of a forwarding node and position information of the forwarding node in a bulletproof manner; or a proof of transit is verified based on a vector commitment in a bulletproof manner. The bulletproof is a zero-knowledge proof technology. The bulletproof is an encryption primitive used in a zero-knowledge proof, and is for proving that a value meets a relationship, and no additional proof information needs to be provided. Starting of the bulletproof does not need to be set by a trusted third party. Therefore, the bulletproof is more decentralized and distributed, impact of a single point of failure on obtaining the proof of transit or the vector commitment is reduced, and there is high security.

In some other possible implementations, a commitment is obtained and verified based on identity information of a forwarding node and position information of the forwarding node in an RSA accumulator manner. The RSA accumulator is a data structure, and is for accumulating elements in a set to the accumulator, so that whether an element belongs to the set can be verified subsequently. Based on an RSA additively homomorphic property, the RSA accumulator may verify, without disclosing the elements in the set, whether a specific element is included in the accumulator.

In some other possible implementations, a commitment is obtained and verified based on identity information of a forwarding node and position information of the forwarding node in an FC function commitment manner. The FC function commitment is a commitment mechanism, and is for binding an input to a computation result of a function, so that the computation result can be verified without exposing the input. The FC function commitment can be implemented by combining a zero-knowledge proof system and a commitment mechanism, and can be for protecting computer privacy and verifying correctness of a computation result.

In some other possible implementations, a commitment is obtained and verified based on identity information of a forwarding node and position information of the forwarding node in a Pedersen commitment manner. The Pedersen commitment is a commitment mechanism, and is for committing a value or a vector to a hidden value. The Pedersen commitment is based on a discrete logarithm difficult problem, so that only a committer learning of a hidden value can verify correctness of the commitment without exposing an actual value.

In some other possible implementations, a commitment is obtained and verified based on identity information of a forwarding node and position information of the forwarding node in a Merkle tree (Merkle tree) commitment manner. The Merkle tree commitment is a commitment mechanism, and is for binding a plurality of elements in a set to a tree-like structure. In the Merkle tree, by using a hash function, the elements are combined level by level and a root hash is generated. The root hash is a commitment to the entire tree. In a verify phase, to verify whether an element belongs to the tree, only some elements in the set and a hash value on a related path need to be learned of.

In some other possible implementations, a commitment is obtained and verified based on identity information of a forwarding node and position information of the forwarding node in a Verkle tree (Verkle tree) commitment manner. The Verkle tree commitment is a commitment mechanism, and is for binding a plurality of elements in a set to a non-binary tree-like structure. In the Verkle tree, by using a polynomial commitment, a path from a root node to a leaf node in the tree is committed, and a plurality of paths are aggregated. In a verify phase, to verify whether an element belongs to the tree, only some elements in the set and a polynomial commitment on a related path need to be learned of.

In some other possible implementations, a source of a data packet is verified based on an aggregate signature. For example, the data packet includes a digital signature. The signature may be a signature of a previous-hop node_i-1, or may be an aggregate signature of all nodes from a node_1 to a node_i-1 on an upper-half segment. The aggregate signature is characterized by that a length of an aggregation result of an infinite quantity of signatures is equal to a length of one signature. It is known that there is a public key infrastructure (public key infrastructure, PKI), that is, a public identity of a node is known, and the node_1 may verify correctness of the signature.

In some other possible implementations, a source of a data packet is verified based on a symmetric MAC tag. For example, the data packet includes the MAC tag, and the node_i may verify correctness of the MAC tag.

### Technical effect 4: Fault tolerance for non-critical nodes

Fault tolerance for non-critical nodes does not conflict with order-preserving verification described above. This is mainly because of the following two reasons:
1. A sequential relationship, specified by a controller, between critical nodes, for example, a sequential relationship between a critical node A, a critical node B, and a critical node C in FIG. 1a and FIG. 1b, still needs to be implemented by using a corresponding means of forwarding path locking.
2. Fault tolerance for non-critical nodes is mainly achieved by determining a vector commitment and a proof of transit based on a sequential position of a critical node on an expected forwarding path.

The fault tolerance mechanism can be implemented in the following two implementations:
Implementation 1 of fault tolerance: In a commit phase, a vector commitment is determined based on identity information of each critical node on an expected forwarding path and a sequential position of each critical node on the expected forwarding path, so that the vector commitment is bound to a correspondence between the identity information and the sequential position. For example, each critical node is mathematically represented by a 2-tuple (x_i=i, y_i=r_i), where i is an expected sequence number of the critical node on the expected forwarding path, and r_i is identity information of the critical node whose expected sequence number is i on the expected forwarding path. The vector commitment is bound to the 2-tuple (x_i=i, y_i=r_i) of each critical node on the expected forwarding path.

In a forwarding phase, a proof of transit is similarly computed based on the identity information r_i of the critical node and the sequential position i of the critical node on the expected forwarding path. Optionally, the computed proof of transit is an MP rather than an OP. The MP is a proof of transit for computing a path segment, and is used to verify that all critical nodes on an upper half of an actual forwarding path are at relatively correct sequential positions. For example, a sequential relationship between all the critical nodes on the upper half of the actual forwarding path is consistent with a sequential relationship between all the critical nodes on an upper half of the expected forwarding path.

Implementation 2 of fault tolerance: In a commit phase, a correspondence between identity information and a sequential position of a critical node is no longer bound, but only the identity information of the critical node is bound. For example, a vector commitment is determined based on identity information of each critical node on an expected forwarding path, and the vector commitment is determined without using a sequential position of each critical node on the expected forwarding path. This manner in which the sequential position of the critical node is no longer used is equivalent to mathematically converting each forwarding node into a 2-tuple (x_i=r_i, y_i=r_i), where r_i is identity information of a critical node i, both x and y in the 2-tuple of the forwarding node are identity information, and the sequential position i is no longer included. The vector commitment is bound to the 2-tuple (x_i=r_i, y_i=r_i) of each critical node on the expected forwarding path. When a proof of transit is computed, an OP can be used to compute a proof of transit of a single node, and an MP can be used to compute a proof of transit of a plurality of nodes on a path segment. In addition, when the proof of transit is computed, a non-critical node that may exist in the middle is ignored. However, the proof of transit obtained in this manner can only prove that a data packet passes through this critical node, but cannot prove correctness of a sequential position of the critical node, causing loss of some position binding.

### Technical effect 5: Recordability of a non-critical node

Optionally, based on Implementation 1 of fault tolerance, in a process of forwarding a data packet, a critical node records a sequential position of the node on an actual forwarding path, and whether there is a non-critical node on the actual forwarding path and a quantity of non-critical nodes on the actual forwarding path can be inferred based on the recorded sequential position of the critical node on the actual forwarding path, thereby implementing recordability of a non-critical node. In addition, because the sequential position on the actual forwarding path is recorded by the critical node, a non-critical node does not need to perform an additional action other than forwarding, and existence of the non-critical node can also be recorded, thereby improving compatibility.

In some implementations, a structure of the data packet is extended, a list is added to the data packet, and the sequential position of the critical node on the actual forwarding path is recorded by using the list. The list is referred to as an actual sequential position list (also referred to as a real sequence number list) below.

The actual sequential position list is used to record a sequential position of each critical node on the actual forwarding path. In some implementations, in a process of forwarding a data packet by a critical node A, the critical node A obtains a sequential position of the node on an actual forwarding path, and writes the sequential position of the node on the actual forwarding path into an actual sequential position list carried in the data packet. The critical node A forwards the data packet that includes the list including the actual sequential position of the node to a critical node B. The critical node B writes a sequential position of the critical node B on the actual forwarding path after the sequential position of the critical node A in the actual sequential position list, and forwards the list including the sequential positions of the critical node A and the critical node B to a critical node C. By analogy, each time the data packet passes through one critical node, an actual sequential position of the critical node is added to the actual sequential position list carried in the data packet. When the data packet reaches a last critical node, after the last critical node adds an actual sequential position of the node to the actual sequential position list carried in the data packet, the actual sequential position list carried in the data packet includes the actual sequential position of each critical node traversed by the actual forwarding path.

Optionally, an arrangement sequence of entries in the actual sequence list matches a sequence of the critical nodes on the actual forwarding path. For example, a 1^{st} entry in the actual sequence list is used to record a sequential position of a 1^{st} critical node on the actual forwarding path, a 2^{nd} entry in the actual sequence list is used to record a sequential position of a 2^{nd} critical node on the actual forwarding path, and by analogy, an i^{th} entry in the actual sequence list is used to record a sequential position of the i^{th} critical node on the actual forwarding path.

Optionally, two adjacent entries in the actual sequential position list are used to record sequential positions of two adjacent critical nodes on the expected forwarding path. A difference between actual sequential positions recorded in the two adjacent entries represents a quantity of non-critical nodes between the two corresponding critical nodes.

Optionally, a length of the actual sequential position list is 1 byte multiplied by a path length n, that is, n bytes. The path length is determined based on a quantity of critical nodes traversed by the actual forwarding path, and the path length n indicates that the actual forwarding path traverses n critical nodes in total. One byte is used to store a sequential position of one critical node on the actual forwarding path. Considering that a maximum of 256 values can be stored in one byte, and a maximum value of a TTL (a sequential position on the actual forwarding path) is 255, one byte is sufficient to carry a sequential position of any critical node on the actual forwarding path.

For example, an expected forwarding path planned by a controller is ABCD, and sequential positions respectively corresponding to the critical node A, the critical node B, the critical node C, and the critical node D are 1234. There is one non-critical node between the critical node A and the critical node B, there are two non-critical nodes between the critical node B and the critical node C, and there are two non-critical nodes between the critical node C and the critical node D. In this scenario, the critical node A adds a sequential position (1) of the node on an actual forwarding path to a 1^{st} entry in an actual sequential position list carried in a data packet, the critical node B adds a sequential position (3) of the node on the actual forwarding path to a 2^{nd} entry in the actual sequential position list carried in the data packet, the critical node C adds a sequential position (5) of the node on the actual forwarding path to a 3^{rd} entry in the actual sequential position list carried in the data packet, and the critical node D adds a sequential position (9) of the node on the actual forwarding path to a 4^{th} entry in the actual sequential position list carried in the data packet. The actual sequential position list, carried in the data packet, finally received by a destination host of the data packet is shown in the following table.

| Actual sequential position list (actually stored in binary mode) |
|---|
| 1 |
| 3 |
| 6 |
| 9 |

In some other implementations, in a process of forwarding a data packet, a non-critical node records a sequential position of the node on an actual forwarding path, to implement recordability of a non-critical node. For example, one or more forwarding nodes that do not support computation of a proof of transit or do not support verification of a proof of transit but support recording of a sequential position on the actual forwarding path exist on the actual forwarding path. After receiving the data packet, the forwarding node determines, based on a TTL or another field in the data packet, a sequential position of the node on the actual forwarding path, and adds the sequential position of the node on the actual forwarding path to the actual sequential position list carried in the data packet, or send the sequential position of the node on the actual forwarding path to a verification node.

Because the vector commitment is used, embodiments of this application can implement Technical effect 1, namely, critical path binding, and Technical effect 2, namely, source correctness. Because the polynomial commitment technology is used, embodiments of this application can implement Technical effect 3, namely, computational efficiency and communication (spatial) efficiency.

The following describes a system architecture in embodiments of this application by using an example.

Embodiments of this application provide a general trusted path protection technology, to implement protection of a data plane forwarding path. This can be applied to any scenario that requires trusted path protection at any layer of a computer network. For example, a link layer is applicable to an Ethernet or MPLS protocol, a network layer is applicable to an IPv4 or IPv6 protocol, a tunnel layer is applicable to SRv6, application-aware networking (application-aware networking, APN), a virtual extensible local area network (virtual extensible LAN, VxLAN), or internet protocol security (internet protocol security, IPSec), and a service layer is applicable to a service function chaining (service function chaining, SFC) protocol or the like. A main difference between different protocol scenarios lies in that packet headers carrying commitments and proof of transits and specific carrying positions are different. The following first describes general trusted path protocol steps, functions, and roles, and then explains and describes specific embodiments in different protocol scenarios.

In any scenario that requires a trusted path, there are several roles: a path planning party, a forwarding node, and a verification node.

The path planning party is configured to determine a network forwarding path at any network layer listed above. The forwarding path may be represented by a vector P=(r_1, r_2, ..., r_N) including information about N forwarding nodes (or referred to as routing nodes), where r_i is publicly verifiable identity information of a forwarding node i. After determining the forwarding path, the path planning party needs to compute a commitment C corresponding to the forwarding path. The path planning party obtains identity information of all forwarding nodes in a network in advance.

Optionally, the path planning party performs remote proof secret distribution. A secret is identity information of a forwarding node in a ciphertext form. For example, the path planning party respectively sends identity information ciphertext of the corresponding forwarding nodes to the N forwarding nodes on the expected forwarding path, so that the N forwarding nodes on the expected forwarding path determine the vector commitment based on the received identity information ciphertext.

Forwarding nodes are further classified into a critical node and a non-critical node. For definitions of the critical node and the non-critical node, refer to the foregoing descriptions.

When receiving a data packet whose packet header carries a trusted path identifier, each critical node computes a proof of transit p_i, and makes the proof of transit p_i public to a verification node. For example, p_i is a single-point proof (OP), and the single-point proof is used to prove that a critical node r_i at a position i forwards the data packet; or p_i may be a multi-point proof (MP), and the multi-point proof is used to prove that critical nodes (r_1, r_2, ..., r_i) at i positions from a position 1 to a position i forward the data packet at correct positions.

The verification node is also referred to an observer. The verification node is, for example, any device that cares about the trustworthiness of a forwarding path. The verification node is configured to verify, based on a commitment C generated by a controller, an identity of a forwarding node, and a position of the forwarding node, a proof of transit computed by the forwarding node. In a possible implementation, the verification node is unbiased, that is, observation and verification results of the verification node are the same as protocol outputs in a correct case.

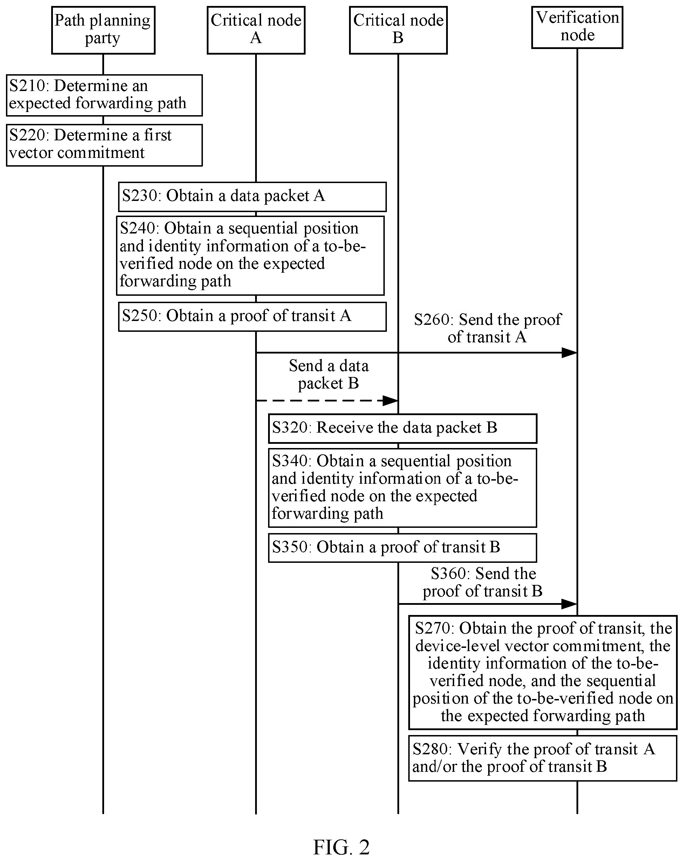

FIG. 2 is a diagram of a path validation method according to an embodiment of this application. The method shown in FIG. 2 is performed by a path planning party, a forwarding node, and a verification node through interaction.

The method shown in FIG. 2 relates to interaction between a plurality of critical nodes during service data transmission. To distinguish between different forwarding nodes, a "critical node A" and a "critical node B" are used to describe a plurality of different critical nodes. The method shown in FIG. 2 relates to data packet processing processes performed by a plurality of forwarding nodes traversed by an actual forwarding path. Because processing processes performed by different critical nodes are common, for brevity of description, the method shown in FIG. 2 focuses on an example of processing processes performed by two critical nodes for description. Certainly, there may be three or more critical nodes on the actual forwarding path. For processing processes performed by more critical nodes, refer to a processing process performed by the critical node A or the critical node B.

Both the critical node A and the critical node B are nodes traversed by an expected forwarding path. In other words, when planning a forwarding path, the path planning party pre-specifies that service data needs to be forwarded through the critical node A and the critical node B in sequence.

The method shown in FIG. 2 relates to a process of processing a data packet by a forwarding node. For description distinguishing, a "first data packet" is used to describe a data packet used as input data, and a "second data packet" is used to describe a data packet used as an output result. Both the first data packet and the second data packet carry service data. A destination of the second data packet includes a plurality of cases. In some implementations, the second data packet is sent to a next forwarding node. In some other implementations, the second data packet is output to an application program or an operating system of this device for self-processing.

The method shown in FIG. 2 relates to an application scenario of achieving fault tolerance for non-critical nodes. For example, at least one non-critical node is traversed between at least two critical nodes on an actual forwarding path of the first data packet. For example, a sequence of the at least two critical nodes on an expected forwarding path of the first data packet is the same as a sequence of the at least two critical nodes on the actual forwarding path of the first data packet, and sequential positions of the at least two critical nodes on the expected forwarding path are different from sequential positions of the at least two critical nodes on the actual forwarding path.

The method shown in FIG. 2 includes the following steps.

S210: The path planning party determines an expected forwarding path.

The expected forwarding path includes at least two critical nodes. For example, the path planning party determines an expected forwarding path P=(r_1, r_2, ..., r_N), where P is a vector P including identity information of each of N critical nodes and a sequential position of each of the N critical nodes, and r_i is publicly verifiable identity information of a critical node, for example, a certificate issued by a CA or an access token delivered by an access control server. S210 is also referred to as a path selection step.

S220: The path planning party determines a first vector commitment.

The first vector commitment indicates a correspondence between sequential positions of the at least two critical nodes on the expected forwarding path and identities of the at least two critical nodes. For example, the path planning party computes the first vector commitment based on the identity information of each critical node on the expected forwarding path and the sequential position of each critical node.

In some implementations, input data used by the path planning party to determine a vector commitment includes an expected forwarding path whose length is N, for example, the vector P=(r_1, r_2, ..., r_N). The path planning party computes, based on the identity information of each of the N critical nodes and the sequential position of each of the N critical nodes by using a commit function in a vector commitment mechanism, a vector commitment C=commit(P) bound to the expected forwarding path P. The path planning party outputs the commitment C whose length is k, where k is related to a security parameter lambda.

In a possible implementation, based on a verify algorithm of the vector commitment, if a verification result for a proof of transit based on a commitment C, a position i, an identity r_i, and related ancillary data is 1, it indicates that the proof of transit passes verification. If a verification result for a proof of transit based on a commitment C, a position i, an identity r_i, and related ancillary data is 0, it indicates that the proof of transit fails verification. The ancillary data is, for example, a cryptography parameter for computing a commitment. S220 is also referred to as a path commitment or path initialization step.

In a possible implementation, before a data packet is forwarded, a controller distributes, to each critical node on an expected forwarding path, identity information and ancillary data that are required for computing a proof of transit, to implement data pre-distribution. The ancillary data is, for example, a cryptography parameter for computing a vector commitment.

Optionally, the path planning party further sends the first vector commitment to the verification node before the data packet is forwarded, to transfer the first vector commitment to the verification node in a control plane pre-distribution manner. Alternatively, the path planning party sends the first vector commitment to a 1^{st} critical node on the expected forwarding path, and the 1^{st} critical node on the expected forwarding path adds the first vector commitment to the data packet, so that the first vector commitment is transferred to the verification node along with the service data.

S230: The critical node A obtains a data packet A.

The data packet A carries the service data. Optionally, the data packet A further carries the vector commitment, so that the verification node verifies the proof of transit by obtaining the vector commitment carried in the data packet.

Optionally, the data packet A further carries a trusted path identifier, to trigger a proof of transit determining process and/or verification process by using the trusted path identifier.

The data packet A has a plurality of sources. In some implementations, all or some content of the data packet A is received from a source host. For example, the critical node A is an ingress PE communicating with the source host, the source host generates the service data and sends the service data to the critical node A, and the critical node A generates the data packet A based on the service data from the source host and the vector commitment. The data packet A includes a packet header and a payload field, the packet header carries the vector commitment, and the payload field carries the service data. In some other implementations, all or some content of the data packet A is generated by the critical node A. For example, the critical node A is a source host, and the critical node A generates the data packet A by using an application program or an operating system of the device.

The following uses an example to describe a trigger condition for the critical node A to subsequently determine the proof of transit.

In a possible implementation, if the critical node A determines that the packet header of the data packet A carries the trusted path identifier, the critical node A subsequently obtains the proof of transit based on identity information and a sequential position. If the critical node A determines that the packet header of the data packet A does not carry the trusted path identifier, the critical node A does not need to obtain the proof of transit based on identity information and a sequential position, and forwards the data packet A to a next forwarding node. The trusted path identifier indicates that the data packet A needs to be forwarded through a trusted path.

A trusted path identifier is included in a packet header of a data packet, so that a forwarding node can determine, depending on whether there is the identifier, whether a proof of transit needs to be computed. For example, if the critical node A determines that the data packet does not carry the trusted path identifier, the critical node A uses an original forwarding mechanism, and does not need to compute the proof of transit.

In another possible implementation, after the critical node A obtains the data packet, the critical node A identifies a service type carried in the data packet; and in response to identifying that the data packet carries data of a specific service type, obtains the proof of transit, to implement a proof of transit for a specific service. For example, in response to identifying that the data packet includes a network service header (network service header, NSH) in a service function chaining protocol, the critical node A determines that the data packet carries data of service function chaining, and obtains the proof of transit. For another example, the critical node A performs application identification on payload data in the data packet, to obtain an application type corresponding to the payload data; and in response to the application type being a target application, obtains the proof of transit.

In another possible implementation, after the critical node A obtains the data packet, in response to identifying that the data packet includes an identifier of each node on a specific tunnel, the critical node A obtains the proof of transit, to verify whether the data packet is forwarded through the specific tunnel. For example, in an SRv6 scenario, in response to identifying that the data packet carries a segment list (segment list), the critical node A obtains the proof of transit. For another example, in an MPLS scenario, in response to identifying that the data packet carries a label stack, the critical node A obtains the proof of transit.

S240: The critical node A obtains a sequential position of a to-be-verified node on the expected forwarding path and identity information of the to-be-verified node.

The to-be-verified node is a forwarding device that serves as a to-be-verified object. The to-be-verified node includes but is not limited to a current node, a neighboring node of the current node, and each node from a 1^{st} forwarding node to the current node. The sequential position of the to-be-verified node on the expected forwarding path is different from a sequential position of the critical node A on the actual forwarding path of the data packet A. The identity information of the to-be-verified node indicates an identity of the critical node A.

In some implementations, the to-be-verified node is a current node. For example, when the data packet is transmitted to the critical node A, the to-be-verified node is the critical node A. The critical node A obtains a sequential position of the critical node A on the expected forwarding path and identity information of the critical node A, and obtains a first proof of transit based on the sequential position of the critical node A on the expected forwarding path and the identity information of the critical node A. Path validation is performed on the current node, to help verify whether the node is an expected forwarding node or whether a sequential position of the node is an expected sequential position, and particularly, to help verify correctness of a source of the data packet when the critical node A is a 1^{st} forwarding node or a source host.

In some implementations, the to-be-verified node includes a neighboring node of a current node.

For example, the to-be-verified node is a next node of the current node. When the data packet is transmitted to the critical node A, the to-be-verified node is the critical node B. The critical node A obtains a sequential position of the critical node B on the expected forwarding path and identity information of the critical node B, and the critical node A obtains a proof of transit A based on the sequential position of the critical node B on the expected forwarding path and the identity information of the critical node B. Path validation is performed on the next node, to help verify whether the next node is an expected forwarding node or whether a sequential position of the next node is an expected sequential position, thereby reducing a risk that the data packet is transmitted to an unexpected forwarding node.

For another example, the to-be-verified node is a previous node of the current node. When the data packet is transmitted to the critical node B, the to-be-verified node is the critical node A. The critical node B obtains a sequential position of the critical node A on the expected forwarding path and identity information of the critical node A, and the critical node B obtains a proof of transit A based on the sequential position of the critical node A on the expected forwarding path and the identity information of the critical node A. Path validation is performed on the next node, to help verify whether the next node is an expected forwarding node or whether a sequential position of the next node is an expected sequential position, thereby reducing a risk that the data packet is transmitted to an unexpected forwarding node.

For another example, the to-be-verified node includes a current node and a previous node of the current node. When the data packet is transmitted to the critical node A, the to-be-verified node includes the critical node A and a previous node (for example, a source host) of the critical node A. The critical node A obtains a proof of transit A based on a sequential position of the critical node A on the expected forwarding path, identity information of the critical node A, a sequential position of the previous node of the critical node A on the expected forwarding path, and identity information of the previous node of the critical node A. The proof of transit A can be used to verify whether both the critical node A and the previous node of the critical node A forward the data packet at the expected sequential positions. In this case, the critical node A corresponds to a first forwarding node, and the previous node of the critical node A corresponds to a second forwarding node.

In some implementations, the to-be-verified node includes each node from a 1^{st} forwarding node to a current node. For example, when the data packet is transmitted to the critical node B, the to-be-verified node includes the critical node A and the critical node B. The critical node B obtains a sequential position of the critical node A on the expected forwarding path, identity information of the critical node A, a sequential position of the critical node B on the expected forwarding path, and identity information of the critical node B, and the critical node B obtains a proof of transit A based on the sequential position of the critical node A on the expected forwarding path, the identity information of the critical node A, the sequential position of the critical node B on the expected forwarding path, and the identity information of the critical node B. Path validation is performed on each node traversed by an upper-half path, to help verify whether the data packet passes through an unexpected forwarding node.

There are many manners of obtaining the sequential position of the to-be-verified node on the expected forwarding path. The following uses two implementations as examples for description.

Manner 1 of obtaining the sequential position of the to-be-verified node on the expected forwarding path: The sequential position of the to-be-verified node on the expected forwarding path is obtained by using a data packet that carries service data.

In some implementations, a predetermined field of the data packet A carries the sequential position of the to-be-verified node on the expected forwarding path. For example, the packet header of the data packet A carries the sequential position of the to-be-verified node on the expected forwarding path. For example, the packet header of the data packet includes a type-length-value (type-length-value, TLV) or reserved field, and the TLV or reserved field carries the sequential position of the to-be-verified node on the expected forwarding path.

In some implementations, the critical node A further processes content of a predetermined field in the data packet A to obtain the sequential position of the to-be-verified node on the expected forwarding path. For example, the packet header of the data packet A carries path information, and the path information includes an identifier of each critical node on the expected forwarding path. An arrangement sequence of the identifier of each critical node in the path information matches an arrangement sequence of the identifier of each critical node on the expected forwarding path. The critical node A determines the sequential position of the to-be-verified node on the expected forwarding path based on a sequential position of an identifier of the to-be-verified node in the path information.

For example, in some implementations of obtaining the sequential position in an SRv6 scenario, the data packet A includes a segment routing header (segment routing header, SRH), the SRH includes a segment list (segment list), the segment list includes a SID of the critical node A, and the critical node A obtains the sequential position of the to-be-verified node on the expected forwarding path based on a sequential position of the SID of the critical node A in the segment list. For example, if the SID of the critical node A is in an i^{th} entry in the segment list, it is determined that the sequential position of the to-be-verified node on the expected forwarding path is i. In an example, the critical node A determines the sequential position of the to-be-verified node on the expected forwarding path based on an offset of a SID of a node_i relative to a segment list [N]. Optionally, the critical node A further obtains, based on an offset of a SID of an upstream node of the critical node A relative to the segment list [N], a relative position of the upstream node on the forwarding path.

In some implementations of obtaining the sequential position in an SFC scenario, the data packet A includes a path identifier, and the critical node A obtains the path identifier carried in the data packet A. The critical node A obtains the sequential position of the to-be-verified node on the expected forwarding path based on the path identifier and a correspondence stored by the critical node A. The correspondence includes the path identifier and the sequential position of the to-be-verified node on the expected forwarding path. For example, the critical node A searches the correspondence based on the path identifier, to obtain the sequential position of the node corresponding to the path identifier. The path identifier identifies the expected forwarding path. The correspondence is obtained, for example, in a control plane pre-distribution manner.

Because the sequential position on the expected forwarding path can be quickly obtained by using the data packet, performance overheads and computation overheads of obtaining the sequential position on the expected forwarding path by the forwarding device through table lookup and matching are reduced, and storage space occupied in the forwarding device for obtaining the sequential position on the expected forwarding path through table lookup and matching are also reduced.

Manner 2 of obtaining the sequential position on the expected forwarding path: The sequential position on the expected forwarding path is obtained in a control plane pre-distribution manner.

The control plane pre-distribution manner is mainly implemented based on interaction between the path planning party and the forwarding node. For example, in a process in which the path planning party determines the expected forwarding path, the path planning party determines the sequential position of the to-be-verified node on the expected forwarding path. The path planning party sends the sequential position of the to-be-verified node on the expected forwarding path to the critical node A. The critical node A receives the sequential position of the to-be-verified node on the expected forwarding path from the path planning party.

In some implementations, the sequential position of the to-be-verified node on the expected forwarding path is sent based on a management plane protocol. For example, the path planning party sends a management plane protocol packet such as a network configuration protocol (network configuration protocol, NETCONF) packet, a representational state transfer configuration (representational state transfer configuration, RESTCONF) packet, or a simple network management protocol (simple network management protocol, SNMP) packet to the critical node A, where the management plane protocol packet carries the sequential position of the to-be-verified node on the expected forwarding path; and the critical node A receives the management plane protocol packet, and obtains the sequential position, carried in the management plane protocol packet, of the node on the expected forwarding path. For another example, the path planning party sends a control plane protocol packet such as a border gateway protocol (border gateway protocol, BGP) packet, a path computation element protocol (path computation element protocol, PCEP) packet, or a border gateway protocol flow specification (border gateway protocol flow spec, BGP flow specification, BGP flow spec or BGP FS for short) to the critical node A, where the control plane protocol packet carries the sequential position of the to-be-verified node on the expected forwarding path; and the critical node A receives the control plane protocol packet, and obtains the sequential position, carried in the control plane protocol packet, of the node on the expected forwarding path. For another example, the path planning party sends an application layer protocol packet such as an APN packet or a hypertext transfer protocol (hypertext transfer protocol, HTTP) packet to the critical node A, where the application layer protocol packet carries the sequential position of the to-be-verified node on the expected forwarding path.

In some other implementations, the controller delivers, to each critical node on the expected forwarding path, a sequential position of each upstream critical node of the critical node on the expected forwarding path. For example, the controller sends, to a critical node i, a sequential position of each critical node from a 1^{st} critical node to the critical node i on the expected forwarding path.

In some other implementations, a network administrator pre-configures, for each critical node on the expected forwarding path, a sequential position of the critical node on the expected forwarding path. Optionally, in a case of computing a multi-point proof of transit in an MP mode, the network administrator further configures, for each critical node on the expected forwarding path, a sequential position of each upstream critical node of the critical node on the expected forwarding path. For example, configuration information stored by a critical node i includes a relative position of each critical node from a critical node 1 to the critical node i on the forwarding path, and the critical node i obtains, from the configuration information, the relative position of each critical node from the critical node 1 to the critical node i.

There are many manners of obtaining the identity information of the to-be-verified node. The following uses two implementations as examples for description.

Manner 1 of obtaining the identity information of the to-be-verified node: The identity information of the to-be-verified node is obtained by using a data packet that carries service data.

In some implementations, a predetermined field of the data packet A carries the identity information of the to-be-verified node. For example, the packet header of the data packet A carries the identity information of the to-be-verified node. For example, the packet header of the data packet includes a TLV or reserved field, and the TLV or reserved field carries the identity information of the to-be-verified node.

In an example, the to-be-verified node is the critical node A, a destination address field of an IP header of the data packet A includes an IP address of the critical node A, and the critical node A obtains the IP address of the critical node A from the destination address field of the IP header of the data packet A.

For example, in a case of computing a single-point proof of transit in an OP mode, the data packet A carries the identity information of the critical node A, and the critical node A obtains the identity information of the node that is carried in the data packet A, to compute the OP. For another example, in a case of computing a multi-point proof of transit in an MP mode, the data packet A further carries identity information of the second forwarding node, and the critical node A further obtains the identity information of the second forwarding node that is carried in the data packet A, to compute the MP.

For example, in some implementations of obtaining the identity information of the to-be-verified node in an SRv6 scenario, the data packet A includes an SRH, the SRH includes a segment list segment list, the segment list includes a SID of each node on the expected forwarding path, and the critical node A obtains a SID of the to-be-verified node that is carried in the segment list, to obtain the identity information of the to-be-verified node.

Manner 2 of obtaining the identity information of the to-be-verified node: The sequential position on the expected forwarding path is obtained in a control plane pre-distribution manner.

For example, in a process in which the path planning party determines the expected forwarding path, the path planning party determines the identity information of the to-be-verified node. The path planning party sends the identity information of the to-be-verified node to the critical node A. The critical node A receives the identity information from the path planning party.

S250: The critical node A obtains a node-level proof of transit A based on the sequential position of the to-be-verified node on the expected forwarding path and the identity information of the to-be-verified node.

The proof of transit A is used to prove that the to-be-verified node is at the sequential position of the to-be-verified node on the expected forwarding path.

For example, the to-be-verified node is a current node (the critical node A), and the critical node A obtains the device-level proof of transit A based on the sequential position of the critical node A on the expected forwarding path and the identity information of the critical node A, to verify, based on the proof of transit A, whether the critical node A is in an expected sequence and whether the critical node A is an expected node.

For example, the to-be-verified node is a next node (the critical node B) of a current node, and the critical node A obtains the proof of transit A based on the sequential position of the critical node B on the expected forwarding path and the identity information of the critical node B, to verify, based on the proof of transit A, whether the data packet is to be sent to a node that is in an expected sequence and that has a correct expected identity.

S260: The critical node A sends the proof of transit A to the verification node, and sends a data packet B to the critical node B.

The critical node A sends the proof of transit A to the verification node, so that the verification node verifies the sequential position of the critical node A and the identity of the critical node A based on the proof of transit A. The data packet B carries the service data in the data packet A. The data packet B is sent to the critical node B, so that the service data reaches from the node to a next critical node that the path planning party expects to pass through.

When the critical node B also serves as a verification node, or a downstream critical node (for example, a tail node at an end of the path) of the critical node B also serves as a verification node, the proof of transit and the service data are carried, for example, in a same data packet. For example, the verification node is the critical node B, the critical node B is a downstream critical node of the critical node A on the expected forwarding path, and the critical node A obtains the data packet B based on the service data carried in the data packet A and the proof of transit of the to-be-verified node (for example, the proof of transit A of the critical node A). A payload field of the data packet B carries the service data carried in the data packet A. A packet header of the data packet B carries the proof of transit of the to-be-verified node. The critical node A sends the data packet B to the critical node B. In this case, the critical node A corresponds to a first forwarding node, the critical node B corresponds to a third forwarding node, the data packet A corresponds to a first data packet, and the data packet B corresponds to a second data packet.

When the verification node is deployed outside the forwarding path, the critical node A separately constructs a packet to carry the proof of transit of the to-be-verified node. For example, the critical node A generates a first packet, where the first packet is a control plane packet, a management plane packet, or a data packet, and the first packet carries the proof of transit of the to-be-verified node. The critical node A sends the first packet to the verification node.

S320: The critical node B receives the data packet B from the critical node A.

The critical node B is an upstream critical node of the critical node A on the forwarding path. The critical node B is a transit node or a tail node.

S340: The critical node B obtains the sequential position of the to-be-verified node on the expected forwarding path and the identity information of the to-be-verified node.

S350: The critical node B obtains a device-level proof of transit B based on the obtained sequential position of the to-be-verified node on the expected forwarding path and the obtained identity information of the to-be-verified node.

For example, the to-be-verified node is a current node (the critical node B), and the critical node B obtains the device-level proof of transit B based on the sequential position of the critical node B on the expected forwarding path and the identity information of the critical node B, to verify, based on the proof of transit B, whether the critical node B forwards the data packet at the expected sequential position.

For example, the to-be-verified node is a previous node (the critical node A) of a current node, and the critical node B obtains the proof of transit B based on the sequential position of the critical node A on the expected forwarding path and the identity information of the critical node A, to verify, based on the proof of transit B, whether the data packet is from a node that is in an expected sequence and that has a correct identity.

For example, the to-be-verified node includes a current node (the critical node B) and a previous node (the critical node A) of the current node, and the critical node B obtains the proof of transit B based on the sequential position of the critical node A on the expected forwarding path, the identity information of the critical node A, the sequential position of the critical node B on the expected forwarding path, and the identity information of the critical node B, to verify, based on the proof of transit B, whether the critical node A forwards the data packet at the expected sequential position and whether the critical node B forwards the data packet at the expected sequential position. In this case, the critical node B corresponds to a first forwarding node, and the critical node A corresponds to a second forwarding node.

For example, the to-be-verified node is a next node (a critical node C) of a current node, and the critical node B obtains the proof of transit B based on a sequential position of the critical node C on the expected forwarding path and identity information of the critical node C, to verify, based on the proof of transit B, whether the data packet is to be sent to a node that is in an expected sequence and that has a correct expected identity.

For example, the to-be-verified node includes a current node (the critical node B) and a next node (a critical node C) of the current node, and the critical node B obtains the proof of transit B based on the sequential position of the critical node B on the expected forwarding path, the identity information of the critical node B, a sequential position of the critical node C on the expected forwarding path, and identity information of the critical node C, to verify, based on the proof of transit B, whether the critical node B forwards the data packet at the expected sequential position and whether the data packet is to be sent to a node that is in an expected sequence and that has a correct expected identity.

For example, the to-be-verified node is each node traversed by the upper-half path, and the critical node B obtains the proof of transit B based on the sequential position of the critical node A on the expected forwarding path, the identity information of the critical node A, the sequential position of the critical node B on the expected forwarding path, and the identity information of the critical node B.

S360: The critical node B sends the proof of transit B of the critical node B to the verification node, and sends a data packet C to the critical node C.

In some implementations, the critical node B verifies correctness of a source of the data packet B. If correctness of the source of the data packet B passes verification, the critical node B further performs a subsequent proof of transit determining process. If correctness of the source of the data packet B fails verification, the critical node B does not need to perform a subsequent proof of transit determining process, and the critical node B may directly discard the data packet.

In some implementations in which the critical node B verifies correctness of the source of the data packet B, the critical node B verifies whether the data packet B is from the critical node A, where the critical node A is a previous critical node of the critical node B on the expected forwarding path. For example, the critical node B verifies, based on the identity information of the critical node A, the expected sequential position of the critical node A, and a node-level vector commitment, correctness of a single-point proof of transit OP_i-1 of the critical node A that is carried in the data packet B, to verify whether a previous hop of the data packet B is correct. For another example, the critical node B verifies, based on the identity information of the critical node A, the expected sequential position of the critical node A, the identity information of the critical node B, the expected sequential position of the critical node B, and a node-level vector commitment, correctness of a multi-point proof of transit MP_i-1 of the critical node A that is carried in the data packet B, to verify whether a forwarding path segment that the data packet B has passed through is correct. In addition, a data packet source verification step may alternatively use another proof aggregation manner, for example, by using a cryptographic accumulator (accumulator), an aggregate signature, or a MAC tag.

In some implementations, the critical node also serves as a verification node. For example, the verification node is the critical node C. The critical node C is a downstream critical node of the critical node B on the expected forwarding path, the critical node B obtains the data packet C based on the received data packet B and the proof of transit B of the critical node B, and the critical node B sends the data packet C to the critical node C, where the data packet C includes a payload of the data packet B and the proof of transit B of the critical node B. In this case, the critical node B corresponds to a first forwarding node, the critical node C corresponds to a third forwarding node and corresponds to a verification node, the data packet B corresponds to a first data packet, and the data packet C corresponds to a second data packet.

S270: The verification node obtains the proof of transit, the device-level vector commitment, the identity information of the to-be-verified node, and the sequential position of the to-be-verified node on the expected forwarding path, where the at least two critical nodes include the to-be-verified node, the identity information of the to-be-verified node indicates the identity of the to-be-verified node, and the proof of transit of the to-be-verified node is used to prove that the to-be-verified node is at the sequential position of the to-be-verified node on the expected forwarding path.

In a possible implementation, in S250 and S260, a proof of transit related to a single to-be-verified node is obtained based on a single-point open function, and in S270, the proof of transit related to the single to-be-verified node is verified based on a single verify function, to implement verification on a proof of a single node. In another possible implementation, in S250 and S260, a proof of transit related to a plurality of to-be-verified nodes is verified based on a batch verify function, and in S270, the proof of transit related to the plurality of to-be-verified nodes is obtained based on a multi-point open function, to implement verification on a plurality of nodes on a path at a time.

Certainly, three functions, namely, commit, open, and verify, are only examples of several functions that are available for obtaining and verifying a proof of transit. In another possible implementation, a proof of transit is obtained and verified by using another type of function in the vector commitment. For example, in S250 and S260, the proof of transit is obtained by using a create witness function (create witness, which acts like the open function), and in S270, the proof of transit is obtained by using a verify evaluation function (verify eval, which acts like the verify function). For another example, in S250 and S260, the multi-point proof of transit is obtained by using a create witness batch function (create witness batch, which acts like the batch open function), and in S270, the multi-point proof of transit is verified by using a verify evaluation batch (verify eval batch, which acts like the batch verify function).

S280: The verification node verifies the proof of transit A and/or the proof of transit B based on the device-level vector commitment, the identity information of the to-be-verified node, and the sequential position of the to-be-verified node on the expected forwarding path.

In some implementations, the verification node performs an operation based on the device-level vector commitment, the identity information of the to-be-verified node, the sequential position of the to-be-verified node on the expected forwarding path, and the proof of transit of the to-be-verified node by using the verify function in the vector commitment mechanism.

For example, if the device-level vector commitment, the identity information of the to-be-verified node, the sequential position of the to-be-verified node on the expected forwarding path, and the proof of transit of the to-be-verified node match each other, and an output result of the verify function is 1, the verification node determines that the proof of transit of the to-be-verified node passes verification, indicating that the to-be-verified node is indeed a critical node expected by the path planning party (the expected forwarding path traverses the to-be-verified node), and a sequential position of the to-be-verified node on the actual forwarding path meets a requirement of the expected forwarding path.

On the contrary, if the device-level vector commitment, the identity information of the to-be-verified node, the sequential position of the to-be-verified node on the expected forwarding path, and the proof of transit of the to-be-verified node do not match, and an output result of the verify function is 0, the proof of transit of the to-be-verified node passes verification, indicating that the to-be-verified node is not a critical node expected by the path planning party (the expected forwarding path does not traverse the to-be-verified node), or a sequential position of the to-be-verified node on the actual forwarding path does not meet a requirement of the expected forwarding path.

For example, the verification node verifies the proof of transit A from the critical node A based on the device-level vector commitment, the identity information of the critical node A, and the sequential position of the critical node A on the expected forwarding path, to determine whether the identity and the sequential position of the critical node A meet expectations.

For another example, the verification node verifies the proof of transit from the critical node B based on the device-level vector commitment, the identity information of the critical node B, and the sequential position of the critical node B on the expected forwarding path, to determine whether the identity and the sequential position of the critical node B meet expectations. For another example, the verification node verifies the proof of transit from the critical node B based on the device-level vector commitment, the identity information of the critical node A, the sequential position of the critical node A on the expected forwarding path, the identity information of the critical node B, and the sequential position of the critical node B on the expected forwarding path, to determine whether the identity and the sequential position of the critical node A and the identity and the sequential position of the critical node B meet expectations.

Benefits achieved by verifying a proof of transit based on a vector commitment include at least the following several aspects.
1. Help verify that data is forwarded in a sequence specified on a forwarding path.
   Specifically, the vector commitment has position binding, that is, can reflect a binding relationship between a value of information and a position of the information in a vector. Therefore, the vector commitment is obtained based on identity information of a critical node and an expected sequential position of the critical node, so that the vector commitment is related to both the identity information and the expected sequential position of the critical node, and the vector commitment can reflect a correspondence between the expected sequential position and the identity information of the critical node on the forwarding path. Therefore, when the proof of transit is verified based on the vector commitment, the proof of transit can pass verification only when the identity information, the expected sequential position, and the proof of transit correspond to each other, and a proof of transit obtained when the identity information does not correspond to the expected sequential position causes verification to fail. In other words, a correct proof of transit p_i can be computed by only a critical node i at an expected sequential position i, and cannot be forged by others.
2. Facilitate path hiding. Because the vector commitment is in a ciphertext form, the identity information and the expected sequential position of the critical node that are included in the vector commitment cannot be directly obtained by using the vector commitment, and it is also difficult to perform decryption or reverse deduction on the vector commitment to obtain the identity information and the expected sequential position of the critical node, so that the identity information and the expected sequential position of the critical node on the forwarding path are hidden, thereby improving privacy and confidentiality of the identity information and the expected sequential position of the critical node.
3. Reduce time for obtaining the commitment and time for verifying the commitment, and improve efficiency for obtaining the commitment and efficiency for verifying the commitment. If a single-point commitment manner is used, a position of each node and an identity of each node need to be committed one by one. In this case, if the forwarding path includes n nodes, it needs to take n times time to obtain and verify the commitment. However, if a vector commitment manner is used, a forwarding path (equivalent to a vector) including at least two nodes is allowed to be committed at a time. In this case, if the forwarding path includes n nodes, it may only take time of log n or constant time to obtain and verify the commitment. This reduces a risk that an amount of committed data super-linearly increases as a quantity of nodes on the forwarding path increases, can more quickly complete a process of obtaining and verifying the commitment, can greatly improve efficiency, and is more applicable to a case in which the forwarding path includes a large quantity of nodes. In addition, the identity information and the expected sequential position of the critical node cannot be bound in the single-point commitment manner, and position binding needs to be implemented in another manner. For example, a list is used to record an expected sequential position. The vector commitment has a position binding capability, so that a plurality of pieces of identity information can be directly bound to corresponding expected sequential positions, thereby simplifying a verification process.

According to the method provided in this embodiment, a proof of transit is obtained by combining a position of a forwarding node on a forwarding path with an identity of the forwarding node, thereby achieving position binding of the proof of transit. In other words, the proof of transit is related to both the identity of the forwarding node and the position of the forwarding node on the forwarding path. Therefore, a correct proof of transit can be computed only by a correct node when a data packet is forwarded to a correct position on the forwarding path, ensuring strong binding between the proof of transit and an actual forwarding status of the data packet. For example, if a node on the path is skipped or a redundant, unspecified node is traversed during forwarding, the mismatch between the identity of a node and its position causes the proof of transit obtained based on the identity of the node and the position of the node to fail verification, thereby improving the trustworthiness of the proof of transit.

Further, because a critical node on the expected forwarding path computes a proof of transit by using a sequential position on the expected forwarding path, and verifies the proof of transit by using a vector commitment and the sequential position of the critical node on the expected forwarding path, a sequential position for computing the vector commitment is consistent with the sequential position for computing the proof of transit, to achieve fault tolerance for non-critical nodes, thereby reducing a risk that service data transmission is interrupted or an alarm is output because verification on the proof of transit based on the vector commitment fails.

In some implementations, a critical node not only sends a proof of transit of the node to the verification node, but also sends a sequential position of the node on the actual forwarding path to the verification node, to help implement recordability of a non-critical node.

For example, the critical node A obtains a sequential position 1 of the first forwarding node on the actual forwarding path based on the data packet A, and the critical node A sends the sequential position 1 to the verification node; the critical node B obtains a sequential position 4 of the critical node B on the actual forwarding path based on the data packet B, and the critical node B sends the sequential position 4 to the verification node; and the critical node C obtains a sequential position 6 of the critical node C on the actual forwarding path based on the data packet C, and the critical node C sends the sequential position 6 to the verification node.

For how to transmit the actual sequential position of the critical node to the verification node, this embodiment uses two manners as examples for description.

Transmission manner 1 of the actual sequential position: The actual sequential position of the critical node is transmitted along with service data.

Transmission manner 1 is equivalent to an in-band manner. For example, in a process of forwarding a data packet, a critical node adds a sequential position of the node on an actual forwarding path to the data packet, and forwards the data packet including service data and the actual sequential position of the node, so that the actual sequential position of the node is transmitted to a next forwarding node of the critical node along with the service data. For example, the data packet includes a packet header and a payload field encapsulated in an inner layer of the packet header, the packet header carries the actual sequential position of the critical node, and the payload field carries the service data.

In some implementations, the actual sequential position and the proof of transit are transmitted to the verification node along with the service data. For example, the verification node is the downstream critical node B of the critical node A on the expected forwarding path; the critical node A obtains the data packet B based on the data packet A, the proof of transit of the critical node A, and the sequential position of the critical node A on the actual forwarding path, where the data packet B includes a payload of the data packet A, the proof of transit of the critical node A, and the sequential position of the critical node A on the actual forwarding path; and the critical node A sends the data packet B to the critical node B. In this case, the critical node A corresponds to a first forwarding node, the critical node B corresponds to a third forwarding node, the data packet A corresponds to a first data packet, and the data packet B corresponds to a second data packet.

For another example, the verification node is the downstream critical node C of the critical node B on the expected forwarding path; the critical node B obtains the data packet C based on the data packet B, the proof of transit of the critical node B, and the sequential position of the critical node B on the actual forwarding path, where the data packet C includes the payload of the data packet B, the proof of transit of the critical node B, the sequential position of the critical node A on the actual forwarding path, and the sequential position of the critical node B on the actual forwarding path; and the critical node B sends the data packet C to the forwarding node C. In this case, the critical node B corresponds to a first forwarding node, the critical node C corresponds to a third forwarding node, the data packet B corresponds to a first data packet, and the data packet C corresponds to a second data packet.

Because an actual sequential position and a proof of transit are carried in a same data packet and sent to a downstream critical node on the forwarding path, in a mode in which a critical node also serves as a verification node (an observer), there is no need to separately construct an independent data packet to transmit the actual sequential position and the proof of transit, so that overall transmission overheads of the actual sequential position and the proof of transit are low. The verification node can obtain both an actual sequential position of a critical node and a proof of transit of the critical node by parsing one data packet, so that efficiency of obtaining the actual sequential position of the critical node and the proof of transit of the critical node by the verification node is high.

In some implementations, the data packet A includes a first position list, the first position list includes a sequential position, on the actual forwarding path, of an upstream critical node of the first forwarding node on the expected forwarding path, the data packet B includes a second position list, and the second position list includes the first position list and the sequential position of the first forwarding node on the actual forwarding path.

The following uses an example to describe an actual sequential position of a critical node, a proof of transit, and a position at which a vector commitment is carried in a packet.

In a case in which data is transmitted based on an IPv6 protocol, in a possible implementation, the actual sequential position of the critical node, the proof of transit, and the vector commitment are carried in an IPv6 extension header. For example, the actual sequential position of the critical node, the proof of transit, and the vector commitment are carried in a segment routing header (segment routing header, SRH). For another example, the actual sequential position of the critical node, the proof of transit, and the vector commitment are carried in a hop-by-hop options header (hop-by-hop options header, HBH). For another example, the actual sequential position of the critical node, the proof of transit, and the vector commitment are carried in a destination options header (destination options header, DOH). The SRH, the HBH, and the DOH are specific examples of three IPv6 extension headers that can carry the proof of transit.

Optionally, the proof of transit is carried in a TLV in the IPv6 extension header. For example, the actual sequential position of the critical node, the proof of transit, and the vector commitment are carried in a TLV in the SRH. For another example, the actual sequential position of the critical node, the proof of transit, and the vector commitment are carried in a TLV in the HBH. For another example, the actual sequential position of the critical node, the proof of transit, and the vector commitment are carried in a TLV in the DOH.

In a case in which data is transmitted based on an APN6 protocol, in a possible implementation, the actual sequential position of the critical node, the proof of transit, and the vector commitment are carried in an APN header. For example, the actual sequential position of the critical node, the proof of transit, and the vector commitment are carried in an application-aware networking identifier (APN ID) in the APN header. In a case in which data is transmitted based on a VxLAN protocol, in a possible implementation, the actual sequential position of the critical node, the proof of transit, and the vector commitment are carried in a VxLAN header. This is applicable to a scenario such as a VxLAN protocol-based virtualized network or cross-data center interconnection, and provides a function of verifying a data source in a VxLAN tunnel. In a case in which data is transmitted based on an IPSec protocol, in a possible implementation, the actual sequential position of the critical node, the proof of transit, and the vector commitment are carried in an IPSec header. This can implement data source verification and secure transmission in the IPSec protocol. This manner is applicable to a scenario such as an IPSec protocol-based virtual private network (VPN) or secure communication, and provides a capability of verifying a data source in an IPsec tunnel. In a case in which data is transmitted based on an MPLS protocol, in a possible implementation, the actual sequential position of the critical node, the proof of transit, and the vector commitment are carried in an MPLS header. For example, the forwarding path includes, for example, a label switching path, and each of a node_1, a node_2, ..., and a node_N on the forwarding path includes an LSR on the label switching path, to implement data source verification and secure transmission in the MPLS protocol. This manner is applicable to a scenario such as MPLS protocol-based multi-layer label switching, a service provider network, or cross-domain communication, and provides a mechanism for verifying a data source in an MPLS network. In a case in which data is transmitted based on an SFC protocol, in a possible implementation, the proof of transit is carried in an NSH. For example, the actual sequential position of the critical node, the proof of transit, and the vector commitment are carried in a metadata field in the NSH.

In a possible implementation, the actual sequential position of the critical node, the proof of transit, and the vector commitment are carried in different fields in a same packet header.

For example, a data packet_i+1 includes an IPv6 extension header, and the IPv6 extension header includes a proof of transit of a forwarding node_i and the vector commitment. For example, the IPv6 extension header of the data packet_i+1 includes an SRH, the SRH includes a first TLV, a second TLV, and a third TLV, the first TLV of the SRH includes the proof of transit of the forwarding node_i, the second TLV of the SRH includes the vector commitment, and the third TLV of the SRH includes an actual sequential position of the critical node. Alternatively, the IPv6 extension header of the data packet_i+1 includes an APN header, the APN header includes an APN ID, and the APN ID includes the proof of transit of the forwarding node_i and the vector commitment. Alternatively, the IPv6 extension header of the data packet_i+1 includes a DOH, the DOH includes a first TLV, a second TLV, and a third TLV, the first TLV of the DOH includes the proof of transit of the forwarding node_i, the second TLV of the DOH includes the vector commitment, and the third TLV of the DOH includes an actual sequential position of the critical node. Alternatively, the IPv6 extension header of the data packet_i+1 includes an HBH, the HBH includes a first TLV, a second TLV, and a third TLV, the first TLV of the HBH includes the proof of transit of the forwarding node_i, the second TLV of the HBH includes the vector commitment, and the third TLV of the HBH includes an actual sequential position of the critical node.

For example, the data packet_i+1 includes an NSH, the NSH includes a metadata field, and the metadata field includes the proof of transit of the forwarding node_i and the vector commitment. Alternatively, the data packet_i+1 includes an MPLS header, and the MPLS header includes the proof of transit of the forwarding node_i and the vector commitment. Alternatively, the data packet_i+1 includes a VxLAN header, and the VxLAN header includes the proof of transit of the forwarding node_i and the vector commitment. Alternatively, the data packet_i+1 includes an IPsec header, and the IPsec header includes the proof of transit of the forwarding node_i and the vector commitment.

Placing a proof of transit and a vector commitment in a same packet header helps simplify a format and a structure of a packet. In this way, no additional header is needed to separately carry the proof of transit and the vector commitment, thereby reducing packet complexity and redundancy. In addition, placing a proof of transit and a vector commitment in a same packet header can simplify packet processing logic of a node. For example, after receiving the data packet_i+1, the node_i needs to parse a packet header only once to obtain the proof of transit and the vector commitment information. In this way, processing logic of the node_i is clearer and simpler, thereby reducing complexity in a processing process.

In some implementations, after obtaining a proof of transit through computation, each critical node replaces the proof of transit carried in the packet header of the data packet with the proof of transit obtained by the node through computation. For example, the critical node B receives the data packet A that carries the proof of transit A, and after obtaining the proof of transit B through computation, the critical node B replaces the proof of transit A carried in the data packet A with the proof of transit B, to obtain the data packet B, where the data packet B does not include the proof of transit A but includes the proof of transit B. Similarly, the critical node C receives the data packet B that carries the proof of transit B, and after obtaining a proof of transit C through computation, the critical node C replaces the proof of transit B carried in the data packet A with the proof of transit C, to obtain the data packet C, where the data packet C does not include the proof of transit B but includes the proof of transit C. Each critical node replaces a proof of transit computed by a previous node, and the data packet needs to carry only one proof of transit, so that the data packet does not need to carry a proof of transit of each critical node traversed along the path, and an excessively large amount of data helps reduce data packet transmission overheads and occupied bandwidth resources.

In some other implementations, after obtaining a proof of transit through computation, each critical node adds the proof of transit obtained by the node through computation to the packet header of the data packet. For example, the critical node B receives the data packet A that carries the proof of transit A, and after obtaining the proof of transit B through computation, the critical node B adds the proof of transit B after the proof of transit A carried in the data packet, to obtain the data packet B, where the data packet B includes the proof of transit A and includes the proof of transit B. Similarly, the critical node C receives the data packet B that carries the proof of transit A and the proof of transit B, and after obtaining a proof of transit C through computation, the critical node C adds the proof of transit C after the proof of transit A and the proof of transit B that are carried in the data packet, to obtain the data packet C, where the data packet C includes the proof of transit A, the proof of transit B, and the proof of transit C. Each critical node continues to add the proof of transit of the node on the basis of a proof of transit computed by a previous node, so that the data packet can carry a proof of transit of each critical node traversed along the path, and an identity and a sequential position of each critical node that the data packet has passed through can be verified, thereby achieving stronger trustworthiness.

Transmission manner 2 of the actual sequential position: The actual sequential position of the critical node is notified by constructing an independent packet.

The first forwarding node generates a notification packet, where the notification packet carries the proof of transit of the first forwarding node and the sequential position of the first forwarding node on the actual forwarding path; and the first forwarding node sends the notification packet to the verification node.

In some implementations, the notification packet is a management plane protocol packet. For example, the notification packet is a NETCONF packet, and the NETCONF packet carries the proof of transit of the first forwarding node and the sequential position of the first forwarding node on the actual forwarding path.

In some implementations, the notification packet is a control plane protocol packet. For example, the notification packet is a control plane protocol packet such as a border gateway protocol flow specification (border gateway protocol flow spec, BGP flow specification, BGP flow spec or BGP FS for short), a path computation element protocol (path computation element protocol, PCEP), a BGP monitoring protocol (BGP monitoring protocol, BMP), a network stream (netstream) protocol, or a border gateway protocol (border gateway protocol, BGP).

In some implementations, the notification packet is an application layer protocol packet. The notification packet includes a hypertext transfer protocol HTTP packet, and a payload field in the HTTP packet includes the proof of transit of the first forwarding node and the sequential position of the first forwarding node on the actual forwarding path.

In some implementations, the first forwarding node is a last critical node on the expected forwarding path, and the second forwarding node includes all critical nodes on the expected forwarding path other than the first forwarding node.

An embodiment of this application provides three modes for verifying a proof of transit. A determining manner and a transmission manner of a proof of transit vary with a verification mode. The following further describes the determining manner and the transmission manner of the proof of transit by using examples with reference to the three verification modes. A real-time verification mode and an in-situ verification mode each are further divided into two sub-modes: a single-point mode and a multi-point mode. An endpoint verification mode does not have a single-point mode but has a multi-point mode.

### Verification mode 1: Real-time verification (postcard) mode

In real-time verification, "real-time" means that a time point of verifying a proof of transit is real-time relative to a time point of receiving a data packet. In the real-time verification mode, when each critical node on an actual forwarding path processes a data packet, the critical node computes a proof of transit and sends the proof of transit to a verification node in an out-of-band manner, that is, does not send a single-point proof of transit along an actual forwarding path of service data. The verification node deployed outside the actual forwarding path verifies the proof of transit in real time, and the critical node does not need to verify the proof of transit.

The real-time verification mode specifically includes a verification mode for a single-point proof of transit (OP sub-mode for short) and a verification sub-mode for a multi-point proof of transit (MP sub-mode for short). In a case of using the verification mode for a single-point proof in the real-time verification mode, each critical node computes a single-point proof of transit of the node and sends the single-point proof of transit. When the single-point proof of transit is computed, identity information of a previous critical node or a plurality of upstream critical nodes is not required. In a case of using the verification mode for a multi-point proof in the real-time verification mode, each critical node learns of identity information from an upstream critical node r_1 to a critical node r_i-1 through control plane pre-distribution, a data packet carrying service data, or other means.

In the real-time verification mode, when the critical node determines the proof of transit and the verification node verifies the proof of transit, both sequential positions used by the critical node and the verification node are sequential positions on the expected forwarding path, for example, 1, 2, 3, and 4, and neither of the sequential positions used by the critical node and the verification node is a sequential position on the actual forwarding path. The sequential position of the critical node on the actual forwarding path does not participate in a process of computing a proof of transit and a process of verifying a proof of transit, and the sequential position of the critical node on the actual forwarding path is used for proof storage.

In some implementations, in the real-time verification mode, regardless of whether the verification mode for a single-point proof or the verification mode for a multi-point proof is used, the critical node sends the sequential position of the node on the actual forwarding path to the verification node, to help implement recordability of a non-critical node.

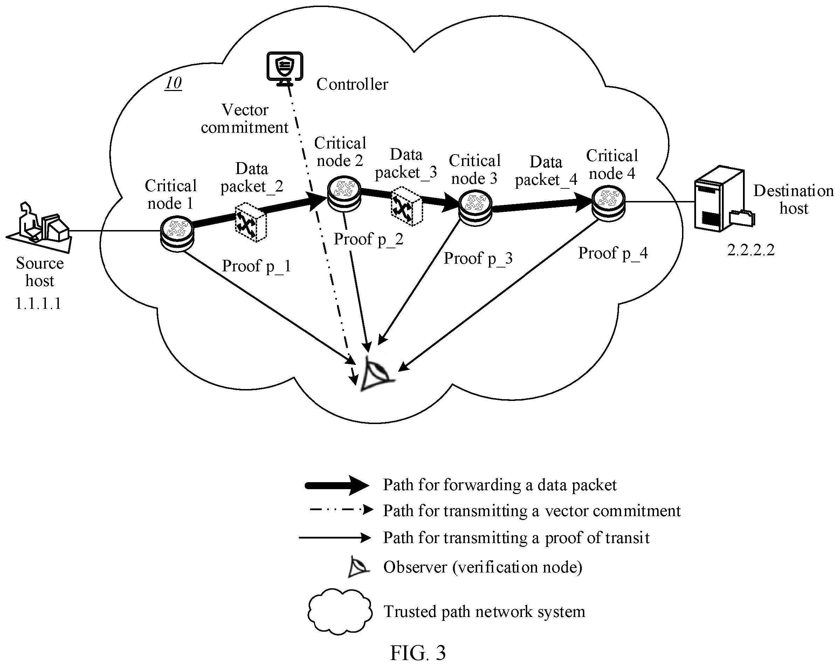

For example, FIG. 3 is a diagram of an architecture of a trusted path network system according to an embodiment of this application. The system 10 shown in FIG. 3 includes a controller, a critical node, and a verification node. In the system 10 shown in FIG. 3, an expected forwarding path traverses four critical nodes. A critical node 1 is a head node, a critical node 4 is a tail node, and both a critical node 2 and a critical node 3 are transit nodes. The verification node is connected to the critical node 1, the critical node 2, the critical node 3, and the critical node 4 in FIG. 3 through a communication network. In some implementations, the verification node is the controller in FIG. 3. Optionally, the controller and the verification node in the system shown in FIG. 3 are integrated on a same device. In other words, the controller not only obtains a vector commitment and sends the vector commitment, but also verifies a proof of transit.

In a process in which the critical node 1 performs data transmission, when the critical node 1 is a critical node, the critical node 1 constructs a new data packet based on payload data. A packet header of the data packet carries a trusted path identifier and path information, the path information carries identity information of each critical node on the expected forwarding path, and a payload field of the data packet carries payload data. The critical node 1 computes a single-point proof of transit OP_1 of the node by using an open function; or the critical node 1 computes a multi-point proof of transit MP_1 of the node by using a batch open function. The critical node 1 obtains a sequential position of the node on an actual forwarding path. The critical node 1 sends the sequential position of the node on the actual forwarding path and the proof of transit of the node to a verification node located outside the actual forwarding path, and the critical node 1 forwards the data packet to a 2^{nd} critical node.

In a process in which an i^{th} critical node performs data transmission, the i^{th} critical node receives a data packet_i from a previous critical node. A packet header of the data packet_i carries a trusted path identifier and path information. The i^{th} critical node verifies correctness of a source of the data packet_i. If the source of the data packet_i passes verification, the i^{th} critical node computes a proof of transit of the node. In addition, the i^{th} critical node obtains a sequential position of the node on the actual forwarding path. The i^{th} critical node sends the sequential position of the node on the actual forwarding path and the proof of transit of the node to a verification node located outside the actual forwarding path, and the i^{th} critical node forwards the data packet to a next critical node i+1. In addition, if the source of the data packet_i fails verification, the i^{th} critical node does not need to compute the proof of transit, and discards the data packet_i.

In a process in which the verification node performs real-time verification, the verification node receives the proof of transit from the i^{th} critical node, and verifies the proof of transit of the i^{th} critical node based on a vector commitment.

In a case of using a single-point proof of transit, in a process of computing a proof of transit, the i^{th} critical node computes a single-point proof of transit OP_i by using identity information r_i of the node and the sequential position i of the node on the expected forwarding path as an input; and the i^{th} critical node sends the single-point proof of transit OP_i and a sequential position of the node on the actual forwarding path together to the verification node. The verification node executes a verify function Verify(C, i, r_i, OP_i) in a vector commitment mechanism based on the input vector commitment C, the identity information r_i of the i^{th} critical node, the sequential position i of the i^{th} critical node on the expected forwarding path, and the single-point proof of transit OP_i computed by the i^{th} critical node, that is, verifies that identity information of a critical node at the sequential position i is r_i. Herein, C represents the vector commitment, i represents the sequential position on the expected forwarding path, r_i represents the identity information of the i^{th} critical node, and OP_i represents the single-point proof of transit computed by the i^{th} critical node.

In a case of using a multi-point proof of transit, in a process of computing a proof of transit, the i^{th} critical node computes a multi-point proof of transit MP_i by using identity information of each node from a 1^{st} critical node r_1 to the node r_i and a sequential position of each node from the 1^{st} critical node r_1 to the node r_i on the expected forwarding path as an input; and the i^{th} critical node sends the multi-point proof of transit MP_i and a sequential position of the node on the actual forwarding path together to the verification node located outside the actual forwarding path. The verification node executes a batch verify function batch verify(C, B, r_B, MP_i) in a vector commitment mechanism based on the input vector commitment C, the identity information r_1 to r_i of the 1^{st} critical node to the i^{th} critical node, the sequential position i of each critical node from the 1^{st} critical node to the i^{th} critical node on the expected forwarding path, and the multi-point proof of transit MP_i of the i^{th} critical node, where B=(r_1, r_2, ..., r_i). Herein, C represents the vector commitment, r_B represents a set including the identity information of each node from the 1^{st} critical node r_1 to the node r_i, B represents a set including the sequential position of each node from the 1^{st} critical node r_1 to the i^{th} critical node r_i on the expected forwarding path, and MP_i represents the multi-point proof of transit computed by the i^{th} critical node.

For example, in the real-time verification mode, regardless of whether the verification mode for a single-point proof or the verification mode for a multi-point proof is used, a critical node additionally constructs an independent data packet in a process of transmitting service data, where the data packet carries an actual sequential position of the node and a proof of transit of the node, and the data packet does not need to carry the service data. The critical node sends the data packet to the outside. For example, when the service data is transmitted to the i^{th} critical node, the data packet sent by the i^{th} critical node to the outside includes the following content.

| |
|---|
| Actual sequence number of the critical node r_i |
| Single-point proof of transit OP_i or multi-point proof of transit MP_i |

In the real-time verification mode provided in this embodiment, each critical node traversed by a data packet during actual transmission computes a proof of transit of the node, and sends the proof of transit of the node to the outside, so that an identity and a sequential position of each critical node that the data packet actually passes through are verified, thereby ensuring security hop by hop. In addition, after receiving the data packet, any critical node may compute a proof of transit and send the proof of transit, so that an observer can obtain and verify the proof of transit in real time. Compared with the endpoint verification mode, it does not need to wait for the data packet to be transmitted to a last critical node before verification is performed, thereby implementing real-time transparent tracking of data transmission and achieving a small attack window. In addition, because both the proof of transit and the sequential position on the actual forwarding path are sent to the external verification node (the observer), and public audit of the proof of transit and the sequential position on the actual forwarding path is supported, it can be learned that the real-time verification mode can significantly improve security of data transmission.

### Verification mode 2: In-situ verification (passport) mode

In the in-situ verification mode, when each critical node i on an actual forwarding path processes a data packet, the critical node i computes a proof of transit p_i of the node, and adds the proof of transit to the data packet transmitted in an in-situ mode. The critical node i sends a data packet_i+1, where the data packet_i+1 includes the proof of transit p_i. Because the sent data packet carries the proof of transit, the proof of transit is forwarded to a next critical node i+1 along with the data packet along the path, so that the next critical node verifies the proof of transit p_i. In addition, each critical node i also serves as an observer, and before computing the proof of transit p_i of the critical node i, the critical node verifies a proof of transit p_i-1 of a previous critical node i-1, thereby reducing a risk that a data packet source is incorrect. The proof of transit p_i is, for example, a single-point proof OP, or a multi-point proof MP.

The in-situ verification mode specifically includes a verification mode for a single-point proof of transit (OP sub-mode for short) and a verification sub-mode for a multi-point proof of transit (MP sub-mode for short).

In a case of using the verification mode for a single-point proof in the in-situ verification mode, each critical node computes a single-point proof of transit OP_i of the node, and adds the single-point proof of transit OP_i to a data packet, so that the single-point proof of transit OP_i and service data are transmitted to a next critical node together. When the single-point proof of transit is computed, identity information of a previous critical node or a plurality of upstream critical nodes is not required.

In a case of using the verification mode for a multi-point proof in the in-situ verification mode, each critical node learns of identity information from a 1^{st} critical node r_1 to a previous critical node r_i-1 through control plane pre-distribution, a data packet carrying service data, or other means. Each critical node computes a multi-point proof of transit MP_i of the node based on the identity information and a sequential position of each node from the 1^{st} critical node r_1 to the node, and adds the single-point proof of transit MP_i to the data packet, so that the single-point proof of transit MP_i and the service data are transmitted to a next critical node together.

Optionally, in the in-situ verification mode, regardless of whether the verification mode for a single-point proof or the verification mode for a multi-point proof is used, the 1^{st} critical node adds an actual sequential position list to the data packet, and each critical node i adds a sequential position of the node on the actual forwarding path to the actual sequential position list carried in the data packet, to help record an actual sequential position of each critical node on an upper-half path that the data packet has passed through.

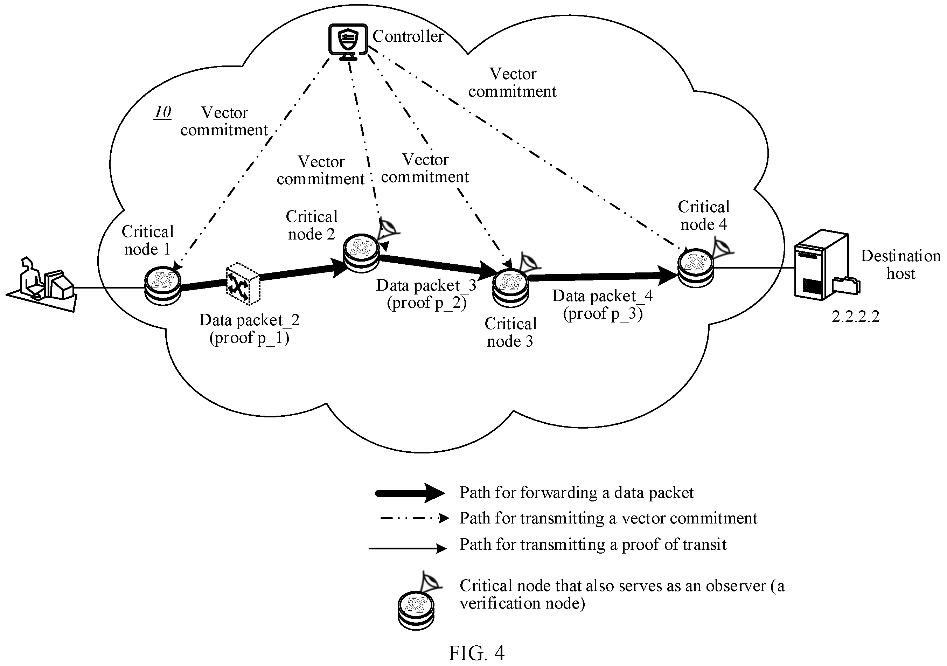

For example, referring to FIG. 4, a forwarding node_2, a forwarding node_3, and a critical node 4 in FIG. 4 are all verification nodes. The forwarding node_2 verifies a proof of transit p_1 of a critical node 1. The forwarding node_3 verifies a proof of transit p_2 of the forwarding node_2. The critical node 4 verifies a proof of transit p_3 of the forwarding node_3 in FIG. 3.

In a process in which the critical node 1 performs data transmission, when the critical node 1 is a critical node, the critical node 1 computes a single-point proof of transit OP_1 of the node by using an open function; or the critical node 1 computes a multi-point proof of transit MP_1 of the node by using a batch open function. The critical node 1 obtains a sequential position of the node on an actual forwarding path. The critical node 1 constructs a new data packet based on a vector commitment, payload data, the proof of transit of the critical node 1, and the sequential position of the critical node 1 on the actual forwarding path. A packet header of the data packet carries a trusted path identifier, the vector commitment, the proof of transit of the critical node 1, path information, and an actual sequential position list, the path information carries identity information of each critical node on the expected forwarding path, and a payload field of the data packet carries payload data. The actual sequential position list includes the sequential position of the critical node 1 on the actual forwarding path.

In a process in which an i^{th} critical node performs data transmission, the i^{th} critical node receives a data packet_i from an (i-1)^{th} critical node. A packet header of the data packet_i carries a trusted path identifier, path information, and a proof of transit of the (i-1)^{th} critical node. The path information carries the identity information of each critical node on the expected forwarding path. The i^{th} critical node verifies the proof of transit of the (i-1)^{th} critical node that is carried in the data packet. If the proof of transit of the (i-1)^{th} critical node passes verification, a source of the data packet_i passes verification, and the i^{th} critical node computes the proof of transit, and replaces a proof of transit of a previous critical node that is carried in the packet header of the data packet_i with the proof of transit computed by the node. In addition, the i^{th} critical node adds the sequential position of the node on the actual forwarding path to the actual sequential position list carried in the data packet_i, to obtain a data packet_i+1. The data packet_i+1 carries payload data in the data packet_i, the actual sequential position list, and the proof of transit of the i^{th} critical node. The i^{th} critical node forwards the data packet to the (i+1)^{th} critical node. In addition, if the proof of transit of the (i-1)^{th} critical node fails verification, the i^{th} critical node does not need to compute the proof of transit, and discards the data packet_i.

In a case of using a single-point proof of transit, in a process of verifying a proof of transit of a previous critical node, the i^{th} critical node verifies, based on identity information of the (i-1)^{th} critical node and a sequential position of the (i-1)^{th} critical node on the expected forwarding path, a single-point proof of transit OP_i-1 of the (i-1)^{th} critical node that is carried in the packet header of the data packet. In a process of computing the proof of transit of the node, the i^{th} critical node computes a single-point proof of transit OP_i by using the public identity r_i of the node and the sequential position i of the node on the expected forwarding path as an input. The i^{th} critical node replaces the single-point proof of transit OP_i-1 of the previous critical node that is carried in the packet header of the data packet_i with the single-point proof of transit OP_i.

In a case of using a multi-point proof of transit, optionally, the data packet_i further includes a sequential position of each critical node from a 1^{st} critical node to the i^{th} critical node on the actual forwarding path. In a process of verifying a proof of transit of an upper-half path, the i^{th} critical node verifies, based on the identity information of each critical node from the 1^{st} critical node to the (i-1)^{th} critical node and the sequential position of each critical node from the 1^{st} critical node to the (i-1)^{th} critical node on the expected forwarding path, a multi-point proof of transit MP_i-1 of the (i-1)^{th} critical node that is carried in the data packet. In a process of computing the proof of transit of the node, the i^{th} critical node computes a multi-point proof of transit MP_i by using the identity information of each node from the 1^{st} critical node r_1 to the node r_i and the sequential position of each node from the 1^{st} critical node r_1 to the node r_i on the expected forwarding path as an input. The i^{th} critical node replaces the multi-point proof of transit MP_i-1 of the previous critical node that is carried in the packet header of the data packet_i with the multi-point proof of transit MP_i.

In the in-situ verification mode, when the critical node determines the proof of transit and verifies the proof of transit of the previous critical node, both used sequential positions are sequential positions on the expected forwarding path, for example, 1, 2, 3, and 4, and neither of the used sequential positions is a sequential position on the actual forwarding path. The sequential position of the critical node on the actual forwarding path does not participate in a process of computing a proof of transit and a process of verifying a proof of transit, and the sequential position of the critical node on the actual forwarding path is used for proof storage.

For example, in a case of using the in-situ verification mode, regardless of whether the verification mode for a single-point proof or the verification mode for a multi-point proof is used, in a process of transmitting service data, a critical node adds an actual sequential position of the node and a proof of transit of the node to a data packet, and sends the data packet including the service data, the actual sequential position of the node, and the proof of transit of the node to a next critical node, so that the actual sequential position of the node and the proof of transit of the node are transmitted along with the service data along the forwarding path. For example, when the service data is transmitted to the i^{th} critical node, the data packet sent by the i^{th} critical node to the next critical node includes the following content. For example, the packet header of the data packet carries an actual sequence number and a proof of transit shown below.

| |
|---|
| Actual sequence number of the critical node r_1 |
| ... |
| Actual sequence number of the critical node r_i-1 |
| Single-point proof of transit OP_i or multi-point proof of transit MP_i |

In the in-situ verification mode provided in this embodiment, each critical node that a data packet passes through during actual transmission computes a proof of transit of the node, and verifies a proof of transit of a previous critical node, so that an identity and a sequential position of each critical node that the data packet actually passes through are verified, thereby ensuring security hop by hop. In addition, because the proof of transit is included in the packet header of the service data packet in an in-situ manner, compared with a solution in which a data packet is separately constructed to transmit a proof of transit, this has moderate computation and communication costs and moderate protocol procedures and complexity, and is a compromise solution.

Further, benefits achieved by verifying a single-point proof of transit of a previous critical node by each critical node include but are not limited to the following aspects.
1. The probability of deceiving and tampering is further reduced. First, this further reduces the probability of deceiving and tampering. Specifically, verification on each critical node is based on verification on a previous hop, which is equivalent to forming a continuous verification chain. Once a critical node is verified as fraudulent, a subsequent critical node may immediately stop forwarding, so that the probability of a data packet being forged, deceived, or tampered with by any hop of node on a forwarding path is reduced, thereby improving network security.
2. Path validation integrity. A single-point proof of transit of each hop of critical node is verified by a next hop, so that a risk of missing verification on a proof of a node on a forwarding path is reduced, and it can be gradually verified that each hop of node on the entire forwarding path is at a correct position and there is almost no skipping or interruption.
3. Privacy protection. Because identity information and a relative position of a node other than a previous critical node do not need to be used when a single-point proof of transit of the previous critical node is verified, identity information and a relative position of each critical node only need to be exposed to a next critical node, and do not need to be exposed to a critical node other than the next critical node, thereby protecting privacy of a critical node to some extent, and reducing a risk of leakage of identity information and a relative position.
4. Correctness of a position of a critical node can be verified. Because a proof of transit of each critical node is obtained based on identity information and a sequential position, by verifying a single-point proof of transit of each critical node, it can be verified whether the critical node forwards a data packet at an expected sequential position.

Further, benefits achieved by verifying a multi-point proof of transit of a critical node on an upper-half path by each hop of critical node include but are not limited to the following aspects.
1. Improve efficiency. Compared with a single-point proof of transit separately verified by each node, a multi-point proof of transit can be verifying proof of transits of a plurality of critical nodes at a time, thereby improving overall verification performance for a forwarding path by using an advantage of batch processing, and reducing time for proof computation and proof verification.
2. Reduce a quantity of times of verification. Verifying proof of transits of a plurality of critical nodes can reduce a quantity of times of actual verification. For example, for m critical nodes on a forwarding path, a single-point proof of transit of each critical node needs to be verified m times. Verifying a multi-point proof of transit of the m nodes can be for verifying the m nodes at a time, so that a quantity of times of verification can be reduced to 1, thereby reducing a quantity of times of verification that needs to be performed for the entire forwarding path, and accelerating a verification speed.
3. Better scalability. Compared with a manner of a single-point proof of transit, in a manner of a multi-point proof of transit, time costs of proof computation and proof verification almost do not linearly increase as a quantity of nodes on a forwarding path increases. Therefore, even if the forwarding path includes more critical nodes that need to be verified, verification costs almost do not greatly increase. Because a verification process has an efficiency advantage of batch processing, overall performance can still maintain at a high level.
4. Integrate verification results of a plurality of critical nodes. Similar to effects of a single-point proof of transit, verification results of a plurality of critical nodes on a forwarding path may be integrated, so that a verification range covers a position and an identity of each critical node on the entire forwarding path, and the entire forwarding path is comprehensively verified.

### Verification mode 3: Endpoint verification (final_only) mode

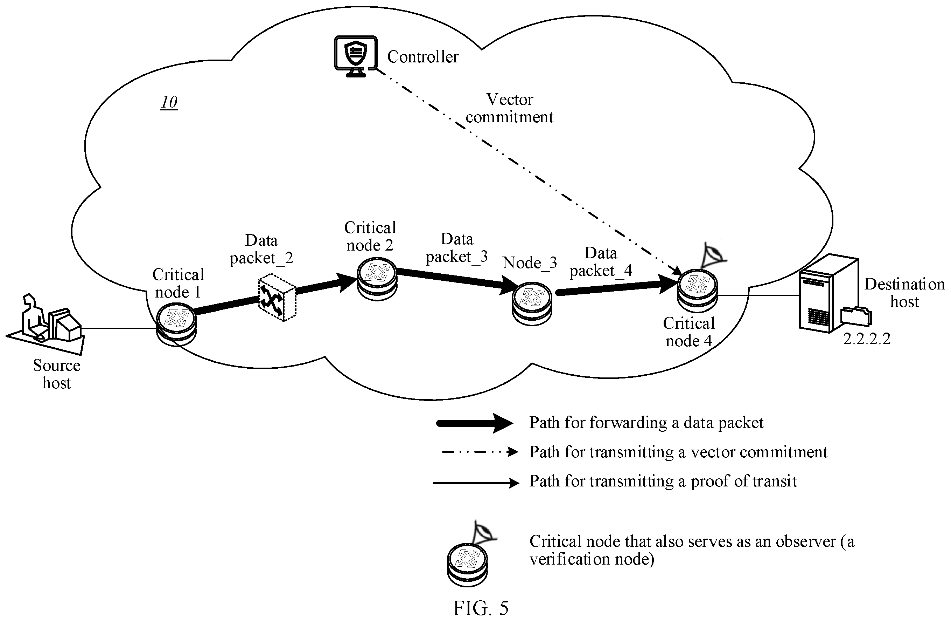

In the endpoint verification mode, a tail node on a forwarding path also serves as an observer, the tail node obtains a proof of transit based on a relative position of each forwarding node (including the tail node) on the forwarding path and identity information of each forwarding node, and the tail node verifies the obtained proof of transit. For example, FIG. 5 is a diagram of a scenario of verifying a proof of transit in an endpoint verification mode according to an embodiment of this application. The scenario shown in FIG. 5 is described by using an example in which a forwarding path includes four forwarding nodes. A critical node 4 in FIG. 5 is a specific example of a tail node that serves as a verification node. There may be more or fewer forwarding nodes on the forwarding path. For example, there may be only two forwarding nodes on the forwarding path. In this case, a 2^{nd} forwarding node (for example, a node_2 in FIG. 5) on the forwarding path serves as a verification node. Alternatively, there are dozens of, hundreds of, or more forwarding nodes on the forwarding path.

In a process in which a critical node 1 performs data transmission, when the critical node 1 is a critical node, the critical node 1 constructs a new data packet based on a vector commitment, payload data, and a sequential position of the critical node 1 on an actual forwarding path. A packet header of the data packet carries a trusted path identifier, the vector commitment, path information, and an actual sequential position list, and a payload field of the data packet carries payload data. The actual sequential position list includes the sequential position of the critical node 1 on the actual forwarding path.

In a process in which an i^{th} critical node serving as a transit node performs data transmission, the i^{th} critical node does not need to perform a process of computing a proof of transit and a process of verifying a proof of transit, and the i^{th} critical node verifies a source of a data packet in a manner other than verification of a proof of transit. The i^{th} critical node adds a sequential position of the node on the actual forwarding path to the actual sequential position list carried in a data packet_i, and records the actual sequential position of the node by maintaining the actual sequential position list.

A last critical node (the tail node) receives a data packet_N. The data packet_N includes a packet header, the packet header carries a trusted path identifier and path information P=(r_1, r_2, ..., r_N), and the path information carries identity information of each critical node on the expected forwarding path, where r_i represents a publicly verifiable identity of the forwarding node i. In a process of computing a proof of transit, the last critical node obtains a multi-point proof of transit MP_N based on identity information of each node from the critical node 1 to the critical node r_N and a sequential position of each critical node from the critical node 1 to the critical node r_N on the expected forwarding path. In a process of verifying the proof of transit by the last critical node, the last critical node obtains the multi-point proof of transit MP_N, the vector commitment C, and the path information P=(r_1, r_2, ..., r_N). The last critical node verifies the multi-point proof of transit MP_N based on the vector commitment mechanism, the vector commitment C, the sequential position of each critical node on the expected forwarding path in the path information P, and the identity information of each node in the path information P by using a batch verify function (batch verify), and executes batch verify(C, MP_N, P), that is, verifies that identity information of each critical node at the sequential position i on the entire actual forwarding path is r_i. In addition, the last critical node obtains the actual sequential position list from the data packet_N and stores the actual sequential position list.

For example, in the endpoint verification mode, regardless of whether the verification mode for a single-point proof or the verification mode for a multi-point proof is used, because each critical node adds an actual sequential position of the node to a data packet that carries service data, the data packet carries the service data and additionally carries an actual sequential position of each critical node that the data packet has passed through. For example, when the data packet is transmitted to the i^{th} critical node, in addition to the service data, the data packet further includes the following content.

| |
|---|
| Actual sequence number of the critical node r_1 |
| ... |
| Actual sequence number of the critical node r_i-1 |

In the endpoint verification mode provided in this embodiment, because each critical node other than the tail node on the forwarding path does not need to compute and verify the proof of transit, and the proof of transit is computed and verified only on the tail node at a time, overall overheads of all critical nodes on the forwarding path are small.

In addition, because each hop of node on a forwarding path does not need to send a proof of transit to a verification node, packet generation and transmission overheads caused by sending the proof of transit by the forwarding node are reduced, and bandwidth occupied for transmission of the proof of transit in a network is also reduced.

Verification based on identity information and a relative position of each critical node on a forwarding path is merely used as an example. In some other implementations of this application, a critical node in a specific range before a current critical node on the forwarding path can be traced and verified. A verifier may flexibly specify, based on an actual requirement, a range that needs to be traced, and different critical nodes may be responsible for verifying different parts of the forwarding path, so that a more flexible and adjustable tracing capability is provided. The following uses two hops or three critical nodes before the forwarding critical node as an example for description.

In another possible implementation, the critical node i verifies the proof of transit based on the vector commitment, identity information of two critical nodes before the critical node i on the forwarding path, and relative positions of the two critical nodes before the critical node i, to support traceability and verification on correctness of the two critical nodes before the critical node i. For example, a 3^{rd} critical node verifies, based on the vector commitment, identity information of a 1^{st} critical node, a relative position of the 1^{st} critical node, identity information of a 2^{nd} critical node, and a relative position of the 2^{nd} critical node, a proof of transit received by the 3^{rd} critical node; and a 5^{th} critical node verifies, based on the vector commitment, identity information of the 3^{rd} critical node, a relative position of the 3^{rd} critical node, identity information of a 4^{th} critical node, and a relative position of the 4^{th} critical node, a proof of transit received by the 5^{th} critical node.

In another possible implementation, the critical node i verifies the proof of transit based on identity information of three critical nodes before the critical node i on the forwarding path, relative positions of the three critical nodes before the critical node i, and the vector commitment, to support traceability and verification on correctness of the three critical nodes before the critical node. For example, a 4^{th} critical node verifies, based on identity information of a 1^{st} critical node, a relative position of the 1^{st} critical node, identity information of a 2^{nd} critical node, a relative position of the 2^{nd} critical node, identity information of a 3^{rd} critical node, a relative position of the 3^{rd} critical node, and the vector commitment, a proof of transit received by the 4^{th} critical node; and a 7^{th} critical node verifies, based on identity information of the 4^{th} critical node, a relative position of the 4^{th} critical node, identity information of a 5^{th} critical node, a relative position of the 5^{th} critical node, identity information of a 6^{th} critical node, a relative position of the 6^{th} critical node, and the vector commitment, a proof of transit received by the 7^{th} critical node.

In a possible implementation, in response to determining that the proof of transit carried in the data packet fails verification, the critical node discards the received data packet. Discarding a data packet including a proof of transit that fails in verification helps block further transmission of data from an invalid source, thereby improving network security. Specifically, if the critical node finds that the proof of transit carried in the data packet fails verification, it proves that a data source may be problematic, for example, a node on the path is skipped or a redundant, unspecified node is traversed before the data packet is forwarded to the node, and the critical node discards the data packet, to avoid further transmission of a packet with a problematic data source from a current node to a next node, thereby quickly avoiding further propagation of the data packet with a problematic data source, reducing the probability of unauthorized data access and tampering, reducing the possibility of a network attack, and improving network security.

In a possible implementation, in response to determining that a proof of transit carried in a data packet fails verification, a critical node outputs alarm information, where the alarm information indicates that the proof of transit fails verification. In a possible implementation, the critical node advertises the alarm information to a network management system (network management system, NMS), an element management system (element management system, EMS), or a controller by using a management plane protocol. For example, the critical node sends a network configuration protocol (network configuration protocol, NETCOF) packet to the controller, where the NETCOF packet carries the alarm information, and the NETCOF packet indicates that the proof of transit fails verification. For another example, the critical node sends a simple network management protocol (simple network management Protocol, SNMP) packet to the controller, where the SNMP packet carries the alarm information, and the SNMP packet indicates that the proof of transit fails verification. For another example, the critical node sends, to the controller based on telemetry (telemetry), the alarm information indicating that the proof of transit fails verification. For another example, the critical node sends, to the controller based on a representational state transfer (representational state transfer, RESTful) principle, the alarm information indicating that the proof of transit fails verification. For another example, the critical node sends, to the controller in a log form based on a log management protocol, the information indicating that the proof of transit fails verification. For example, the critical node sends a system logging protocol (system logging protocol, Syslog) packet to the controller, where the Syslog protocol packet carries the alarm information indicating that the proof of transit fails verification. Syslog is a standard UNIX system log management protocol for sending log information generated by a device or an application program to a remote server. In a possible implementation, the critical node outputs the alarm information through an alert notification. The alert notification may be sent via an SMS message, an email, an instant messaging tool, or the like, so that an administrator or a network security team can receive the alert notification in time and take a corresponding measure. In another possible implementation, the critical node outputs the alarm information through log recording. For example, the critical node_i records, in a system log, information about the data packet_i that fails in verification. In still another possible implementation, the critical node_i sends the alarm information to the controller. The controller provides visualized alarm information display, to help an administrator quickly find a problem and take a measure.

In a possible implementation, in response to determining that the proof of transit passes verification, the critical node further forwards the received data packet.

The KZG polynomial commitment is merely a possible implementation of obtaining the vector commitment, and not only can achieve an effect of binding of a proof of transit and a position, but also has an advantage of high efficiency. A vector commitment obtained in another manner can also achieve the effect of binding of a proof of transit and a sequence.

In some other possible implementations, a commitment is obtained and verified based on identity information of a critical node and a relative position of the critical node in a fast Reed-Solomon interactive (fast Reed-Solomon interactive, FRI) commitment manner. The FRI commitment is a commitment mechanism, is for verifying integrity of a polynomial in an interactive proof system, and can be for quickly verifying, without a need of computing the entire polynomial item by item, whether the polynomial meets a set of constraints. The FRI commitment greatly reduces complexity of polynomial verification by constructing a plurality of small-scale Reed-Solomon codes and related proofs based on Reed-Solomon coding and interactive proof protocols.

In some other possible implementations, a commitment is obtained and verified based on identity information of a critical node and a relative position of the critical node in a succinct non-interactive argument of knowledge (succinct non-interactive argument of knowledge, SNARK) commitment manner. The SNARK commitment is a protocol for proving correctness of one time of computation and that an input owned by a party meets a specific condition. The SNARK proof is non-interactive, that is, a prover does not need to interact with a verifier, and only needs to generate a proof and send the proof to the verifier. The SNARK proof is compact, a size of the proof is small, and verification time is short.

In some other possible implementations, a proof of transit or a vector commitment is obtained based on identity information of a critical node and a relative position of the critical node in a scalable transparent argument of knowledge (scalable transparent argument of knowledge, STARK) commitment manner; or a proof of transit is verified based on a vector commitment in a STARK commitment manner. The STARK is a zero-knowledge proof technology. Starting of the STARK does not need to be set by a trusted third party. Therefore, the STARK is more decentralized and distributed, impact of a single point of failure on obtaining the proof of transit or the vector commitment is reduced, and there is high security. In addition, the STARK is post-quantum secure. Therefore, the STARK helps improve a capability of resisting a quantum computation attack for the proof of transit, and is more reliable in security protection of the proof of transit and the identity information. In addition, a data amount of the proof of transit generated based on the STARK is small. This means that small storage space is needed for proof transmission, and there is an advantage in verification efficiency. For example, a next-hop critical node or a verification node can verify validity of the proof of transit in short time.

In some other possible implementations, a proof of transit or a vector commitment is obtained based on identity information of a critical node and a relative position of the critical node in a bulletproof manner; or a proof of transit is verified based on a vector commitment in a bulletproof manner. The bulletproof is a zero-knowledge proof technology. The bulletproof is an encryption primitive used in a zero-knowledge proof, and is for proving that a value meets a relationship, and no additional proof information needs to be provided. Starting of the bulletproof does not need to be set by a trusted third party. Therefore, the bulletproof is more decentralized and distributed, impact of a single point of failure on obtaining the proof of transit or the vector commitment is reduced, and there is high security.

In some other possible implementations, a commitment is obtained and verified based on identity information of a critical node and a relative position of the critical node in an RSA accumulator manner. The RSA accumulator is a data structure, and is for accumulating elements in a set to the accumulator, so that whether an element belongs to the set can be verified subsequently. Based on an RSA additively homomorphic property, the RSA accumulator may verify, without disclosing the elements in the set, whether a specific element is included in the accumulator.

In some other possible implementations, a commitment is obtained and verified based on identity information of a critical node and a relative position of the critical node in an FC function commitment manner. The FC function commitment is a commitment mechanism, and is for binding an input to a computation result of a function, so that the computation result can be verified without exposing the input. The FC function commitment can be implemented by combining a zero-knowledge proof system and a commitment mechanism, and can be for protecting computer privacy and verifying correctness of a computation result.

In some other possible implementations, a commitment is obtained and verified based on identity information of a critical node and a relative position of the critical node in a Pedersen commitment manner. The Pedersen commitment is a commitment mechanism, and is for committing a value or a vector to a hidden value. The Pedersen commitment is based on a discrete logarithm difficult problem, so that only a committer learning of a hidden value can verify correctness of the commitment without exposing an actual value.

In some other possible implementations, a commitment is obtained and verified based on identity information of a critical node and a relative position of the critical node in a Merkle tree (Merkle tree) commitment manner. The Merkle tree commitment is a commitment mechanism, and is for binding a plurality of elements in a set to a tree-like structure. In the Merkle tree, by using a hash function, the elements are combined level by level and a root hash is generated. The root hash is a commitment to the entire tree. In a verify phase, to verify whether an element belongs to the tree, only some elements in the set and a hash value on a related path need to be learned of.

In some other possible implementations, a commitment is obtained and verified based on identity information of a critical node and a relative position of the critical node in a Verkle tree (Verkle tree) commitment manner. The Verkle tree commitment is a commitment mechanism, and is for binding a plurality of elements in a set to a non-binary tree-like structure. In the Verkle tree, by using a polynomial commitment, a path from a root node to a leaf node in the tree is committed, and a plurality of paths are aggregated. In a verify phase, to verify whether an element belongs to the tree, only some elements in the set and a polynomial commitment on a related path need to be learned of.

In some other possible implementations, a source of a data packet is verified based on an aggregate signature. For example, the data packet includes a digital signature. The signature may be a signature of a previous-hop critical node i-1, or may be an aggregate signature of all nodes from a node_1 to a critical node i-1 on an upper-half segment. The aggregate signature is characterized by that a length of an aggregation result of an infinite quantity of signatures is equal to a length of one signature. It is known that there is a public key infrastructure (Public Key Infrastructure, PKI), that is, a public identity of a node is known, and the critical node i may verify correctness of the signature.

In some other possible implementations, a source of a data packet is verified based on a MAC tag. For example, the data packet includes the MAC tag, and the critical node i verifies correctness of the MAC tag.

The following uses an example to describe a trigger condition for computing a proof of transit by a forwarding node.

In a possible implementation, after a critical node_i obtains a data packet, in response to identifying that the data packet carries a trusted path identifier, the critical node_i obtains a proof of transit. A packet header in the data packet includes the trusted path identifier.

The trusted path identifier indicates to obtain a proof of transit. For example, the trusted path identifier is for distinguishing whether a critical node currently needs to compute a proof of transit.

A trusted path identifier is included in a packet header of a data packet, so that a critical node can determine, depending on whether there is the identifier, whether a proof of transit needs to be computed. For example, if the critical node_i determines that the data packet does not carry the trusted path identifier, the critical node_i uses an original forwarding mechanism, and does not need to compute the proof of transit. Specifically, effects achieved by including the trusted path identifier in the packet header include but are not limited to the following aspects.
1. Improve flexibility. Specifically, the trusted path identifier provides an optional mechanism, allowing a critical node to determine, based on a specific requirement and a change of the requirement, whether a proof of transit needs to be computed, thereby improving flexibility and scalability.
2. Simplify a configuration, and reduce a possibility of a configuration error. Compared with a static configuration manner of configuring, on a critical node, a packet for which a proof of transit is generated, a manner in which a packet header of a data packet includes a trusted path identifier makes it unnecessary to preconfigure, on a forwarding node, a packet for which a proof of transit needs to be generated, thereby simplifying a configuration procedure, and reducing configuration complexity. In addition, the probability of omitting, during a manual configuration, a task of configuring a packet for which a proof of transit is obtained is also reduced.
3. Reduce computing resources. When a data packet does not carry a trusted path identifier, a critical node may determine that a proof of transit does not need to be computed, thereby reducing computing resources and time, and improving overall network performance and efficiency.

In another possible implementation, after the critical node_i obtains the data packet, the critical node_i identifies a service type carried in the data packet; and in response to identifying that the data packet carries data of a specific service type, obtains the proof of transit, to implement a proof of transit for a specific service. For example, in response to identifying that the data packet includes a network service header (network service header, NSH) in a service function chaining protocol, the critical node_i determines that the data packet carries data of service function chaining, and obtains the proof of transit. For another example, the critical node_i performs application identification on payload data in the data packet, to obtain an application type corresponding to the payload data; and in response to the application type being a target application, obtains the proof of transit. Effects achieved by obtaining a proof of transit for a specific service include but are not limited to the following aspects.
1. Flexibly and accurately match a service requirement. Whether to compute a proof of transit is determined depending on whether a packet includes data related to a specific service, so that the proof of transit needs to be computed only for the data related to the specific service, to flexibly compute a proof of transit based on requirements of different services. This can implement personalized proof of transit requirements of different services, and improve network flexibility and customizability.
2. Simplify a configuration, and reduce a possibility of a configuration error. Compared with a static configuration manner of configuring, on a critical node, a packet for which a proof of transit is generated, a manner in which a critical node automatically determines, by identifying a service carried in a data packet, whether to generate a proof of transit makes it unnecessary to preconfigure, on a forwarding node, a packet for which a proof of transit needs to be generated, thereby simplifying a configuration procedure, and reducing configuration complexity. In addition, the probability of omitting, during a manual configuration, a task of configuring a packet for which a proof of transit is obtained is also reduced.
3. Reduce computing resources. When a data packet does not carry data related to a specific service, a critical node may determine that a proof of transit does not need to be computed, thereby avoiding a waste of computing resources for other data for which a proof does not need to be computed, reducing computing resources and time, and improving overall network performance and efficiency.

In another possible implementation, after the critical node_i obtains the data packet, in response to identifying that the data packet includes an identifier of each node on a specific tunnel, the critical node_i obtains the proof of transit, to verify whether the data packet is forwarded through the specific tunnel. For example, in an SRv6 scenario, in response to identifying that the data packet carries a segment list (segment list), the critical node_i obtains the proof of transit. For another example, in an MPLS scenario, in response to identifying that the data packet carries a label stack, the critical node_i obtains the proof of transit.

The following describes the foregoing method by using instances with reference to two instances in specific application scenarios.

Instance 1: KZG polynomial commitment-based service function chaining (service function chaining, SFC) trusted path protection mechanism.

In the instance 1, a service function chain is a specific example of a forwarding path, an SF or SFC proxy is a specific example of a forwarding node (critical node). In the instance 1, an NSH is a specific example of a packet header that carries a vector commitment and a proof of transit. In the instance 1, SF_from is a specific example of identity information of a critical node. A KZG polynomial commitment is a specific example of a vector commitment.

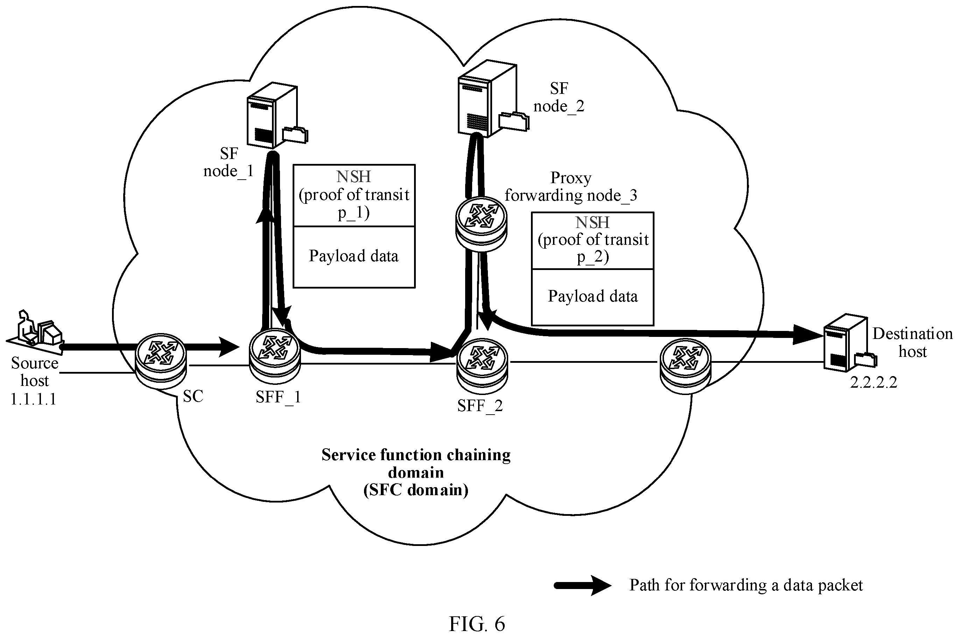

The service function chain is an ordered set of service functions. The service function chain is used to guide each service function to sequentially process traffic as required. The service function chain is mainly used in an NFV network. As shown in FIG. 6, a network device plays different roles in an entire service function chaining system based on different used functions. Roles in the service function chaining mainly include a classifier (service classifier, SC), a service function (service function, SF) node, a service function forwarder (service function Forwarder, SFF) node, and an SFC proxy (SFC proxy) node.

The classifier (SC) is located at a boundary ingress of an SFC domain. After a packet enters the SFC domain, traffic classification is performed first, and a service identifier is set and a service packet header is encapsulated.

The SF node is configured to provide a service processing service. The SF node includes but is not limited to a firewall (firewall, FW), a load balancer (load balancer, LB), an intrusion prevention system (intrusion prevention system, IPS), an application accelerator, network address translation (network address translation, NAT), a web application firewall (Web application firewall, WAF, also referred to as a website application-level intrusion prevention system), bandwidth control, virus detection, cloud storage, deep packet inspection (deep packet inspection, DPI), intrusion detection, a hypertext transfer protocol (hypertext transfer protocol, HTTP) header enrichment (HTTP header enrichment), and the like. In the service function chaining, network traffic needs to pass through SF nodes in a specified sequence required by service logic, to implement a required service.

Depending on whether a device identifies network service header (network service header, NSH) packet encapsulation, SF nodes may be further classified into an NSH-aware SF (NSH-aware SF) node and an NSH-unaware SF (NSH-unaware SF) node. The NSH-aware SF node can identify and forward an NSH packet. The NSH-unaware SF node cannot identify an NSH packet, and discards the NSH packet.

The SFF node is a device connected to an SF service function point. The SFF node is configured to identify service flow information, and perform forwarding based on the service flow information.

The SFC proxy node is located between an SFF node and an NSH-unaware SF node associated with the SFF node, and is configured to delete or add NSH encapsulation information for the NSH-unaware SF.

In a service function chaining scenario, how to ensure that traffic is forwarded based on a specified network path is a key technical problem. In this embodiment, the NSH-aware SF or the SFC proxy serves as a critical node, a KZG polynomial commitment is used to construct a vector commitment, and a packet header NSH in the SFC carries information related to a trusted path.

The following uses an example to describe a format of the packet header NSH that carries the information related to the trusted path.

The NSH is a packet header identifying an SFC protocol. The NSH meets a fixed format, and an extensible optional variable-length metadata (Optional Variable-length Metadata, OVLM) data field is reserved. In this embodiment, a trusted path packet header is implemented in OVLM.

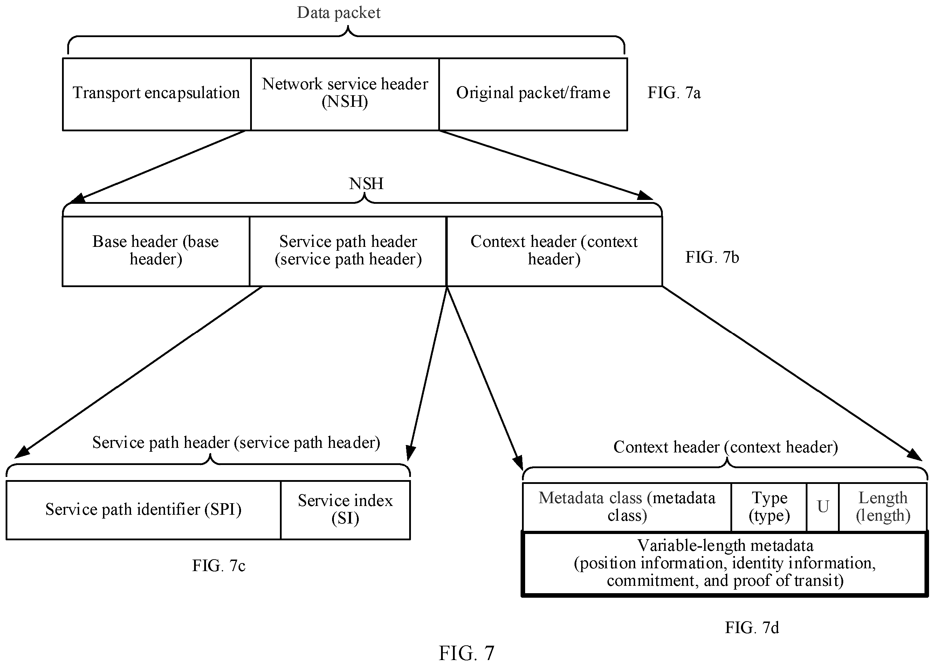

FIG. 7a shows an overall encapsulation format of a data packet in a service function chaining scenario. The data packet includes an original packet, transport encapsulation (transport encapsulation), and a network service header (NSH). The original packet (original packet) is a payload in the data packet, and the original packet carries service data that is carried. The transport encapsulation includes content of a transport layer protocol (such as TLS). The following uses an example to describe a format of the NSH.

As shown in FIG. 7b, the NSH includes a 4-byte base header (base header) and a 4-byte service path header (service path header). The base header provides a basic identifier. The service path header (service path header) provides a path identifier and a position on a current path. Optionally, the NSH further includes a context header (context header). The context header (context header) includes an extensible optional variable-length metadata (optional variable-length metadata, OVLM) field.

As shown in FIG. 7c, the service path header (service path header) includes a service index (service index, SI) and a service path identifier (service path identifier, SPI). The SPI occupies 24 bits. The service index (SI) indicates a current position of the data packet on the forwarding path, and the SI occupies eight bits. A format of the service path header (service path header) is shown in FIG. 7a to FIG. 7d. In a possible implementation, an SF node_i obtains a value of the SI field carried in the service path header, uses the value of the SI field as a position_i of the node, and computes a proof of transit p_i of the node based on the position_i. The value of the SI ranges from 255 to 0, descending by 1 each time. Therefore, x_i=256-SI.

In a possible implementation, after a controller selects a trusted path and computes a commitment C for the trusted path, the controller publicly stores a correspondence between the SPI and the commitment C in a blockchain or another distributed shared database, where the SPI is used as a primary key for searching for the commitment C.

As shown in FIG. 7d, the context header (context header) carries a value related to the trusted path. The context header includes the commitment C, the proof of transit p_i, and the like. The context header includes a metadata class (metadata class) field, a type (type) field, a length (length) field, and a variable-length metadata (variable-length metadata) field. The variable-length metadata (variable-length metadata) is a variable-length field carrying metadata related to a specific service or function. The length field indicates a length of the variable-length metadata (variable-length metadata) field. In some implementations, the data related to the trusted path is carried in the variable-length metadata field. For example, four types of data, namely, a commitment, a proof of transit, identity information, and a relative position, are carried in the variable-length metadata field.

In the service function chaining scenario, all of the foregoing three modes for verifying a proof of transit including the real-time verification (postcard) mode, the in-situ verification (passport) mode, and the endpoint verification (final_only) mode may be used. In embodiments, the verification mode for a single-point proof with moderate efficiency and security in the in-situ verification mode is selected for analysis.

In the verification mode for a single-point proof in the in-situ verification mode, a variable-length metadata (variable-length metadata) field of each data packet carries a commitment (commitment), a proof of transit, an identifier of a previous-hop SF node, and an actual sequential position list. For example, the variable-length metadata field shown in FIG. 7d includes a commitment field, a P field, an SF_from field, and a real_index_list field, so that a format of the variable-length metadata field is shown in the following table.

| Byte 0 | Byte 1 | Byte 2 | Byte 3 |
|---|---|---|---|
| elem_length | SF_ident_length | cipher_suite | curve_ID |
| commitment | | | |
| P | | | |
| SF_from | | | |
| real_index_list | | | |

The commitment field carries a commitment. The P field carries a proof of transit. The commitment and the proof of transit each are a G1 group element of a pairing friendly curve (pairing friendly curve). Therefore, the commitment field and the P field each occupy a byte length (elem_length) of one element in the packet.

The pairing friendly curve is a type of elliptic curve group, has a specific mathematical property, and is suitable for a pairing operation. In cryptography, the pairing (pairing) operation is mapping points on two elliptic curves to an element in a finite field. When curve_ID=BLS-12381, elem_length=48 bytes. In other words, the commitment field and the P field each are of 48 bytes.

The SF_from field carries an identifier of a previous-hop SF node. The identifier of the previous-hop SF node that is carried in the SF_from field is in a plaintext form. In some implementations, an SF node_i receives an identifier of a previous-hop SF node_i-1 that is sent by the previous-hop SF node, and writes the identifier of the previous-hop SF node to the SF_from field. In another possible implementation, an SF node_i receives an identifier of a previous-hop SF node from an SFC service layer, and writes the identifier of the previous-hop SF node to the SF_from field.

The SF_ident_length field indicates a length of the SF_from field. The SF_from field is, for example, measured in bytes.

The real_index_list field carries an actual sequential position list. For example, the real_index_list field carries a sequential position, on an actual forwarding path, of each SF node serving as a critical node on the forwarding path. For example, the real_index_list field carries a TTL of each SF node serving as a critical node on the forwarding path.

The following uses an example to describe steps performed by each node for performing path validation in the in-situ verification mode in the SFC scenario.

The controller performs path computation based on a network topology, to determine a forwarding path whose length is N. The forwarding path traverses N SF nodes in service function chaining. The forwarding path may be represented by a vector P=(r_1, r_2, ..., r_N), where r_i is a unique identifier of an SF node. The controller computes a vector commitment based on the forwarding path.

A KZG polynomial commitment is used as an example. The controller converts the vector P into N two-dimensional coordinate points <(1, r_1), (2, r_2), ..., (N, r_N)>. The controller computes a Lagrange interpolation polynomial f(X) of the N points by using Formula (1). In Formula (1), x_i represents a relative position of an SF node_i, and y_i represents identity information of the SF node_i. $f \left(X\right) = {\sum }_{i = 1}^{n} {y}_{i} {\prod }_{j = 0 , j \neq i}^{n} \frac{X - {x}_{j}}{{x}_{i} - {x}_{j}}$ Formula (1)

The controller computes a secret s by using Formula (2), to implement secret initialization. In Formula (2), g is a group generator. $s , \left[{s}^{2}\right] , … , \left[{s}^{N}\right] , where \left[{s}^{i}\right] = {g}^{i ∗ s}$ Formula (2)

The controller computes a commitment C=Commit(f(X)) of the polynomial based on the Lagrange interpolation polynomial f(X) and the secret s by using Formula (3). The commitment C is a G1 group element whose length is 48 bytes. The controller sends the vector commitment to a 1^{st} SF node on the forwarding path. ${C}_{f} = {\sum }_{1 \leq i \leq N} {f}_{i} \left[{s}^{i}\right]$ Formula (3)

In a process in which the 1^{st} SF node performs data transmission, when the 1^{st} SF node is a critical node, the 1^{st} SF node receives the vector commitment from the controller; and the 1^{st} SF node constructs a new data packet based on payload data. A payload field of the data packet carries payload data. The 1^{st} SF node computes a single-point proof of transit OP_1 of the node by using an open function and Formula (4). ${OP}_{i} = p \left[f\left({x}_{i}\right)={y}_{i}\right] = {C}_{T}$ Formula (4)

C_T is a commitment of an auxiliary polynomial T_y(X) of an N-1 order. The auxiliary polynomial T_y(X) is determined based on Formula (5). ${T}_{y} \left(X\right) = \frac{f \left(X\right) - {y}_{i}}{X - {x}_{i}} = {\sum }_{0 \leq i \leq N - 1} {t}_{i} {X}_{i}$ Formula (5)

A new coefficient is determined by using Formula (6). ${t}_{N - 1} = {f}_{N} ; {t}_{j} = {f}_{j + 1} + {x}_{i} ⋅ {t}_{j + 1}$ Formula (6)

The 1^{st} SF node computes the single-point proof of transit OP_1 by using Formula (7). ${OP}_{i} = {\left[{T}_{y}\left(s\right)\right]}_{1}$ Formula (7)

The 1^{st} SF node fills the single-point proof of transit OP_1 in the field P of the NSH, and the 1^{st} SF node fills the identity information of the node in the SF_from field of the NSH, and fills the vector commitment C in the commitment field of the NSH, to obtain a data packet_2. The 1^{st} SF node sends the data packet_2 to a 2^{nd} SF node.

In a process in which an i^{th} SF node performs data transmission, when the i^{th} SF node is a critical node, the SF node_i receives a data packet_i, where the data packet_i includes an NSH, and the NSH carries a trusted path identifier, identity information r_i of the SF node_i that currently processes the data packet, a sequential position i of the SF node_i on an expected forwarding path, and a single-point proof of transit OP_i-1 of a previous SF node. The sequential position i of the SF node_i on the expected forwarding path is obtained based on an SI. The SF node_i verifies, based on identity information of the previous SF node_i-1 and a sequential position i of the previous SF node_i-1 on the expected forwarding path, the single-point proof of transit OP_i-1 carried in the NSH of the data packet_i, to verify a source of the data packet_i. A verification method is based on checking whether pairing in Formula (8) holds. $e \left({OP}_{i}, {g}_{2}^{s - {y}_{i}}\right) = e \left(C-{g}_{1}^{{x}_{i}},{g}_{2}\right)$ Formula (8)

Formula (8) is a formula for verifying a proof of transit. e(G_1,G_2)->G_T is a public pairing function, and g_1 and g_2 are generators (both are pre-distributed public parameters/functions). If the SF node_i determines that pairing in Formula (8) does not hold, it is determined that the single-point proof of transit OP_i-1 of the previous SF node fails verification. If the SF node_i determines that pairing in Formula (8) holds, the SF node_i determines that the single-point proof of transit OP_i-1 of the previous SF node passes verification.

If the single-point proof of transit OP_i-1 of the previous SF node passes verification, the SF node_i computes a new single-point proof of transit OP_i by using the identity information r_i of the node and the sequential position i of the node on the expected forwarding path as an input and by using Formula (4). The SF node_i replaces the proof of transit OP_i-1 of the previous SF node that is carried in the packet header of the data packet with the single-point proof of transit OP_i computed by the SF node_i.

In addition, the SF node_i determines a sequential position of the node on an actual forwarding path. For example, the SF node_i reads a TTL carried in the packet header of the data packet, and determines the sequential position of the node on the actual forwarding path based on the TTL. The SF node_i fills the sequential position of the node on the actual forwarding path in an actual sequential position list carried in the NSH of the data packet.

In addition, if the single-point proof of transit OP_i-1 of the previous SF node that is carried in the data packet fails verification, the SF node_i discards the data packet or outputs alarm information.

### Instance 2: SRv6-oriented trusted path protection mechanism

In the instance 2, a path indicated by a segment list is a specific example of a forwarding path. In the instance 2, a node (an SR node) corresponding to a SID in the segment list is a specific example of a forwarding node, the SID is a specific example of identity information, and a SID of a critical node i identifies an identity of the critical node i. In the instance 2, an SRH is a specific example of a packet header that carries a vector commitment and a proof of transit. SRv6 is a segment routing technology based on an IPv6 forwarding plane. SRv6 adds an SRH to an IPv6 packet. The SRH includes an IPv6 address list segment list that records a forwarding path and an optional TLV (Type-length-Value).

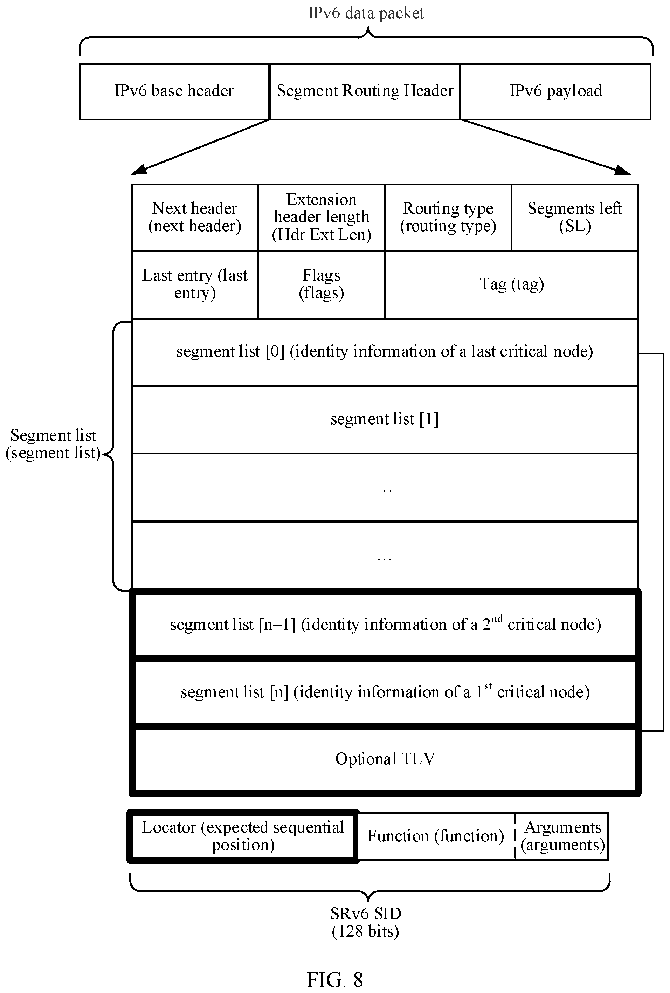

In some implementations, a SID carries a sequential position of a critical node on an expected forwarding path. As shown in FIG. 8, a SID includes a locator (locator) field and a function (function) field. The locator field carries a sequential position of a critical node on an expected forwarding path. The locator field has a positioning function and provides an IPv6 routing capability, and a packet is addressed and forwarded based on the locator field. A critical node i computes a sequential position of the critical node i on the expected forwarding path based on a locator field in a SID of the node by using an SRv6 protocol.

The function field carries and indicates a forwarding action to be performed by a forwarding node, and different forwarding behavior is represented by different functions. A trusted path identifier is extended in the function field. An arguments field is an optional field. The arguments field is a supplement to the function and is parameters corresponding to instruction execution. The parameters may include information about a flow or a service, or any other related information. In a possible implementation, the arguments field in the SID carries a public parameter of a trusted path, so that the public parameter of the trusted path does not need to be pre-distributed on a control plane.

A plurality of SIDs are combined to form a segment list. The segment list indicates an IPv6 path obtained by sequentially arranging n IPv6 network nodes. During packet forwarding, the forwarding nodes jointly determine a packet forwarding path P=(r_1, r_2, ..., r_N) based on the segment list field, a source address (source address, SA), and a destination address (destination address, DA).

SRv6 is a flexible protocol that can carry path information and an address of a node on a path, and is suitable for implementing a verification mode for a multi-point proof in an in-situ verification mode and a verification mode for a multi-point proof in an endpoint verification mode.

In the verification mode for a multi-point proof in the in-situ verification mode, a difference from the instance 1 is as follows: In the instance 1, an identifier (SF_from) of a previous node is added to a data packet, but in the instance 2, an identifier (SID) of a previous node does not need to be added to a TLV field because a segment list of each data packet has included the identifier (SID) of the previous node. Specifically, a commitment (commitment) field, a proof (P, specifically, multi-point proof) field, and a real_index_list field are added to a TLV in an SRH of the data packet. Because the node identifier (SID) in the SRv6 is an IPv6 address, and a length of the IPv6 address is 128 bits, no additional field needs to be added to the packet header to identify the length of the node identifier. Therefore, a packet header format is shown as follows:

| Byte 0 | Byte 1 | Byte 2 | Byte 3 |
|---|---|---|---|
| elem_length | CIPHER_SUITE | curve_ID | U |
| commitment | | | |
| P | | | |
| real_index_list | | | |

The commitment (commitment) and the proof of transit (P) each are a G1 group element of a pairing friendly curve (pairing Friendly Curve). Therefore, the commitment (commitment) and the proof of transit (P) are represented by a byte length (elem_length) of an element. When curve_ID=BLS-12381, lengths of the commitment (commitment) and the proof of transit (P) each are 48 bytes. The real_index_list field carries an actual sequential position list. For example, the real_index_list field carries a sequential position, on an actual forwarding path, of each SR node serving as a critical node on the forwarding path. For example, the real_index_list field carries a TTL of each SR node serving as a critical node on the forwarding path.

The following uses an example to describe steps performed by each node for performing path validation in the in-situ verification mode in the SRv6 scenario.

The controller performs path computation based on a network topology, to determine a segment list whose length is N. The segment list represents an expected forwarding path. The segment list includes a SID of each SR node in N SR nodes. The segment list may be represented by a vector P=(r_1, r_2, ..., r_N), where r_i is a SID of an SR node. The controller computes a vector commitment based on the segment list. The controller sends the vector commitment to a critical node 1, so that the critical node 1 adds the vector commitment to the data packet, and transfers the vector commitment to each SR node along the path, to support each SR node in performing path validation by using the vector commitment obtained from the data packet. Alternatively, the controller sends a vector commitment to each of the N SR nodes, so that each SR node performs path validation by using the vector commitment received from the controller.

In a process in which the critical node 1 performs data transmission, when the critical node 1 is a critical node, the critical node 1 receives the vector commitment from the controller; and the critical node 1 constructs a new data packet based on payload data. A payload field of the data packet carries payload data. The critical node 1 computes a multi-point proof of transit MP_1 of the node by using a batch open (batch open) function. The critical node 1 adds the proof of transit MP_1 of the node to the P field in the TLV in the SRH. The critical node 1 sends a data packet_2 to a 2^{nd} SR node. The data packet_2 includes the SRH, and the SRH includes a trusted path identifier and the proof of transit of the critical node 1.

In a process in which an i^{th} SR node performs data transmission, the SR node_i receives a data packet_i, where the data packet_i includes an SRH, and the SRH carries a trusted path identifier, identity information of each SR node from a critical node 1_1 to the i^{th} SR node_i serving as a critical node, and a sequential position of each SR node from the critical node 1_1 to the i^{th} SR node_i serving as a critical node on the expected forwarding path. For example, the sequential position of each SR node from the critical node 1_1 to the i^{th} SR node_i serving as a critical node on the expected forwarding path is a positive integer 1, 2, 3... For example, the sequential position of the SR node on the expected forwarding path is obtained by using the locator field in the SID. When the i^{th} SR node is a critical node, the SR node_i verifies, based on identity information of each SR node from the critical node 1_1 to an (i-1)^{th} SR node and a sequential position of each SR node from the critical node 1_1 to the (i-1)^{th} SR node on the expected forwarding path, a multi-point proof of transit MP_i-1 carried in the SRH of the data packet_i, to verify a source of the data packet_i.

If the multi-point proof of transit MP_i-1 passes verification, the SR node_i obtains a multi-point proof of transit MP_i by using the identity information of the critical node 1_1 to the node_i and the sequential positions of the node_1 to the node_i on the expected forwarding path. The identity information of the critical node 1_1 to the node_i and the sequential positions of the node_1 to the node_i on the expected forwarding path are obtained from the segment list. The SR node_i replaces the multi-point proof of transit MP_i-1 carried in the packet header of the data packet_i with the new multi-point proof of transit MP_i.

In addition, the SR node_i determines a sequential position of the node on an actual forwarding path. For example, the SR node_i reads a TTL carried in the packet header of the data packet, and determines the sequential position of the node on the actual forwarding path based on the TTL. The SR node_i fills the sequential position of the node on the actual forwarding path in an actual sequential position list carried in the SRH of the data packet.

In addition, if the multi-point proof of transit MP_i-1 of the previous SR node that is carried in the data packet fails verification, the SR node_i discards the data packet or outputs alarm information.

In the SRv6 scenario, it may alternatively be extended to use the endpoint verification mode to obtain and verify a proof of transit. A difference from the in-situ verification mode is that after determining a vector commitment, the controller directly transfers the vector commitment to a tail node (a last SR node).

The tail node receives an SRv6 data packet from a penultimate SR node. The tail node obtains path information P=(r_1, r_2, ..., r_N) from a segment list in an SRH of the SRv6 data packet, where r_i is publicly verifiable identity information of a forwarding node. The identity information of the forwarding node in this embodiment is a SID. The tail node determines an offset of the SID of the SR node_i relative to the SID of the critical node 1, to obtain the sequential position of the SR node_i on the expected forwarding path. The tail node computes a multi-point proof of transit MP_N from nodes r_1 to r_N. The MP computation method is the same as that described above. In some implementations, the tail node obtains a sequential position of the node on an actual forwarding path by using a TTL or in another manner, fills the sequential position of the node on the actual forwarding path in an actual sequential position list carried in the data packet, and forwards the actual sequential position list. The tail node executes, based on a vector commitment mechanism, a batch verify function (batch verify) batch verify(C, MP_N, P) based on a vector commitment C, a sequential position of each node on the path P, and identity information of each node on the path P, to verify a multi-point proof of transit MP_N, that is, verify that each node identity at a position i on the entire path is r_i.

In the endpoint verification mode in SRv6, because a segment list carries identity information of each node and a relative position of each node, there is no need to perform modification on a data plane of an SRv6 protocol to carry the identity information and the relative position of the node. For example, a commitment and a common parameter are transferred to the tail node on an application layer plane or a control plane, and then the tail node verifies the forwarding path based on existing information at a time.

The foregoing embodiments focus on node (device)-level path validation. An embodiment of this application further provides an AS-level path validation method. The following describes an application scenario, a related basic term concept, and a method procedure of AS-level path validation by using an example.

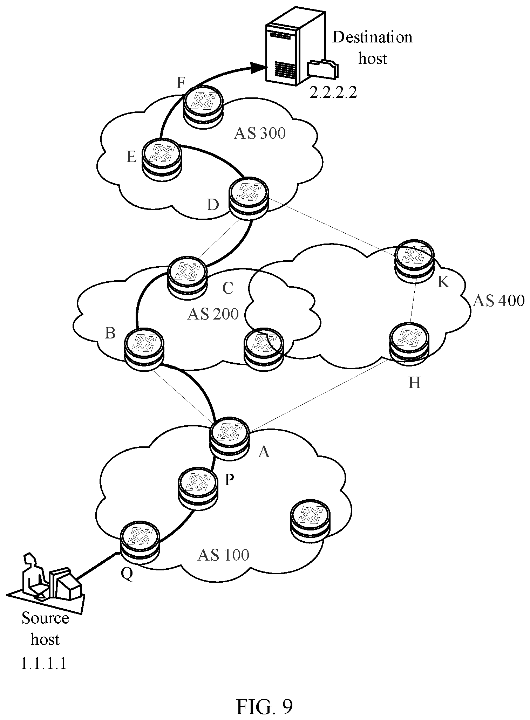

AS-level path validation mainly applies to an inter-AS transmission scenario. In the inter-AS transmission scenario, a data flow passes through a plurality of ASs during transmission. In the plurality of ASs that the data flow passes through, an AS that communicates with a source host of the data flow is generally referred to as a source AS, an AS that communicates with a destination host of the data flow is generally referred to as a destination AS, and an AS between the source AS and the destination AS is generally referred to as a transit AS (Transit AS). For example, referring to FIG. 9, a data flow passes through an AS 100, an AS 200, and an AS 300 during transmission, where the AS 100 is a source AS, the AS 200 is a transit AS, and the AS 300 is a destination AS.

One or more forwarding nodes are usually deployed in an AS. Roles of forwarding nodes deployed at different positions in an AS are different.

A forwarding node deployed at a boundary of an AS is configured to forward service data between ASs. The forwarding node deployed at the boundary of the AS is also referred to as a border network device, and the forwarding node deployed at the boundary of the AS is, for example, an ASBR or a PE. Forwarding nodes deployed at different AS boundaries usually perform inter-AS communication by using a BGP protocol. The forwarding node deployed at the boundary of the AS includes a forwarding node deployed at an ingress of the AS and a forwarding node deployed at an egress of the AS.

The forwarding node deployed at the ingress of the AS is configured to forward service data from the outside of the AS to the inside of the AS. One or more forwarding nodes can be deployed at an ingress of one AS. The forwarding node deployed at the ingress of the AS is also referred to as an ingress node, for example, an ingress PE. For example, a forwarding node Q is deployed at an ingress of the AS 100, and the forwarding node Q is configured to forward service data from the source host to the inside of the AS 100. A forwarding node B is deployed at an ingress of the AS 200, and the forwarding node B is configured to forward service data from the AS 100 to the inside of the AS 200.

The forwarding node deployed at the egress of the AS is configured to forward service data from the inside of the AS to the outside of the AS. The forwarding node deployed at the egress of the AS is also referred to as an egress node, for example, is referred to as an egress PE. In some implementations, when one AS has a neighbor relationship with a plurality of ASs, the forwarding node deployed at the egress of the AS is further configured to: after receiving a data packet, select a next AS from a plurality of neighboring ASs of the AS, and forward service data to a forwarding node deployed in the selected AS. For example, a critical node A is configured to select an AS from the AS 200 and an AS 400 as a next AS to which service data is to be transmitted.

A forwarding node deployed inside an AS is configured to transmit data inside the AS. For example, a forwarding node E is configured to forward service data inside the AS 300.

In an inter-AS transmission scenario, it needs to be verified whether an AS that a data packet is to pass through or an AS that a data packet has passed through belongs to an AS planned to be passed through on an expected path, thereby reducing a risk caused when the data packet passes through an unexpected AS, for example, reducing a risk of network transmission quality deterioration caused when the data packet passes through an AS that does not meet a network transmission quality requirement (for example, a delay or a packet loss rate does not meet a requirement), or reducing a security risk caused when the data packet passes through an AS that does not meet a network security requirement (for example, an AS that has been identified as having a security risk).

In view of this, in some implementations of this application, the proof of transit of the to-be-verified AS is obtained based on the identity information of the to-be-verified AS and the sequential position of the to-be-verified AS, and the proof of transit of the to-be-verified AS is compared with a vector commitment, to determine whether the to-be-verified AS is an expected AS and/or whether the sequential position of the to-be-verified AS is an expected sequential position, thereby implementing AS-level path validation.

The to-be-verified AS includes but is not limited to a current AS, a neighboring AS of the current AS, the current AS, and/or each AS from a source AS to the current AS. A neighboring AS of a current AS (an AS to which a data packet is currently transmitted) is an AS having a neighbor relationship with the current AS. For example, the neighboring AS of the current AS includes a previous AS (also referred to as a previous-hop AS) of the current AS on the forwarding path or a next AS of the current AS on the forwarding path. For example, when a data packet is transmitted to a critical node A, a current AS is the AS 100, and neighboring ASs of the current AS include the AS 200 and the AS 400. For another example, when a data packet is transmitted to a critical node B, a current AS is the AS 200, neighboring ASs of the current AS include the AS 200 and the AS 400, and ASs from a source AS to the current AS include the AS 100 and the AS 200. For another example, when a data packet is transmitted to a critical node D, a current AS is the AS 300, neighboring ASs of the current AS include the AS 200 and the AS 400, and ASs from a source AS to the current AS include the AS 100, the AS 200, and the AS 300.

In some implementations, an execution body responsible for verifying a proof of transit of a to-be-verified AS is a forwarding node located at a boundary of a current AS. The forwarding node at the boundary of the current AS includes a forwarding node located at an ingress of the current AS and a forwarding node located at an egress of the current AS. Considering that the forwarding node at the AS boundary needs to forward service data between ASs, the forwarding node at the AS boundary executes the proof of transit of the to-be-verified AS, to improve security of forwarding service data between ASs.

In some implementations, the forwarding node at the egress of the current AS is responsible for computing a proof of transit of a next AS of the current AS, and performing path validation on the next AS of the current AS based on an AS-level vector commitment. Path validation on the next AS of the current AS helps verify whether an AS in which the data packet is to enter is an expected AS specified by a path planning party, thereby reducing a risk of a route hijack attack.

In some implementations, the forwarding node at the ingress of the current AS is responsible for computing a proof of transit of a previous AS of the current AS, and performing path validation on the previous AS of the current AS based on an AS-level vector commitment. Path validation on the previous AS of the current AS helps verify whether a source AS of the data packet is an expected AS specified by a path planning party. For another example, the forwarding node at the ingress of the current AS is responsible for computing a proof of transit of the current AS, and performing path validation on the current AS based on an AS-level vector commitment. Path validation on the current AS helps verify whether the AS in which the data packet is currently located is an expected AS specified by a path planning party. Path validation on each AS from the source AS to the current AS helps verify whether the data packet passes through an unexpected AS along an upper-half path.

An example in which a to-be-verified AS is a next AS of a current AS is used. In a process of selecting a next AS from a plurality of neighboring ASs of a current AS, the current forwarding node performs path validation based on identity information of the selected AS and a sequential position of the selected AS. If validation fails, it can be determined that the selected AS is an unexpected AS, and a predetermined processing action is performed. The predetermined processing action is, for example, reselecting a next AS from the plurality of neighboring ASs until an expected AS is selected, or stopping data packet forwarding and performing management plane reporting. In a manner of verification before forwarding, before the data packet is forwarded from the current AS to the next AS, the next AS is verified in advance, thereby reducing a risk caused when the data packet enters an unexpected AS from the current AS. For example, a proof of transit of a selected AS is determined based on identity information of the selected AS and a sequential position of the selected AS, and a vector commitment is compared with the proof of transit of the AS to verify whether the selected AS is an AS expected by the path planning party.

For example, in the scenario shown in FIG. 9, when planning a forwarding path, the path planning party specifies that the data packet passes through the AS 100, the AS 200, and the AS 300. A sequential relationship between the ASs expected by the path planning party is: AS 100→AS 200→AS 300. In other words, an expected sequential position of the AS 100 is 1, the expected sequential position of the AS 200 is 2, and the expected sequential position of the AS 300 is 3. During data packet forwarding, when the data packet arrives at the critical node A deployed at the egress of the AS 100, when the critical node A selects a next AS from the AS 200 and the AS 400, if the critical node A selects the AS 200, the critical node A first computes a proof of transit of the AS 200, and compares the proof of transit of the AS 200 with a vector commitment to verify whether the AS 200 is a 2^{nd} AS. If verification passes, it is equivalent to determining that the AS 200 is the 2^{nd} AS, and then the data packet is forwarded to the AS 200. If verification fails, it is equivalent to determining that the AS 200 is not the 2^{nd} AS, and alarm information is output.

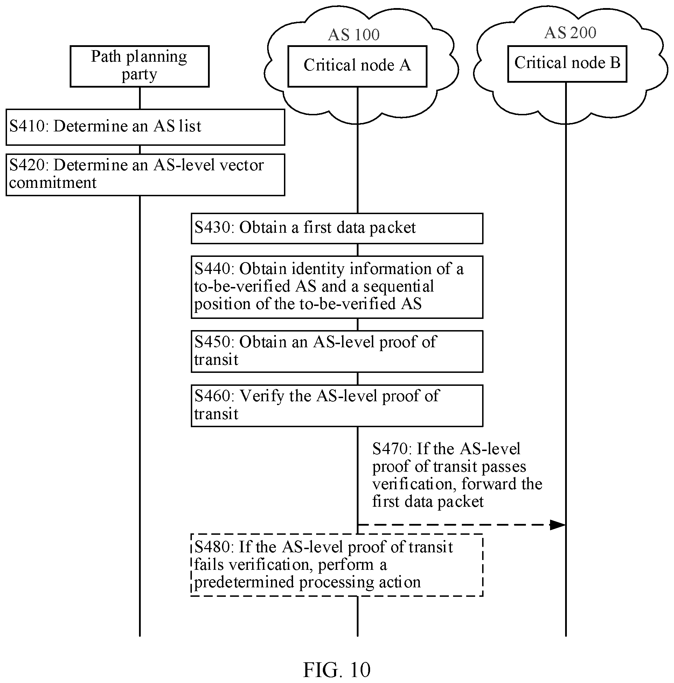

FIG. 10 is a flowchart of a path validation method according to an embodiment of this application. The method shown in FIG. 10 relates to interaction between forwarding nodes deployed at boundaries of a plurality of ASs. The method shown in FIG. 10 includes the following step S410 to step S480.

Step S410: A path planning party determines an AS list.

Step S420: The path planning party determines an AS-level vector commitment.

The AS-level vector commitment is a vector commitment at an AS level. The AS-level vector commitment indicates a correspondence between sequential positions of at least two ASs on an expected forwarding path and identities of the at least two ASs. For example, the path planning party computes the AS-level vector commitment based on identity information of each AS traversed by the expected forwarding path and a sequential position of each AS.

In some implementations, input data used by the path planning party to determine a vector commitment includes an expected forwarding path whose length is M, for example, a vector P=(r_1, r_2, ..., r_M). The path planning party computes, based on identity information of each of the M ASs and a sequential position of each of the M ASs by using a commit function in a vector commitment mechanism, a vector commitment C=commit(P) bound to the expected forwarding path P. The path planning party outputs the commitment C whose length is k, where k is related to a security parameter lambda.

Step S430: A critical node A obtains a first data packet.

Step S440: The critical node A obtains identity information of a to-be-verified AS and a sequential position of the to-be-verified AS.

In some implementations, the to-be-verified AS is a next AS of a current AS (an AS 200 in which the critical node A is located). For example, the to-be-verified AS is a downstream AS 200 or AS 400 of the AS 100. For another example, the to-be-verified AS is the AS 200 or the AS 400 of the AS 100.

The sequential position of the to-be-verified AS includes an expected sequential position of the to-be-verified AS and an actual sequential position of the to-be-verified AS.

The expected sequential position of the to-be-verified AS indicates a sequential relationship between the to-be-verified AS and each AS traversed by the expected forwarding path. For example, the expected sequential position indicates a sequence of an AS being the to-be-verified AS traversed by the expected forwarding path. In some implementations, the expected sequential position of the to-be-verified AS is a sequential position of the identity information of the to-be-verified AS in an AS list, and the AS list includes identity information of an AS in which each critical node that is passed through on the expected forwarding path is located. Path validation is performed by using the sequential position of the to-be-verified AS, so that an unexpected AS is allowed to be inserted between two expected ASs on the actual forwarding path, thereby implementing AS-level fault tolerance.

The actual sequential position of the to-be-verified AS indicates a sequential relationship between the to-be-verified AS and each AS traversed by the actual forwarding path. For example, the actual sequential position of the to-be-verified AS indicates a sequence of an AS being the to-be-verified AS traversed by the actual forwarding path. Stricter AS-level path validation can be implemented by using the actual sequential position of the to-be-verified AS.

There are the following several manners of obtaining the identity information of the to-be-verified AS and the sequential position of the to-be-verified AS.

Manner 1 of obtaining the identity information and/or the expected sequential position of the to-be-verified AS: The data packet carries the sequential position and/or the identity information of the to-be-verified AS.

In some implementations, the data packet is extended, and the data packet carries the identity information of the to-be-verified AS and/or the sequential position of the to-be-verified AS. For another example, the data packet carries a sequential position of a current AS. The critical node determines the expected sequential position of the to-be-verified AS based on the sequential position of the current AS and a sequential relationship between the current AS and the to-be-verified AS. For example, based on the sequential relationship between the current AS and the to-be-verified AS being that the to-be-verified AS is a next AS of the current AS, the critical node increases the sequential position of the current AS on the forwarding path by 1 to obtain a sequential position of the next AS on the forwarding path, and then performs path validation on the next AS. For example, a sequential position of the AS 100 that is carried in the data packet is 1, the critical node A determines that the to-be-verified AS 200 is a next AS of the AS 100, and the critical node A determines, based on the sequential position 1 of the AS 100, that a sequential position of the AS 200 is 1+1=2.

In an example, the data packet carries an AS-level TTL, and the AS-level TTL indicates the sequential position of the current AS on the forwarding path. For example, the AS-level TTL indicates a quantity of ASs that the data packet has passed through during transmission. If the data packet currently passes through a k^{th} AS, a value of the AS-level TTL is k. The critical node determines the sequential position of the current AS based on the AS-level TTL carried in the data packet, and then performs path validation on the current AS. For another example, the critical node determines an expected sequential position of a next AS based on the sequential position of the current AS and a sequential relationship between the current AS and the next AS.

In some other implementations, the AS-level TTL indicates a sequential position of a next AS on the forwarding path. The critical node determines the expected sequential position of the next AS based on the AS-level TTL carried in the data packet, and then performs path validation on the next AS.

In some implementations, the data packet is extended, and the data packet carries the AS list. The critical node obtains the identity information of the to-be-verified AS and the expected sequential position of the to-be-verified AS based on the AS list in the data packet. For example, the critical node determines the expected sequential position of the to-be-verified AS based on the sequential position of the identity information of the to-be-verified AS in the AS list. In an example in which the to-be-verified AS is a current AS, the critical node determines an expected sequential position of the current AS based on a sequential position of identity information of the current AS in the AS list. In an example in which the to-be-verified AS is a next AS, the critical node determines an expected sequential position of the next AS based on a sequential position of identity information of a current AS in the AS list and a sequential relationship between the current AS and the next AS.

In an example, the first data packet carries an AS list, and the critical node A determines, based on a sequential position of identity information of the AS 200 in the AS list, an expected sequential position of the identity information of the AS 200 in the AS list. For example, the first data packet carries an AS list [AS 300 AS 200 AS 100], and the critical node A determines, based on a 2^{nd} position of the AS 200 in the AS list [AS 300 AS 200 AS 100], that a sequential position of the identity information of the AS 200 is 2.

Manner 2 of obtaining the identity information and/or the expected sequential position of the to-be-verified AS: A local routing table is queried.

In some implementations, a local routing table of the critical node A stores a destination IP address of a data packet, and a correspondence between a next forwarding node of the node on a reachable path of the destination IP address and a parameter of an AS in which the next forwarding node is located. The parameter of the AS includes identity information of the AS and an expected sequential position of the AS. When there are a plurality of reachable paths for one destination IP address, the routing table stores a correspondence between a next forwarding node of the node on each reachable path of the destination IP address and a parameter of an AS in which the next forwarding node is located. The critical node A searches the routing table based on the destination IP address of the first data packet, to determine the identity information of the to-be-verified AS and the expected sequential position of the to-be-verified AS.

For example, the destination IP address of the first data packet is 2.2.2.2 in FIG. 9. The routing table includes the following content. After querying the following table based on the destination IP address 2.2.2.2 in the data packet, the critical node A determines that the identity information of the to-be-verified AS is the AS 200 or the AS 400, and the expected sequential position of the AS is 2.

| Destination IP address | Next-hop node | Identity information of the AS | Expected sequential position of the AS |
|---|---|---|---|
| 2.2.2.2 | Forwarding node B | AS 200 | 2 |
| 2.2.2.2 | Forwarding node D | AS 400 | 2 |

In some other implementations, the data packet carries an identifier of a next forwarding node of the critical node A on the expected forwarding path. A local routing table of the critical node A stores a correspondence between an identifier of a forwarding node and a parameter of an AS in which the identifier of the forwarding node is located. The critical node A obtains the identifier of the next forwarding node that is carried in the first data packet, and searches the routing table based on the identifier of the next forwarding node, to determine the identity information of the to-be-verified AS and the expected sequential position of the to-be-verified AS. For example, a destination IP address field or an SRH of the first data packet carries an identifier of the forwarding node B, and the critical node A searches the routing table based on the identifier of the forwarding node B, to determine that the to-be-verified AS is the AS 200.

For a process of obtaining the expected sequential position of the to-be-verified AS, in some implementations, in a control plane route notification procedure, the critical node determines the expected sequential position of the AS by using an AS_path advertised by a BGP protocol. For example, in a process of advertising the IP address 2.2.2.2, a border network device in the AS 300 sends a BGP update packet 1 to a border network device in the AS 200, where the BGP update packet 1 includes the IP address 2.2.2.2 and an AS_path 1, and the AS_path 1 includes an AS number of the AS 300. After receiving the BGP update packet 1, the border network device of the AS 200 adds an AS number of the AS 200 to the AS_path 1 in the BGP update packet 1, to obtain a BGP update packet 2. The BGP update packet 2 includes the IP address 2.2.2.2 and an AS_path 2, and the AS_path 2 includes an AS number of the AS 300 and the AS number of the AS 200. The border network device of the AS 200 sends the BGP update packet 2 to the border network device of the AS 100. After receiving the packet from the border network device of the AS 200, the border network device of the AS 100 adds the AS number of the AS 100 to the AS_path 2 in the BGP update packet 2, to obtain a BGP update packet 3. The BGP update packet 3 includes the IP address 2.2.2.2 and an AS_path 3, and the AS_path 3 includes the AS number of the AS 300, the AS number of the AS 200, and the AS number of the AS 100. For example, the AS_path 3 is represented as [AS 300 AS 200 AS 100], and the border network device of AS 100 determines, based on the AS_path 3, that the sequential position of the AS 200 is 2.

In some other implementations, the identity information of the to-be-verified AS and the identity information of the to-be-verified AS are obtained in a control plane pre-distribution manner. The control plane pre-distribution manner includes a manner of interaction between forwarding nodes and a manner of interaction between the path planning party and a forwarding node.

The manner of interaction between forwarding nodes is implemented by, for example, forwarding nodes in different ASs by exchanging a routing protocol packet. For example, a border network device deployed inside a to-be-verified node generates a routing protocol packet and sends the routing protocol packet to a first forwarding node, where the routing protocol packet carries a first IP address and identity information of a to-be-verified AS. The routing protocol packet is, for example, a BGP protocol packet. The routing protocol packet carries an NLRI field and a path attribute field, the NLRI field carries the first IP address, and the path attribute field carries the identity information of the to-be-verified AS. The first forwarding node receives the routing protocol packet from the to-be-verified AS; and the first forwarding node obtains the first IP address and the identity information of the to-be-verified AS that are carried in the routing protocol packet. The first forwarding node stores a first correspondence, where the first correspondence includes the first IP address and the identity information of the to-be-verified AS. After the first forwarding node obtains the first data packet, the first forwarding node obtains the identity information of the to-be-verified AS based on the first IP address and the first correspondence.

The manner of interaction between the path planning party and the forwarding node includes, for example, the following steps.

Step 1: The path planning party generates a notification packet and sends the notification packet to the first forwarding node. The notification packet carries a path identifier, a sequential position of a to-be-verified AS, and identity information of the to-be-verified AS.

In an example, the path planning party sends the notification packet to a border network device of each AS traversed by the expected forwarding path, where the notification packet carries identity information of each AS traversed by the expected forwarding path and an expected sequential position of each AS traversed by the expected forwarding path.

Step 2: The first forwarding node receives the notification packet from the path planning party.

Step 3: The first forwarding node stores a second correspondence, where the second correspondence includes the path identifier, the sequential position of the to-be-verified AS, and the identity information of the to-be-verified AS.

For example, the first forwarding node stores the second correspondence in a local routing table. After the first forwarding node subsequently obtains the first data packet, the first forwarding node obtains the sequential position of the to-be-verified AS and the identity information of the to-be-verified AS based on the path identifier and the second correspondence.

Manner 3 of obtaining the identity information and/or the expected sequential position of the to-be-verified AS: An AS topology library is queried.

For example, a critical node queries the AS topology library based on an identifier of an AS in which the node is located, to obtain the identity information of the to-be-verified AS and the sequential position of the to-be-verified AS. The AS topology library indicates a topology relationship between ASs. For example, the AS topology library includes identity information and sequential positions of a pair of ASs having a neighbor relationship. The AS topology library may be any database that is publicly available for obtaining an AS neighbor relationship. For example, the AS topology library is a database managed based on a resource public key infrastructure (resource public key infrastructure, RPKI). The AS topology library is, for example, an autonomous system provider authorization (autonomous system provider authorization, ASPA) database, an internet routing registry (internet routing registry, IRR) database, or a route origin authorization (route origin authorization, ROA) database.

Step S450: The critical node A obtains an AS-level proof of transit based on the identity information of the to-be-verified AS and the sequential position of the to-be-verified AS.

Step S460: The critical node A verifies the AS-level proof of transit based on the AS-level vector commitment, the identity information of the to-be-verified AS, and the sequential position of the to-be-verified AS.

For the manner of obtaining the AS-level vector commitment, in some implementations, a format of the data packet is extended, and the first data packet carries the AS-level vector commitment. For example, the first data packet includes an IPv6 extension header, and the IPv6 extension header carries the AS-level vector commitment. For another example, the first data packet includes an NSH, and the NSH carries the AS-level vector commitment. For a position at which the AS-level vector commitment is carried in the data packet, refer to the position at which the first vector commitment is carried in the data packet.

In some implementations, a verification node performs an operation based on the first vector commitment, the identity information of the first forwarding node, the sequential position of the first forwarding node on the expected forwarding path, and the proof of transit of the first forwarding node by using a verify function in the vector commitment mechanism.

For example, if the first vector commitment, the identity information of the first forwarding node, the sequential position of the first forwarding node on the expected forwarding path, and the proof of transit of the first forwarding node match each other, and an output result of the verify function is 1, the verification node determines that the proof of transit of the first forwarding node passes verification, indicating that the first forwarding node is indeed a critical node expected by the path planning party (the expected forwarding path traverses the first forwarding node), and a sequential position of the first forwarding node on the actual forwarding path meets a requirement of the expected forwarding path.

On the contrary, if the first vector commitment, the identity information of the first forwarding node, the sequential position of the first forwarding node on the expected forwarding path, and the proof of transit of the first forwarding node do not match, and an output result of the verify function is 0, the proof of transit of the first forwarding node passes verification, indicating that the first forwarding node is not a critical node expected by the path planning party (the expected forwarding path does not traverse the first forwarding node), or a sequential position of the first forwarding node on the actual forwarding path does not meet a requirement of the expected forwarding path.

Step S470: If the AS-level proof of transit passes verification, the critical node A forwards the first data packet.

In some implementations, when the data packet carries a sequential position of an AS, the critical node A further updates the sequential position of the AS in a process of forwarding the first data packet, so that a next critical node performs AS-level path validation based on an updated sequential position of the AS. For example, the first data packet carries the sequential position of the AS 100. If the proof of transit of the AS 200 passes verification, the critical node A updates the sequential position of the AS 100 in the first data packet to a sequential position of the AS 200 in the AS list, to obtain a second data packet. The critical node A sends the second data packet to the forwarding node B.

For example, the first data packet carries an AS-level TTL, and the critical node A further updates the AS-level TTL in a process of forwarding the first data packet.

In an example, the expected forwarding path of the data packet traverses five ASs, and a packet header of the data packet includes a TTL field. Each time the data packet passes through one AS, a value of the TTL field in the packet header is decreased by 1. For example, when the data packet passes through a 1^{st} AS, a value carried in the TTL field in the packet header of the data packet is updated to 254, when the data packet passes through a 2^{nd} AS, a value carried in the TTL field in the packet header of the data packet is updated to 253, and so on.

Step S480: If the AS-level proof of transit fails verification, the critical node A performs a predetermined processing action.

The predetermined processing action includes at least one of reselecting a next-hop AS, discarding a data packet, and/or outputting alarm information. Reselecting a next-hop AS means that when there are a plurality of reachable paths to a same destination IP address, different reachable paths reach a same destination AS through different ASs. If a previously selected AS fails in path validation, the critical node reselects another AS from next ASs of a current AS in the plurality of reachable paths. For example, reachable paths to the IP address 2.2.2.2 include AS 100→AS 200→AS 300 and AS 100→AS 400→AS 300, and a current AS is the AS 100. The critical node A originally selects the AS 200 from the AS 200 and the AS 400 as a next AS, but the AS 200 fails in path validation. Therefore, the AS 400 is reselected from the AS 200 and the AS 400.

In some implementations, the critical node A further performs path validation on the reselected next-hop AS, to determine whether the reselected next-hop AS is an expected AS and whether a sequential position of the reselected next-hop AS meets a requirement. For example, after reselecting the AS 400, the critical node A obtains the proof of transit of the AS 400 based on the identity information of the AS 400 and the sequential position of the AS 400, and verifies the proof of transit of the AS 400 based on the AS-level vector commitment, the identity information of the AS 400, and the sequential position of the AS 400.

The alarm information indicates that the to-be-verified AS is invalid. For example, the alarm information includes the identity information of the to-be-verified AS and the sequential position of the to-be-verified AS. In some implementations, the critical node A sends the alarm information to the path planning party. For example, if neither the proof of transit of the AS 200 nor the proof of transit of the AS 400 passes verification, the critical node A discards the first data packet and outputs the alarm information.

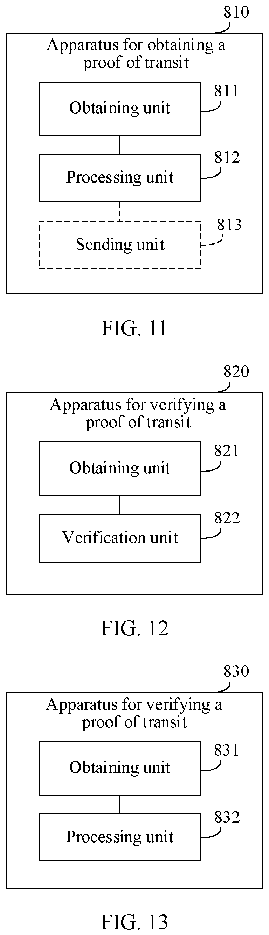

FIG. 11 is a diagram of a structure of an apparatus for obtaining a proof of transit according to an embodiment of this application. The apparatus 810 is, for example, disposed in the forwarding node A-1, the forwarding node B-2, or the forwarding node C-3 in FIG. 1a and FIG. 1b. The apparatus 810 is, for example, disposed in the critical node 1, the critical node 2, the critical node 3, or the critical node 4 in FIG. 3. The apparatus 810 is, for example, disposed in the critical node 1, the critical node 2, the critical node 3, or the critical node 4 in FIG. 4. The apparatus 810 is, for example, disposed in the critical node 4 in FIG. 5. The apparatus 810 is, for example, disposed in the SF node_2, the SF node_2, or the proxy forwarding node_3 in FIG. 6.

The apparatus 810 includes an obtaining unit 811 and a processing unit 812. The apparatus 810 is, for example, disposed in the critical node A in FIG. 2. The obtaining unit 811 is configured to perform S230 and S240 in the method shown in FIG. 2, and the processing unit 812 is configured to perform S250 in the method shown in FIG. 2. Optionally, the apparatus 810 further includes a sending unit 813, and the sending unit 813 is configured to perform S260 in the method shown in FIG. 2 and send the data packet B. The apparatus 810 is, for another example, disposed in the critical node B in FIG. 2. The obtaining unit 811 is configured to perform S320 and S340 in the method shown in FIG. 2, the processing unit 812 is configured to perform S350 in the method shown in FIG. 2, and the sending unit 813 is configured to perform S360 in the method shown in FIG. 2.

The apparatus embodiment described in FIG. 11 is merely an example. For example, division into the units is merely logical function division and there may be other division during actual implementation. For example, a plurality of units or components may be combined or integrated into another system, or some features may be ignored or not performed. Functional units in embodiments of this application may be integrated into one processing unit 812, or each of the units may exist alone physically, or two or more units may be integrated into one unit.

All or some of the units in the apparatus 810 for obtaining a proof of transit are implemented by using software, hardware, firmware, or any combination thereof.

For implementation details of the units in the apparatus 810 for obtaining a proof of transit and an interaction process between the apparatus 810 for obtaining a proof of transit and another device, refer to the descriptions in the foregoing method embodiments. Details are not described herein again.

With reference to a device 900 described below, the following describes some possible implementations of implementing the functional units in the apparatus 810 for obtaining a proof of transit by using hardware or software.

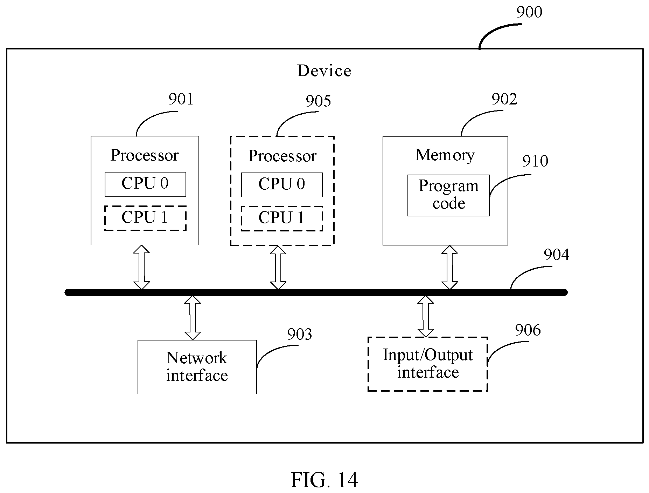

When software is used for implementation, for example, the processing unit 812 and the obtaining unit 811 are implemented by software functional units generated by reading, by at least one processor 901 in FIG. 14, program code stored in a memory 902.

When hardware is used for implementation, for example, the units in FIG. 11 are implemented by different hardware in a compute device. For example, the processing unit 812 is implemented by some processing resources (for example, one or two cores in a multi-core processor) in at least one processor 901 in FIG. 14, or completed by a programmable device like a field-programmable gate array (field-programmable gate array, FPGA) or a coprocessor. The sending unit 813 is implemented by a network interface 903 in FIG. 14.

FIG. 12 is a diagram of a structure of an apparatus 820 for verifying a proof of transit according to an embodiment of this application. The apparatus 820 for verifying a proof of transit includes an obtaining unit 821 and a verification unit 822. The apparatus 820 is, for example, disposed in the forwarding node A-1, the forwarding node B-2, or the forwarding node C-3 in FIG. 1a and FIG. 1b. The obtaining unit 821 is configured to perform S270 in the method shown in FIG. 2, and the verification unit 822 is configured to perform S280 in the method shown in FIG. 2. The apparatus 820 is, for example, disposed in the observer (the verification node) in FIG. 3. The apparatus 820 is, for example, disposed in the critical node 1, the critical node 2, the critical node 3, or the critical node 4 in FIG. 4. The apparatus 820 is, for example, disposed in the critical node 4 in FIG. 5. The apparatus 820 is, for example, disposed in the SF node_2, the SF node_2, the proxy forwarding node_3, or the destination host in FIG. 6.

The apparatus embodiment described in FIG. 12 is merely an example. For example, division into the units is merely logical function division and there may be other division during actual implementation. For example, a plurality of units or components may be combined or integrated into another system, or some features may be ignored or not performed. Functional units in embodiments of this application may be integrated into one processing unit, or each of the units may exist alone physically, or two or more units may be integrated into one unit.

All or some of the units in the apparatus 820 for verifying a proof of transit are implemented by using software, hardware, firmware, or any combination thereof.

For implementation details of the units in the apparatus 820 for verifying a proof of transit and an interaction process between the apparatus 820 for verifying a proof of transit and another device, refer to the descriptions in the foregoing method embodiments. Details are not described herein again.

With reference to a device 900 described below, the following describes some possible implementations of implementing the functional units in the apparatus 820 for verifying a proof of transit by using hardware or software.

When software is used for implementation, for example, the verification unit 822 is implemented by a software functional unit generated by reading, by at least one processor 901 in FIG. 14, program code stored in a memory 902.

When hardware is used for implementation, for example, the units in FIG. 12 are implemented by different hardware in a compute device. For example, the verification unit 822 is implemented by some processing resources (for example, one or two cores in a multi-core processor) in at least one processor 901 in FIG. 14, or completed by a programmable device like a field-programmable gate array (field-programmable gate array, FPGA) or a coprocessor. The obtaining unit 821 is implemented by a network interface 903 in FIG. 14.

FIG. 13 is a diagram of a structure of an apparatus 830 for verifying a proof of transit according to an embodiment of this application. The apparatus 830 is, for example, disposed in the forwarding node A, the forwarding node B-2, or the forwarding node C-3 in FIG. 9. The apparatus 830 for verifying a proof of transit includes an obtaining unit 831 and a processing unit 832. The obtaining unit 831 is configured to perform S430 and S440 in the method shown in FIG. 10, and the processing unit 832 is configured to perform S450 and S460 in the method shown in FIG. 10.

The apparatus embodiment described in FIG. 13 is merely an example. For example, division into the units is merely logical function division and there may be other division during actual implementation. For example, a plurality of units or components may be combined or integrated into another system, or some features may be ignored or not performed. Functional units in embodiments of this application may be integrated into one processing unit, or each of the units may exist alone physically, or two or more units may be integrated into one unit.

All or some of the units in the apparatus 830 for verifying a proof of transit are implemented by using software, hardware, firmware, or any combination thereof.

For implementation details of the units in the apparatus 830 for verifying a proof of transit and an interaction process between the apparatus 830 for verifying a proof of transit and another device, refer to the descriptions in the foregoing method embodiments. Details are not described herein again.

With reference to a device 900 described below, the following describes some possible implementations of implementing the functional units in the apparatus 830 for verifying a proof of transit by using hardware or software.

When software is used for implementation, for example, the obtaining unit 831 and the processing unit 832 are implemented by software functional units generated by reading, by at least one processor 901 in FIG. 14, program code stored in a memory 902.

When hardware is used for implementation, for example, the units in FIG. 13 are implemented by different hardware in a compute device. For example, the processing unit 832 is implemented by some processing resources (for example, one or two cores in a multi-core processor) in at least one processor 901 in FIG. 14, or completed by a programmable device like a field-programmable gate array (field-programmable gate array, FPGA) or a coprocessor. The obtaining unit 831 is implemented by a network interface 903 in FIG. 14.

FIG. 14 is a diagram of a structure of a device 900 according to an embodiment of this application. The device 900 includes at least one processor 901, a memory 902, and at least one network interface 903.

In some implementations, the device 900 is provided as a forwarding device (forwarding node). In some other implementations, the device 900 is provided as a compute device. The device 900 is, for example, the forwarding node A-1, the forwarding node B-2, or the forwarding node C-3 in FIG. 1a and FIG. 1b. The device 900 is, for example, the critical node 1, the critical node 2, the critical node 3, or the critical node 4 in FIG. 3. The device 900 is, for example, the critical node 1, the critical node 2, the critical node 3, or the critical node 4 in FIG. 4. The device 900 is, for example, the critical node 4 in FIG. 5. The device 900 is, for example, the SF node_2, the SF node_2, or the proxy forwarding node_3 in FIG. 6. The device 900 is, for example, the forwarding node A, the forwarding node B-2, or the forwarding node C-3 in FIG. 9.

For example, the device 900 includes the critical node A in FIG. 2. The network interface 903 is configured to perform S230 in the method shown in FIG. 2, and the processor 901 is configured to perform S240 and S250 in the method shown in FIG. 2. The network interface 903 is configured to perform S260 in the method shown in FIG. 2 and send the data packet B.

The device 900 includes, for another example, the critical node B in FIG. 2. The network interface 903 is configured to perform S320 in the method shown in FIG. 2. The processor 901 is configured to perform S340 and S350 in the method shown in FIG. 2. The network interface 903 is configured to perform S360 in the method shown in FIG. 2.

The device 900 includes, for another example, the verification node in FIG. 2. The network interface 903 is configured to perform S270 in the method shown in FIG. 2. The processor 901 is configured to perform S280 in the method shown in FIG. 2.

The device 900 includes, for another example, the critical node A in FIG. 10. The processor 901 is configured to perform S440, S450, and S460 in the method shown in FIG. 10, and the network interface 903 is configured to perform S430 in the method shown in FIG. 10. The processor 901 is further configured to instruct the network interface 903 to perform S470 or S480 in the method shown in FIG. 10.

The processor 901 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The memory 902 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only memory, EEPROM), a compact disc read-only memory (compact disc read-only memory, CD-ROM) or other compact disk storage, an optical disk storage (including a compressed optical disc, a laser disc, an optical disc, a digital versatile disc, a Blu-ray disc, or the like), a magnetic disk storage medium or another magnetic storage device, or any other medium that can be used to carry or store desired program code in a form of an instruction or a data structure and that can be accessed by a computer. However, this is not limited thereto. Optionally, the memory 902 exists independently, and is connected to the processor 901 through an internal connection 904. Alternatively, the memory 902 is optionally integrated with the processor 901.

The network interface 903 is any apparatus of a transceiver type and is configured to communicate with another device or a communication network. The network interface 903 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 901 includes one or more CPUs, for example, a CPU 0 and a CPU 1 shown in FIG. 14.

In some embodiments, the device 900 optionally includes a plurality of processors, for example, the processor 901 and a processor 905 shown in FIG. 14. Each of these processors is, for example, a single-core processor (single-CPU) or a multi-core processor (multi-CPU). The processor herein is optionally one or more devices, circuits, and/or processing cores configured to process data (for example, computer program instructions).

In some embodiments, the device 900 further includes the internal connection 904. The processor 901, the memory 902, and the at least one network interface 903 are connected through the internal connection 904. The internal connection 904 includes a path for transferring information between the foregoing components. Optionally, the internal connection 904 is a board or a bus. Optionally, the internal connection 904 is classified into an address bus, a data bus, a control bus, and the like.

In some embodiments, the device 900 further includes an input/output interface 906. The input/output interface 906 is connected to the internal connection 904.

Optionally, the processor 901 implements the methods in the foregoing embodiments by reading program code stored in the memory 902, or the processor 901 implements the methods in the foregoing embodiments by using internally stored program code. When the processor 901 implements the methods in the foregoing embodiments by reading the program code stored in the memory 902, the memory 902 stores program code 910 that implements the methods provided in embodiments of this application.

For more details of implementing the foregoing functions by the processor 901, refer to the descriptions in the foregoing method embodiments. Details are not described herein again.

Embodiments in this specification are all described in a progressive manner. For same or similar parts in embodiments, refer to each other. Each embodiment focuses on a difference from another embodiment.

That A refers to B means that A is the same as B or that A is a simple variant of B.

In this specification and the claims in embodiments of this application, terms "first", "second", and the like are for distinguishing between different objects, but are not intended to describe a particular order of the objects, and cannot be understood as an indication or implication of relative importance. For example, a first proof of transit and a second proof of transit are for distinguishing between different proof of transits, but are not for describing a particular order of the proof of transits, and cannot be understood as that the first proof of transit is more important than the second proof of transit.

Information (including but not limited to user equipment information, user personal information, and the like), data (including but not limited to data for analysis, stored data, displayed data, and the like), and a signal in embodiments of this application are all authorized by a user or fully authorized by all parties, and collection, use, and processing of related data need to comply with related laws, regulations, and standards of related countries and regions. For example, identity information in this application is obtained with full authorization.

In embodiments of this application, unless otherwise specified, "at least one" means one or more, and "a plurality of" means two or more. For example, a plurality of forwarding nodes mean two or more forwarding nodes.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, all or some of the described procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A method for obtaining a proof of transit, wherein the method comprises:
obtaining, by a first forwarding node, a first data packet, wherein at least two critical nodes corresponding to the first data packet comprise the first forwarding node, and the critical node is a forwarding node that is passed through on an expected forwarding path determined by a path planning party for the first data packet;
obtaining, by the first forwarding node, a sequential position of the first forwarding node on the expected forwarding path and identity information of the first forwarding node, wherein the sequential position of the first forwarding node on the expected forwarding path is different from a sequential position of the first forwarding node on an actual forwarding path of the first data packet, and the identity information of the first forwarding node indicates an identity of the first forwarding node; and
obtaining, by the first forwarding node, a proof of transit of the first forwarding node based on the sequential position of the first forwarding node on the expected forwarding path and the identity information of the first forwarding node, wherein the proof of transit of the first forwarding node is used to prove that the first forwarding node forwards the first data packet at the sequential position on the expected forwarding path.

2. The method according to claim 1, wherein the at least two critical nodes further comprise a second forwarding node, the second forwarding node is an upstream critical node of the first forwarding node on the expected forwarding path, and obtaining, by the first forwarding node, the proof of transit of the first forwarding node based on the sequential position of the first forwarding node on the expected forwarding path and the identity information of the first forwarding node comprises:
obtaining, by the first forwarding node, the proof of transit of the first forwarding node based on the sequential position of the first forwarding node on the expected forwarding path, the identity information of the first forwarding node, a sequential position of the second forwarding node on the expected forwarding path, and identity information of the second forwarding node, wherein the identity information of the second forwarding node indicates an identity of the second forwarding node, and the proof of transit of the first forwarding node is used to prove that the first forwarding node and the second forwarding node are respectively at the corresponding sequential positions on the expected forwarding path.

3. The method according to claim 2, wherein the first forwarding node is a last critical node on the expected forwarding path, and the second forwarding node comprises all critical nodes on the expected forwarding path other than the first forwarding node.

4. The method according to any one of claims 1 to 3, wherein the method further comprises:
obtaining, by the first forwarding node, the sequential position of the first forwarding node on the actual forwarding path based on the first data packet; and
sending, by the first forwarding node, the proof of transit of the first forwarding node and the sequential position of the first forwarding node on the actual forwarding path to a verification node.

5. The method according to claim 4, wherein the verification node comprises a third forwarding node, the third forwarding node is a downstream critical node of the first forwarding node on the expected forwarding path, and sending, by the first forwarding node, the proof of transit of the first forwarding node and the sequential position of the first forwarding node on the actual forwarding path to the verification node comprises:
obtaining, by the first forwarding node, a second data packet based on the first data packet, the proof of transit of the first forwarding node, and the sequential position of the first forwarding node on the actual forwarding path, wherein the second data packet comprises a payload of the first data packet, the proof of transit of the first forwarding node, and the sequential position of the first forwarding node on the actual forwarding path; and
sending, by the first forwarding node, the second data packet to the third forwarding node.

6. The method according to claim 5, wherein the first data packet comprises a first position list, the first position list comprises a sequential position, on the actual forwarding path, of an upstream critical node of the first forwarding node on the expected forwarding path, the second data packet comprises a second position list, and the second position list comprises the first position list and the sequential position of the first forwarding node on the actual forwarding path.

7. The method according to claim 5 or 6, wherein the second data packet comprises an internet protocol version 6 IPv6 extension header, and the IPv6 extension header comprises the proof of transit of the first forwarding node and the sequential position of the first forwarding node on the actual forwarding path; or
the second data packet comprises a network service header NSH, the NSH comprises a metadata field, and the metadata field comprises the proof of transit of the first forwarding node and the sequential position of the first forwarding node on the actual forwarding path; or
the second data packet comprises a multiprotocol label switching MPLS header, and the MPLS header comprises the proof of transit of the first forwarding node and the sequential position of the first forwarding node on the actual forwarding path; or
the second data packet comprises a virtual extensible local area network VxLAN header, and the VxLAN header comprises the proof of transit of the first forwarding node and the sequential position of the first forwarding node on the actual forwarding path; or
the second data packet comprises an internet protocol security IPsec header, and the IPsec header comprises the proof of transit of the first forwarding node and the sequential position of the first forwarding node on the actual forwarding path.

8. The method according to claim 7, wherein the IPv6 extension header comprises a segment routing header SRH, the SRH comprises a type-length-value TLV, and the TLV of the SRH comprises the proof of transit of the first forwarding node and the sequential position of the first forwarding node on the actual forwarding path; or
the IPv6 extension header comprises an application-aware networking APN header, the APN header comprises an application-aware networking identifier APN ID, and the APN ID comprises the proof of transit of the first forwarding node and the sequential position of the first forwarding node on the actual forwarding path; or
the IPv6 extension header comprises a destination options header DOH, the DOH comprises a TLV, and the TLV of the DOH comprises the proof of transit of the first forwarding node and the sequential position of the first forwarding node on the actual forwarding path; or
the IPv6 extension header comprises a hop-by-hop options header HBH, the HBH comprises a TLV, and the TLV of the HBH comprises the proof of transit of the first forwarding node and the sequential position of the first forwarding node on the actual forwarding path.

9. The method according to claim 4, wherein sending, by the first forwarding node, the proof of transit of the first forwarding node and the sequential position of the first forwarding node on the actual forwarding path to the verification node comprises:
generating, by the first forwarding node, a notification packet, wherein the notification packet comprises the proof of transit of the first forwarding node and the sequential position of the first forwarding node on the actual forwarding path; and
sending, by the first forwarding node, the notification packet to the verification node.

10. The method according to claim 9, wherein the notification packet comprises a network configuration protocol NETCONF packet, and the NETCONF packet comprises the proof of transit of the first forwarding node and the sequential position of the first forwarding node on the actual forwarding path; or
the notification packet comprises a hypertext transfer protocol HTTP packet, and a payload field in the HTTP packet comprises the proof of transit of the first forwarding node and the sequential position of the first forwarding node on the actual forwarding path.

11. The method according to any one of claims 1 to 10, wherein the first data packet comprises a segment list segment list, the segment list comprises a segment identifier SID of the first forwarding node, and obtaining, by the first forwarding node, the sequential position of the first forwarding node on the expected forwarding path comprises:
obtaining, by the first forwarding node, the sequential position of the first forwarding node on the expected forwarding path based on a sequential position of the SID of the first forwarding node in the segment list.

12. The method according to any one of claims 1 to 10, wherein the first data packet comprises a path identifier, and obtaining, by the first forwarding node, the sequential position of the first forwarding node on the expected forwarding path comprises:
obtaining, by the first forwarding node, the sequential position of the first forwarding node on the expected forwarding path based on the path identifier and a correspondence stored by the first forwarding node, wherein the correspondence comprises the path identifier and the sequential position of the first forwarding node on the expected forwarding path.

13. The method according to any one of claims 1 to 10, wherein before obtaining, by the first forwarding node, the first data packet, the method further comprises:
receiving, by the first forwarding node, the sequential position of the first forwarding node on the expected forwarding path from the path planning party.

14. The method according to any one of claims 1 to 13, wherein obtaining, by the first forwarding node, the first data packet comprises: receiving, by the first forwarding node, the first data packet from the second forwarding node, wherein the second forwarding node is an upstream critical node of the first forwarding node on the forwarding path, and the first data packet comprises a proof of transit of the second forwarding node; and
the method further comprises: verifying, by the first forwarding node, the proof of transit of the second forwarding node based on a first vector commitment, the identity information of the second forwarding node, and the sequential position of the second forwarding node on the expected forwarding path, wherein the first vector commitment indicates a correspondence between sequential positions of at least two critical nodes on the expected forwarding path and identities of the at least two critical nodes, and the at least two critical nodes comprise the second forwarding node.

15. The method according to claim 1, wherein the path planning party is a source host that generates payload data of the first data packet; or the path planning party is a 1^{st} forwarding device on the expected forwarding path.

16. A method for verifying a proof of transit, wherein the method comprises:
obtaining, by a verification node, a proof of transit of the first forwarding node, a first vector commitment, identity information of the first forwarding node, and a sequential position of the first forwarding node on an expected forwarding path, wherein the first vector commitment indicates a correspondence between sequential positions of at least two critical nodes on the expected forwarding path and identities of the at least two critical nodes, the at least two critical nodes comprise the first forwarding node, the identity information of the first forwarding node indicates an identity of the first forwarding node, and the proof of transit of the first forwarding node is used to prove that the first forwarding node is at the sequential position of the first forwarding node on the expected forwarding path; and
verifying, by the verification node, the proof of transit of the first forwarding node based on the first vector commitment, the identity information of the first forwarding node, and the sequential position of the first forwarding node.

17. The method according to claim 16, wherein the at least two critical nodes further comprise a second forwarding node, the second forwarding node is an upstream critical node of the first forwarding node on the expected forwarding path, and verifying, by the verification node, the proof of transit of the first forwarding node based on the first vector commitment, the identity information of the first forwarding node, and the sequential position of the first forwarding node on the expected forwarding path comprises:
verifying, by the verification node, the proof of transit of the first forwarding node based on the first vector commitment, the sequential position of the first forwarding node on the expected forwarding path, the identity information of the first forwarding node, a sequential position of the second forwarding node on the expected forwarding path, and identity information of the second forwarding node, wherein the identity information of the second forwarding node indicates an identity of the second forwarding node, and the proof of transit of the first forwarding node is used to prove that both the first forwarding node and the second forwarding node are at the corresponding sequential positions on the expected forwarding path.

18. The method according to claim 16 or 17, wherein obtaining, by the verification node, the proof of transit of the first forwarding node comprises:
receiving, by the verification node, the proof of transit of the first forwarding node from the first forwarding node.

19. A method for verifying a proof of transit, wherein the method further comprises:
obtaining, by a first forwarding node, a first data packet, wherein the first forwarding node is deployed at a boundary of a first autonomous system AS;
obtaining, by the first forwarding node, a proof of transit of a to-be-verified AS based on a sequential position of the to-be-verified AS and identity information of the to-be-verified AS, wherein the identity information of the to-be-verified AS indicates an identity of the to-be-verified AS; and
verifying, by the first forwarding node, the proof of transit of the to-be-verified AS based on a second vector commitment, the sequential position of the to-be-verified AS, and the identity information of the to-be-verified AS, wherein the second vector commitment indicates a correspondence between identity information of each of the at least two ASs and a sequential position of each AS.

20. The method according to claim 19, wherein the to-be-verified AS comprises at least one of the following: a neighboring AS of the first AS, the first AS, or each AS from a source AS to the first AS, the neighboring AS comprises a previous AS of the first AS on an actual forwarding path of the first data packet and/or a next AS of the first AS on a reachable path to a destination IP address of the first data packet, the source AS is an AS that communicates with a source host, and the source host is a device that generates payload data of the first data packet.

21. The method according to claim 19 or 20, wherein the sequential position of the to-be-verified AS comprises an expected sequential position of the to-be-verified AS or an actual sequential position of the to-be-verified AS, the expected sequential position of the to-be-verified AS indicates a sequential relationship between the to-be-verified AS and an AS traversed by an expected forwarding path of the first data packet, and the actual sequential position of the to-be-verified AS indicates a sequential relationship between the to-be-verified AS and an AS traversed by the actual forwarding path of the first data packet.

22. The method according to claim 19, wherein the to-be-verified AS comprises a neighboring AS of the first AS, the first data packet carries an actual sequential position of the first AS, and an actual sequential position of the to-be-verified AS is obtained based on the actual sequential position of the first AS and a sequential relationship between the first AS and the to-be-verified AS.

23. The method according to claim 19, wherein the to-be-verified AS comprises the first AS, and the first data packet carries an actual sequential position of the first AS.

24. The method according to claim 19, wherein the first data packet carries an AS list, the AS list comprises identity information of each AS traversed by an expected forwarding path of the first data packet, and an expected sequential position of the to-be-verified AS is obtained based on a sequential position of the identity information of the to-be-verified AS in the AS list.

25. The method according to any one of claims 19 to 24, wherein the first data packet carries the second vector commitment.

26. The method according to claim 19, wherein the first data packet comprises an internet protocol version 6 IPv6 extension header, and the IPv6 extension header carries the sequential position of the to-be-verified AS, the identity information of the to-be-verified AS, and the second vector commitment; or
the first data packet comprises a network service header NSH, the NSH comprises a metadata field, and the metadata field carries the sequential position of the to-be-verified AS, the identity information of the to-be-verified AS, and the second vector commitment; or
the first data packet comprises a multiprotocol label switching MPLS header, and the MPLS header carries the sequential position of the to-be-verified AS, the identity information of the to-be-verified AS, and the second vector commitment; or
the first data packet comprises a virtual extensible local area network VxLAN header, and the VxLAN header carries the sequential position of the to-be-verified AS, the identity information of the to-be-verified AS, and the second vector commitment; or
the first data packet comprises an internet protocol security IPsec header, and the IPsec header carries the sequential position of the to-be-verified AS, the identity information of the to-be-verified AS, and the second vector commitment.

27. The method according to claim 19, wherein a destination IP address of the first data packet comprises a first IP address, and before obtaining, by the first forwarding node, the first data packet, the method further comprises:
receiving, by the first forwarding node, a routing protocol packet from the to-be-verified AS, wherein the routing protocol packet carries the first IP address and the identity information of the to-be-verified AS; and
storing, by the first forwarding node, a first correspondence, wherein the first correspondence comprises the first IP address and the identity information of the to-be-verified AS; and
after obtaining, by the first forwarding node, the first data packet, the method further comprises:
obtaining, by the first forwarding node, the identity information of the to-be-verified AS based on the first IP address and the first correspondence.

28. The method according to claim 19, wherein the first data packet carries a path identifier, the path identifier identifies the expected forwarding path, and before obtaining, by the first forwarding node, the first data packet, the method further comprises:
receiving, by the first forwarding node, a notification packet from a path planning party, wherein the notification packet carries the path identifier, the sequential position of the to-be-verified AS, and the identity information of the to-be-verified AS; and
storing, by the first forwarding node, a second correspondence, wherein the second correspondence comprises the path identifier, the sequential position of the to-be-verified AS, and the identity information of the to-be-verified AS; and
after obtaining, by the first forwarding node, the first data packet, the method further comprises:
obtaining, by the first forwarding node, the sequential position of the to-be-verified AS and the identity information of the to-be-verified AS based on the path identifier and the second correspondence.

29. An apparatus for obtaining a proof of transit, wherein the apparatus is disposed in a first forwarding node, and the apparatus comprises:
an obtaining unit, configured to: obtain a first data packet, wherein at least two critical nodes corresponding to the first data packet comprise the first forwarding node, and the critical node is a forwarding node that is passed through on an expected forwarding path determined by a path planning party for the first data packet; and obtain a sequential position of the first forwarding node on the expected forwarding path and identity information of the first forwarding node, wherein the sequential position of the first forwarding node on the expected forwarding path is different from a sequential position of the first forwarding node on an actual forwarding path of the first data packet, and the identity information of the first forwarding node indicates an identity of the first forwarding node; and
a processing unit, configured to obtain a proof of transit of the first forwarding node based on the sequential position of the first forwarding node on the expected forwarding path and the identity information of the first forwarding node, wherein the proof of transit of the first forwarding node is used to prove that the first forwarding node forwards the first data packet at the sequential position on the expected forwarding path.

30. The apparatus according to claim 29, wherein the at least two critical nodes further comprise a second forwarding node, the second forwarding node is an upstream critical node of the first forwarding node on the expected forwarding path, and obtaining, by the first forwarding node, the proof of transit of the first forwarding node based on the sequential position of the first forwarding node on the expected forwarding path and the identity information of the first forwarding node comprises:
obtaining, by the first forwarding node, the proof of transit of the first forwarding node based on the sequential position of the first forwarding node on the expected forwarding path, the identity information of the first forwarding node, a sequential position of the second forwarding node on the expected forwarding path, and identity information of the second forwarding node, wherein the identity information of the second forwarding node indicates an identity of the second forwarding node, and the proof of transit of the first forwarding node is used to prove that the first forwarding node and the second forwarding node are respectively at the corresponding sequential positions on the expected forwarding path.

31. The apparatus according to claim 30, wherein the first forwarding node is a last critical node on the expected forwarding path, and the second forwarding node comprises all critical nodes on the expected forwarding path other than the first forwarding node.

32. The apparatus according to claim 31, wherein the processing unit is further configured to obtain the sequential position of the first forwarding node on the actual forwarding path based on the first data packet; and
the apparatus further comprises: a sending unit, configured to send the proof of transit of the first forwarding node and the sequential position of the first forwarding node on the actual forwarding path to a verification node.

33. The apparatus according to claim 32, wherein the verification node comprises a third forwarding node, the third forwarding node is a downstream critical node of the first forwarding node on the expected forwarding path, and the processing unit is further configured to obtain a second data packet based on the first data packet, the proof of transit of the first forwarding node, and the sequential position of the first forwarding node on the actual forwarding path, wherein the second data packet comprises a payload of the first data packet, the proof of transit of the first forwarding node, and the sequential position of the first forwarding node on the actual forwarding path; and
the sending unit is configured to send the second data packet to the third forwarding node.

34. The apparatus according to claim 32, wherein
the processing unit is further configured to generate a notification packet, wherein the notification packet comprises the proof of transit of the first forwarding node and the sequential position of the first forwarding node on the actual forwarding path; and
the sending unit is configured to send the notification packet to the verification node.

35. The apparatus according to any one of claims 31 to 34, wherein the first data packet comprises a segment list segment list, the segment list comprises a segment identifier SID of the first forwarding node, and the processing unit is configured to obtain the sequential position of the first forwarding node on the expected forwarding path based on a sequential position of the SID of the first forwarding node in the segment list.

36. The apparatus according to any one of claims 31 to 35, wherein the first data packet comprises a path identifier, and the processing unit is configured to obtain the sequential position of the first forwarding node on the expected forwarding path based on the path identifier and a correspondence stored by the first forwarding node, wherein the correspondence comprises the path identifier and the sequential position of the first forwarding node on the expected forwarding path.

37. The apparatus according to any one of claims 29 to 36, wherein the obtaining unit is configured to receive the first data packet from the second forwarding node, wherein the second forwarding node is an upstream critical node of the first forwarding node on the forwarding path, and the first data packet comprises a proof of transit of the second forwarding node; and
the processing unit is further configured to verify the proof of transit of the second forwarding node based on a first vector commitment, the identity information of the second forwarding node, and the sequential position of the second forwarding node on the expected forwarding path, wherein the first vector commitment indicates a correspondence between sequential positions of at least two critical nodes on the expected forwarding path and identities of the at least two critical nodes, and the at least two critical nodes comprise the second forwarding node.

38. An apparatus for verifying a proof of transit, wherein the apparatus comprises:
an obtaining unit, configured to obtain a proof of transit of the first forwarding node, a first vector commitment, identity information of the first forwarding node, and a sequential position of the first forwarding node on an expected forwarding path, wherein the first vector commitment indicates a correspondence between sequential positions of at least two critical nodes on the expected forwarding path and identities of the at least two critical nodes, the at least two critical nodes comprise the first forwarding node, the identity information of the first forwarding node indicates an identity of the first forwarding node, and the proof of transit of the first forwarding node is used to prove that the first forwarding node is at the sequential position of the first forwarding node on the expected forwarding path; and
a verification unit, configured to verify the proof of transit of the first forwarding node based on the first vector commitment, the identity information of the first forwarding node, and the sequential position of the first forwarding node.

39. The apparatus according to claim 38, wherein the at least two critical nodes further comprise a second forwarding node, the second forwarding node is an upstream critical node of the first forwarding node on the expected forwarding path, and the verification unit is configured to verify the proof of transit of the first forwarding node based on the first vector commitment, the sequential position of the first forwarding node on the expected forwarding path, the identity information of the first forwarding node, a sequential position of the second forwarding node on the expected forwarding path, and identity information of the second forwarding node, wherein the identity information of the second forwarding node indicates an identity of the second forwarding node, and the proof of transit of the first forwarding node is used to prove that both the first forwarding node and the second forwarding node are at the corresponding sequential positions on the expected forwarding path.

40. The apparatus according to claim 38 or 39, wherein the obtaining unit is configured to receive the proof of transit of the first forwarding node from the first forwarding node.

41. An apparatus for verifying a proof of transit, wherein the apparatus is disposed in a first forwarding node, and the apparatus further comprises:
an obtaining unit, configured to obtain a first data packet, wherein the first forwarding node is deployed at a boundary of a first autonomous system AS; and
a processing unit, configured to obtain a proof of transit of a to-be-verified AS based on a sequential position of the to-be-verified AS and identity information of the to-be-verified AS, wherein the identity information of the to-be-verified AS indicates an identity of the to-be-verified AS, wherein
the processing unit is further configured to verify the proof of transit of the to-be-verified AS based on a second vector commitment, the sequential position of the to-be-verified AS, and the identity information of the to-be-verified AS, wherein the second vector commitment indicates a correspondence between identity information of each of the at least two ASs and a sequential position of each AS.

42. The apparatus according to claim 41, wherein the to-be-verified AS comprises a neighboring AS of the first AS, the first data packet carries an actual sequential position of the first AS, and an actual sequential position of the to-be-verified AS is obtained by the processing unit based on the actual sequential position of the first AS and a sequential relationship between the first AS and the to-be-verified AS.

43. The apparatus according to claim 41, wherein the to-be-verified AS comprises the first AS, and the processing unit is configured to obtain an actual sequential position of the first AS that is carried in the first data packet.

44. The apparatus according to claim 41, wherein the first data packet carries an AS list, the AS list comprises identity information of each AS traversed by an expected forwarding path of the first data packet, and an expected sequential position of the to-be-verified AS is obtained by the processing unit based on a sequential position of the identity information of the to-be-verified AS in the AS list.

45. The apparatus according to claim 41, wherein a destination IP address of the first data packet comprises a first IP address, and the obtaining unit is further configured to receive a routing protocol packet from the to-be-verified AS, wherein the routing protocol packet carries the first IP address and the identity information of the to-be-verified AS;
the processing unit is further configured to store a first correspondence, wherein the first correspondence comprises the first IP address and the identity information of the to-be-verified AS; and
the obtaining unit is further configured to obtain the identity information of the to-be-verified AS based on the first IP address and the first correspondence.

46. The apparatus according to claim 41, wherein the first data packet carries a path identifier, the path identifier identifies the expected forwarding path, and the obtaining unit is further configured to receive a notification packet from a path planning party, wherein the notification packet carries the path identifier, the sequential position of the to-be-verified AS, and the identity information of the to-be-verified AS;
the processing unit is further configured to store a second correspondence, wherein the second correspondence comprises the path identifier, the sequential position of the to-be-verified AS, and the identity information of the to-be-verified AS; and
the obtaining unit is further configured to obtain the sequential position of the to-be-verified AS and the identity information of the to-be-verified AS based on the path identifier and the second correspondence.

47. A forwarding device, wherein the forwarding device comprises a processor, the processor is coupled to a memory, the memory stores at least one computer program instruction, and the at least one computer program instruction is loaded and executed by the processor, to enable the forwarding device to implement the method according to any one of claims 1 to 28.

48. A computer-readable storage medium, wherein the storage medium stores at least one instruction, and when the instruction is run on a computer, the computer is enabled to perform the method according to any one of claims 1 to 28.

49. A computer program product, wherein the computer program product comprises one or more computer program instructions, and when the computer program instructions are loaded and run by a computer, the computer is enabled to perform the method according to any one of claims 1 to 28.
